# EUROPEAN PATENT SPECIFICATION

(11) **EP 4 207 894 B1**
(45) Date of publication and mention of the grant of the patent: **25.11.2026**
(21) Application number: 21878932.9
(22) Date of filing: 06.04.2021
(51) Int. Cl.: H04W 72/40, H04W 72/02, H04W 4/40

(54) **SIDELINK TRANSMISSION METHOD AND COMMUNICATION APPARATUS**
VERFAHREN ZUR SIDELINK-ÜBERTRAGUNG UND KOMMUNIKATIONSVORRICHTUNG
PROCÉDÉ DE TRANSMISSION DE LIAISON LATÉRALE ET APPAREIL DE COMMUNICATION

(30) Priority: 16.10.2020 WO PCT/CN2020/121615
(43) Date of publication of application: 05.07.2023
(73) Proprietor: Huawei Technologies Co., Ltd., Shenzhen, Guangdong 518129 (CN)
(72) Inventor: ZHANG, Tianhong, Shenzhen, Guangdong 518129 (CN); LI, Chao, Shenzhen, Guangdong 518129 (CN); YANG, Fan, Shenzhen, Guangdong 518129 (CN); MI, Xiang, Shenzhen, Guangdong 518129 (CN)
(74) Representative: Isarpatent
(86) International application number: PCT/CN2021/085747
(87) International publication number: WO 2022/077877

(56) References cited:
- WO-A1-2020/102249
- WO-A1-2020/146893
- CN-A- 105 722 056
- CN-A- 109 792 590
- CN-A- 110 999 335
- CN-A- 111 432 371
- US-A1- 2020 007 297
- US-A1- 2020 153 554
- NTT DOCOMO ET AL: "NR Sidelink Resource Allocation Mechanism Mode 2", vol. RAN WG1, no. Xi'an, China; 20190408 - 20190412, 3 April 2019 (2019-04-03), XP051707493, Retrieved from the Internet <URL:http://www.3gpp.org/ftp/tsg%5Fran/WG1%5FRL1/TSGR1%5F96b/Docs/R1%2D1905423%2Ezip> [retrieved on 20190403]
- QUALCOMM INCORPORATED: "Sidelink Resource Allocation Mechanism for NR V2X", vol. RAN WG1, no. Prague, Czech Republic; 20190826 - 20190830, 17 August 2019 (2019-08-17), pages 1 - 17, XP051765859, Retrieved from the Internet <URL:http://www.3gpp.org/ftp/tsg_ran/WG1_RL1/TSGR1_98/Docs/R1-1909254.zip> [retrieved on 20190817]
- OPPO: "Discussions on resource reservation, sensing and selection in Mode 2", vol. RAN WG1, no. Prague, Czech Republic; 20190826 - 20190830, 16 August 2019 (2019-08-16), XP051764974, Retrieved from the Internet <URL:http://www.3gpp.org/ftp/tsg_ran/WG1_RL1/TSGR1_98/Docs/R1-1908366.zip> [retrieved on 20190816]

## Description

This disclosure relates to the communication field.

### TECHNICAL FIELD

The invention more specifically relates to a sidelink transmission method and a communication system.

### BACKGROUND

Currently, in some communication systems, for example, a fifth generation mobile communication system (5th generation wireless system, 5G), signaling and data may be transmitted between terminal devices on a sidelink (sidelink). This manner of performing transmission on the sidelink may be referred to as sidelink transmission. For example, a resource used for sidelink transmission may be randomly selected and determined by a terminal device from a resource pool preconfigured by a network device.

However, when the terminal device randomly selects a resource without any prior information, resources randomly selected by a plurality of terminal devices may overlap. As a result, a terminal device serving as a receive end cannot successfully decode signaling and/or data from a transmit end, and consequently transmission reliability of the entire communication system is reduced.

WO 2020/102249 A1 discloses methods, apparatuses, and computer-readable mediums for wireless communication by a user equipment (UE) includes transmitting a packet on a first resource, determining one or more repetition resources on which to send one or more redundancy versions of the packet, wherein the one or more repetition resources are at a time subsequent to the first resource, transmitting repetition resource information identifying the one or more repetition resources to one or more neighboring UEs, and transmitting the one or more redundancy versions of the packet on respective ones of the one or more repetition resources. WO 2020/146893 A1, relates to sidelink physical-layer procedures for collision avoidance, HARQ feedback and CSI acquisition, particularly in NR V2X broadcast, groupcast or unicast environments. It proposes assigning selection priorities to sidelink transmission resources based on previously used slots, retransmission resources, feedback signalling and QoS considerations, in order to reduce collisions and improve reliability.

### SUMMARY

The invention is defined by the appended claims. Aspects or embodiments of the disclosure which do not fall under the scope of the claims are not included in the scope of the invention. The object of the present application is to provide a sidelink transmission method and a communication system which ensure that a UE selects the most optimal resources to mitigate resource collision and improve transmission reliability of the communication system. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such.

According to a first aspect, wherein the first aspect and its optional implementations below are not claimed, this application provides a sidelink transmission method. The method may be performed by a terminal device (for example, a first terminal device in the following), or may be performed by a component (for example, a chip or a chip system) configured in a terminal device (for example, a first terminal device). This is not limited in embodiments of this application. For ease of understanding, the following describes the method by using a first terminal device as an execution body.

For example, the method includes: A first terminal device receives a feedback message from a second terminal device, where the feedback message indicates whether data transmitted on a first resource is successfully decoded; the first terminal device excludes a second resource set from a first resource set when receiving a negative acknowledgment feedback message, to obtain a third resource set, where the first resource set includes a resource that can be used by the first terminal device to perform sidelink transmission, and the second resource set includes a resource determined based on the first resource and a preset period; and the first terminal device determines, based on the third resource set, a resource used for sidelink transmission.

In another design, for example, the method includes: A first terminal device receives a feedback message from a second terminal device, where the feedback message indicates whether data transmitted on a first resource is successfully decoded; the first terminal device excludes a second resource set from a first resource set when receiving no acknowledgment feedback message, to obtain a third resource set, where the first resource set includes a resource that can be used by the first terminal device to perform sidelink transmission, and the second resource set includes a resource determined based on the first resource and a preset period; and the first terminal device determines, based on the third resource set, a resource used for sidelink transmission.

The first terminal device may receive the feedback message on a feedback resource associated with data in each transmission. The first terminal device may determine, based on the feedback message received from the second terminal device, whether data is successfully decoded. Herein, successful decoding may include: successful receiving and successful decoding. Unsuccessfully decoding may include unsuccessful receiving, or successful receiving but unsuccessful decoding. If data is not successfully received by the second terminal device, the first terminal device receives no feedback message. The first terminal device receiving no feedback message may be considered that the first terminal device receives the negative acknowledgment feedback message. Alternatively, the first terminal device receiving no feedback message may be considered as that the first terminal device obtains the negative acknowledgment feedback message.

In a groupcast or broadcast scenario, the first terminal device receives, from a plurality of second terminal devices, a plurality of feedback messages for data transmitted on the first resource. The plurality of feedback messages indicate whether the data transmitted on the first resource is successfully decoded by the plurality of second terminal devices. If the plurality of feedback messages are all acknowledgment feedback messages, it may be considered that the first terminal device receives no negative acknowledgment feedback message. If there is a negative acknowledgment feedback message in the plurality of feedback messages, or there is one or more feedback resources on which no feedback message is received, it may be considered that the first terminal device receives the negative acknowledgment feedback message. For example, if the plurality of feedback messages received by the first terminal device are all negative acknowledgment feedback messages, or the first terminal device receives no feedback message on the plurality of feedback resources, it may be considered that the first terminal device receives the negative acknowledgment feedback message. For another example, if there are an acknowledgment feedback message and a negative acknowledgment feedback message in the plurality of feedback messages, it may be considered that the first terminal device receives the negative acknowledgment feedback message. For another example, if there is an acknowledgment feedback message in the plurality of feedback messages, and there is still one or more feedback resources on which no feedback message is received, it may be considered that the first terminal device receives the negative acknowledgment feedback message.

It should be understood that receiving described above may be understood as obtaining.

Based on the foregoing solution, when receiving the negative acknowledgment feedback message, the first terminal device may exclude a resource on which collision may occur from the first resource set that can be originally used for sidelink transmission, and select, from the third resource set obtained after resource exclusion, a resource used for sidelink transmission. In this way, the first terminal device performs sidelink transmission on a reliable resource, to mitigate possible resource collision between a plurality of terminal devices in a same resource pool. Therefore, mutual interference caused by resource collision of the plurality of terminal devices can be reduced. This facilitates successful data receiving and decoding, and further helps improve transmission reliability of a communication system and system performance.

It should be understood that the first resource does not belong to the first resource set, or the first resource set does not include the first resource. In a possible design, the first resource is located before the first resource set in time domain.

With reference to the first aspect, in some possible implementations, the preset period includes: all periods in a preconfigured period set; a part of periods in the preconfigured period set; a service period of the first terminal device; or a period other than the service period of the first terminal device in the preconfigured period set.

The terminal device may usually transmit data on a periodic resource. When the first terminal device determines the second resource set based on the first resource and all periods in the preconfigured period set, almost all resources that may collide with another terminal device in the future can be excluded from the first resource set. Therefore, resource collision can be avoided to a large extent.

In addition, when the first terminal device determines the second resource set based on the first resource and a part of periods in the preconfigured period set, a resource on which collision may occur may be excluded to some extent, and a possibility that resources used by the first terminal device for sidelink transmission are insufficient due to excessive exclusion of resources in the first resource set is reduced.

With reference to the first aspect, in some implementations of the first aspect, the second resource set further includes a reserved resource determined based on control information. The control information is information transmitted on the first resource, and the control information includes an indication of the reserved resource.

In this embodiment of this application, the first resource may include a physical sidelink control channel (physical sidelink control channel, PSCCH), the PSCCH may carry sidelink control information (sidelink control information, SCI), and the SCI includes an indication of the reserved resource. The reserved resource is also deleted from the first resource set as a resource in the second resource set, to avoid resource collision to a greater extent.

With reference to the first aspect, in some implementations of the first aspect, that the first terminal device excludes a second resource set from a first resource set when receiving a negative acknowledgment feedback message includes: The first terminal device excludes the second resource set from the first resource set based on the received negative acknowledgment feedback message when a first preset condition is met. The first preset condition includes: a priority value (or referred to as a priority level value) (priority value) of a service priority of the first terminal device is greater than a preset first priority threshold; and/or a channel busy ratio (channel busy ratio, CBR) is higher than a preset first CBR threshold. In this embodiment of this application, the first terminal device may exclude the second resource set from the first resource set based on the received negative acknowledgment feedback message when at least one of the following two conditions is met: A service priority of the first terminal device is low, and/or a channel is congested.

The service priority may also be referred to as a layer 1 (layer 1, L1) priority or a physical layer priority. The service priority may be, for example, a priority carried in the SCI, a priority of a physical sidelink shared channel (physical sidelink share channel, PSSCH) carried in the SCI, a priority of sending a PSSCH, a priority of a logical channel, or a highest-level priority of a logical channel.

It should be understood that the service priority may alternatively be carried in other signaling, for example, a medium access control (medium access control) control element (control element, CE) or a radio resource control (radio resource control, RRC) message. This is not limited in embodiments of this application.

The service priority may be represented by a priority value. When a priority value corresponding to the service priority of the first terminal device is greater than the preset first priority threshold, it may be considered that a service priority level of the first terminal device is low.

The service priority may alternatively be represented by a priority level (priority level), and the first priority threshold corresponding to the service priority may alternatively be a priority level threshold. When a priority level corresponding to the service priority of the first terminal device is lower than a preset priority level threshold, it may be considered that the service priority level of the first terminal device is low. The CBR is a parameter used for representing a channel congestion degree. When the CBR is higher than the first CBR threshold, it may be considered that a channel is congested. It should be understood that the CBR as a parameter used for representing a channel congestion degree is merely an example, and should not constitute any limitation on this application. This application does not exclude a possibility of defining another parameter that can be used for representing a channel congestion degree in an existing or future protocol, and does not exclude a possibility of using another parameter that can be used for representing channel quality to replace the CBR. In this case, the CBR in the first preset condition may alternatively be replaced with another parameter that can be used for representing a channel congestion degree or another parameter that can be used for representing channel quality, and a corresponding second CBR threshold may be accordingly adjusted.

To prevent a device with a low service priority from preempting a resource of a device with a high service priority, the sidelink transmission method provided in this application may be used to avoid resource collision as much as possible. In addition, when a channel is congested or a channel status is poor, the sidelink transmission method provided in this application may be used to avoid resource collision as much as possible. In this way, each terminal device can perform sidelink transmission on a more reliable resource.

When the first preset condition is that the service priority of the first terminal device is lower than the preset first priority threshold and the CBR is higher than the preset first CBR threshold, in a possible design, the first terminal device may activate the first priority threshold when the CBR is higher than the first CBR threshold, and exclude the second resource set from the first resource set based on the received negative acknowledgment feedback message when the priority threshold of the first terminal device is lower than the low priority threshold.

With reference to the first aspect, in some implementations of the first aspect, that the first terminal device excludes a second resource set from a first resource set when receiving a negative acknowledgment feedback message includes: The first terminal device excludes the second resource set from the first resource set based on the received negative acknowledgment feedback message when a first preset condition is met. The first preset condition includes: a priority value (or referred to as a priority level value) (priority value) of a service priority of the first terminal device is less than or equal to a preset first priority threshold; and/or a CBR is higher than a preset first CBR threshold.

In this embodiment of this application, the first terminal device may exclude the second resource set from the first resource set based on the received negative acknowledgment feedback message when at least one of the following two conditions is met: A service priority of the first terminal device is high, and/or a channel is congested.

A resource in the second resource set is a resource that has high interference, or a resource that may have high interference. That is, this exclusion method may exclude a part of resources that can be used. For a service with a high priority, an appropriate amount of excessive exclusion of potentially risky resources can be allowed to ensure communication reliability. However, for a service with a low priority, this excessive exclusion may not be applicable. Therefore, the priority threshold can ensure communication reliability corresponding to services with different priorities in the resource pool.

Optionally, the first priority threshold is configured by using signaling.

For example, the first priority threshold may be preconfigured by a network device for the first terminal device by using signaling.

Optionally, the first priority threshold is the same as a preconfigured preemption threshold.

To be specific, the first terminal device may reuse the preemption threshold as the first priority threshold. In this way, signaling overheads caused by configuration can be reduced.

It should be understood that the foregoing example of the first preset condition is merely an example, and should not constitute any limitation on this application. Based on a same concept, a person skilled in the art may also make equivalent variations or replacements based on the preset condition listed above, to achieve a same technical effect. These variations or replacements shall fall within the protection scope of this application.

With reference to the first aspect, in some implementations of the first aspect, the method further includes: The first terminal device restores a part or all of resources in the second resource set when a second preset condition is met. The restored resource may be reused by the first terminal device to perform sidelink transmission.

As time goes by, a quantity of excluded resources may increase. A quantity of remaining available resources in a packet delay budget (packet delay budget, PDB) decreases. In addition, a terminal device configured with a same resource pool as the first terminal device may perform resource reselection, or due to another reason, the terminal device no longer uses an original resource to perform sidelink transmission. In this case, the first terminal device may restore a part or all of the resources that are in the second resource set and that are previously excluded, for subsequent sidelink transmission.

For example, the first terminal device may restore a part or all of resources in the second resource set when the following second preset condition is met.

Optionally, the second preset condition includes: Duration of the first terminal device after a time unit in which the first resource is located reaches a first preset threshold; a quantity of remaining resources in resources that are in the third resource set and that are in a preset time period is less than a second preset threshold; a remaining packet delay budget (that is, a remaining PDB) reaches a third preset threshold; or a CBR is less than or equal to a fourth preset threshold.

In this embodiment, the resources in the third resource set and in the preset time period may also be referred to as a candidate resource set. Therefore, the foregoing condition that a quantity of remaining resources in the resources that are in the third resource set and that are in the first preset time period is less than a second preset threshold may also be expressed as that the quantity of remaining resources in the candidate resource set is less than the second preset threshold.

It should be understood that the foregoing example of the second preset condition is merely an example, and should not constitute any limitation on this application. Based on a same concept, a person skilled in the art may also make equivalent variations or replacements based on the preset condition listed above, to achieve a same technical effect. These variations or replacements shall fall within the protection scope of this application.

With reference to the first aspect, in some implementations of the first aspect, the negative acknowledgment feedback message is received in a predefined time window. The time window includes a time interval from a first time unit to a second time unit. The first time unit is a time unit n-kxY₁. The second time unit is a time unit n or a time unit n-Y₂. The time unit n is a time unit in which the first terminal device triggers resource selection. 0<k≤C, C, Y₁, and Y₂ are preconfigured values, C is a positive integer, and n, Y₁, and Y₂ are all positive numbers.

The second resource set is dynamically updated based on the predefined time window. In this way, resource exclusion is time-effective, and resource collision can be avoided effectively.

With reference to the first aspect, in some implementations of the first aspect, the method further includes: The first terminal device skips excluding a resource from the first resource set based on the first resource corresponding to an acknowledgment feedback message and the preset period when receiving the acknowledgment feedback message.

If the first terminal device receives the acknowledgment feedback message, it may indicate that the data transmitted on the first resource is successfully decoded. In other words, a probability that collision occurs on the first resource is extremely low, and a probability that collision occurs on a future periodic resource is also low. Therefore, the first terminal device may not perform an operation of excluding a resource from the first resource set, to avoid resource insufficiency caused by incorrect exclusion of resources for the first terminal device to perform sidelink transmission.

With reference to the first aspect, in some implementations of the first aspect, that the first terminal device excludes a second resource set from a first resource set when receiving a negative acknowledgment feedback message includes: The first terminal device excludes the second resource set from the first resource set when the first terminal device receives the negative acknowledgment feedback message, and a distance between the second terminal device and the first terminal device is less than or equal to a communication distance; and the method further includes: the first terminal device skips excluding a resource from the first resource set based on the first resource corresponding to the negative acknowledgment feedback message and the preset period when the first terminal device receives the negative acknowledgment feedback message, and the distance between the second terminal device and the first terminal device is greater than the communication distance.

When the distance between the terminal devices is large, receive power of the received feedback message is low, and it may be considered that mutual interference is small and may be ignored. Therefore, the first terminal device basically receives the negative acknowledgment feedback message, but the negative acknowledgment feedback message is a feedback message from the second terminal device and outside the communication distance. Therefore, the operation of excluding a resource from the first resource set may not be performed.

Correspondingly, when the negative acknowledgment feedback message received by the first terminal device is a feedback message from the second terminal device and within the communication distance, the second resource set may be excluded from the first resource set, to avoid resource collision.

By way of example and not limitation, the communication distance may be a minimum communication range (minimum communication range, MCR). The MCR may be a minimum communication distance for ensuring communication quality.

With reference to the first aspect, in some implementations of the first aspect, that the first terminal device excludes a second resource set from a first resource set when receiving a negative acknowledgment feedback message includes: The first terminal device excludes the second resource set from the first resource set when receiving Q negative acknowledgment feedback messages. The Q negative acknowledgment feedback messages indicate that data that is transmitted for Q times and that is not successfully decoded exists in the data transmitted on the first resource, and Q is a natural number.

In another design, the first terminal device excludes the second resource set from the first resource set when receiving no acknowledgment feedback message on Q feedback resources. Receiving no acknowledgment feedback message on the Q feedback resources includes: receiving a negative acknowledgment feedback message and/or receiving no feedback message on the Q feedback resources.

Specifically, if no acknowledgment feedback message is received on a feedback resource associated with one or more pieces of data transmitted by the first terminal device, it indicates that the one or more pieces of data are not successfully decoded.

In other words, both receiving the negative acknowledgment feedback message and receiving no acknowledgment feedback message may be used by the first terminal device to determine that the data is not successfully decoded.

Therefore, whether to exclude the second resource set from the first resource set is determined based on a quantity of data that is not successfully decoded, and the first terminal device may receive a feedback message on a feedback resource associated with a plurality of pieces of data transmitted on the first resource, and determine, based on a quantity of negative acknowledgment feedback messages and/or a quantity of feedback resources on which no feedback message is received, whether to exclude the second resource set from the first resource set. This is simple and can avoid misdetermination to some extent. In addition, because a resource on which collision may occur is excluded from the first resource set that can be originally used for sidelink transmission, the first terminal device can subsequently perform sidelink transmission on a reliable resource, to mitigate possible resource collision between a plurality of terminal devices in a same resource pool. Especially, when a random resource selection manner is used by the terminal device, resource collision is more severe. Therefore, mutual interference caused by resource collision of the plurality of terminal devices can be reduced. This facilitates successful data receiving and decoding, and further helps improve transmission reliability of a communication system and system performance.

With reference to the first aspect, in some implementations of the first aspect, that the first terminal device excludes a second resource set from a first resource set when receiving a negative acknowledgment feedback message includes: The first terminal device excludes the second resource set from the first resource set when receiving Q negative acknowledgment feedback messages and feedback resources in which the Q negative acknowledgment feedback messages are located belong to V feedback resources within a first time range. The Q negative acknowledgment feedback messages indicate that data that is transmitted for Q times and that is not successfully decoded exists in the data transmitted on the first resource, V≥Q, and V and Q are natural numbers.

In another design, the first terminal device excludes the second resource set from the first resource set when receiving no acknowledgment feedback message on Q feedback resources in the V feedback resources within the first time range. Receiving no acknowledgment feedback message on the Q feedback resources includes: receiving a negative acknowledgment feedback message and/or receiving no feedback message on the Q feedback resources.

Specifically, if no acknowledgment feedback message is received on a feedback resource associated with one or more pieces of data transmitted by the first terminal device, it indicates that the one or more pieces of data are not successfully decoded.

In other words, both receiving the negative acknowledgment feedback message and receiving no acknowledgment feedback message may be used by the first terminal device to determine that the data is not successfully decoded.

V may be a value configured by a network device, a value defined in a protocol, or a value agreed upon by the first terminal device and the network device.

Therefore, whether to exclude the second resource set from the first resource set is determined based on a quantity of negative acknowledgment feedback messages received on the V feedback resources and/or a quantity of feedback resources on which no feedback message is received, and a constraint on the V feedback resources is introduced for the negative acknowledgment feedback message and/or the feedback resources on which no feedback message is received. However, the V feedback resources may be constrained by a time range. Compared with the foregoing implementation, whether there is resource collision may be determined in a more centralized time period. Therefore, determining may be performed more properly, and misdetermination is avoided. In addition, because a resource on which collision may occur is excluded from the first resource set that can be originally used for sidelink transmission, the first terminal device can subsequently perform sidelink transmission on a reliable resource, to mitigate possible resource collision between a plurality of terminal devices in a same resource pool. Therefore, mutual interference caused by resource collision of the plurality of terminal devices can be reduced. This facilitates successful data receiving and decoding, and further helps improve transmission reliability of a communication system and system performance.

In a possible design, Q in the foregoing two implementations is a value configured by a network device, a value defined in a protocol, or a value agreed upon by the first terminal device and the network device.

In this design, Q may be preconfigured in the first terminal device, and the first terminal device does not need to determine Q by itself. This can reduce processing complexity of the first terminal device.

In another possible design, Q in the foregoing two implementations is determined based on Qₘᵢₙ, Q≥Qₘᵢₙ≥1, and Qₘᵢₙ is a value configured by a network device, a value defined in a protocol, or a value agreed upon by the first terminal device and the network device. In this case, Q may be determined by the first terminal device based on Qₘᵢₙ.

Because different terminal devices may have different priorities, or may have different QoS requirements, a same value of Q configured by the network device for all terminals cannot meet diverse service requirements. Therefore, the network device may configure a minimum value Qₘᵢₙ of a quantity of data that is not successfully decoded, and the first terminal device may determine, by itself, Q whose value is greater than or equal to Qₘᵢₙ.

With reference to the first aspect, in some implementations of the first aspect, that the first terminal device excludes a second resource set from a first resource set when receiving a negative acknowledgment feedback message includes: The first terminal device excludes the second resource set from the first resource set when the first terminal device receives a plurality of negative acknowledgment feedback messages, and duration occupied by time domain locations corresponding to the plurality of negative acknowledgment feedback messages is greater than or equal to a first threshold. The plurality of negative acknowledgment feedback messages indicate data that is transmitted for a plurality of times and that is not successfully decoded exists in the data transmitted on the first resource.

In another design, the first terminal device excludes the second resource set from the first resource set when the first terminal device receives no acknowledgment feedback message on a plurality of feedback resources, and duration occupied by the plurality of feedback resources is greater than or equal to a first threshold. Receiving no acknowledgment feedback message includes: receiving a negative acknowledgment feedback message and/or receiving no feedback message.

Specifically, if no acknowledgment feedback message is received on a feedback resource associated with one or more pieces of data transmitted by the first terminal device, it indicates that the one or more pieces of data are not successfully decoded.

In other words, both receiving the negative acknowledgment feedback message and receiving no acknowledgment feedback message may be used by the first terminal device to determine that the data is not successfully decoded.

Whether to exclude the second resource set from the first resource set is determined based on duration occupied by a feedback resource associated with the data that is not successfully decoded, and does not need to be constrained by a quantity of data that is not successfully decoded. Different terminal devices may be configured with data transmission in different service periods, and are not constrained by a quantity of data that is not successfully decoded. Therefore, different values of Q do not need to be configured for terminal devices in different service periods, and implementation is convenient. In addition, because a resource on which collision may occur is excluded from the first resource set that can be originally used for sidelink transmission, the first terminal device can subsequently perform sidelink transmission on a reliable resource, to mitigate possible resource collision between a plurality of terminal devices in a same resource pool. Therefore, mutual interference caused by resource collision of the plurality of terminal devices can be reduced. This facilitates successful data receiving and decoding, and further helps improve transmission reliability of a communication system and system performance.

In the foregoing implementation, the first threshold is a value configured by a network device, a value defined in a protocol, or a value agreed upon by the first terminal device and the network device. Alternatively, a minimum value of the first threshold is a value configured by a network device, a value defined in a protocol, or a value agreed upon by the first terminal device and the network device. The first threshold is a value determined by the first terminal device.

With reference to the first aspect, in some implementations of the first aspect, that the first terminal device excludes a second resource set from a first resource set when receiving a negative acknowledgment feedback message includes: The first terminal device excludes the second resource set from the first resource set when the first terminal device receives a plurality of negative acknowledgment feedback messages, and duration occupied by time domain locations in which a plurality of pieces of data associated with the plurality of negative acknowledgment feedback messages are located is greater than or equal to a second threshold. The plurality of negative acknowledgment feedback messages indicate data that is transmitted for a plurality of times and that is not successfully decoded exists in the data transmitted on the first resource.

In another design, the first terminal device excludes the second resource set from the first resource set when the first terminal device receives no acknowledgment feedback message on a plurality of feedback resources, and duration occupied by time domain locations in which a plurality of pieces of data associated with the plurality of feedback resources are located is greater than or equal to a second threshold. Receiving no acknowledgment feedback message includes: receiving a negative acknowledgment feedback message and/or receiving no feedback message.

Specifically, if no acknowledgment feedback message is received on a feedback resource associated with one or more pieces of data transmitted by the first terminal device, it indicates that the one or more pieces of data are not successfully decoded.

In other words, both receiving the negative acknowledgment feedback message and receiving no acknowledgment feedback message may be used by the first terminal device to determine that the data is not successfully decoded.

Whether to exclude the second resource set from the first resource set is determined based on duration occupied by a time domain location in which data that is not successfully decoded is located. Determining may be performed based on duration occupied by a plurality of times of data transmission, and does not need to be constrained by a quantity of data that is not successfully decoded. Different terminal devices may be configured with data transmission in different service periods, and are not constrained by a quantity of data that is not successfully decoded. Therefore, different values of Q do not need to be configured for terminal devices in different service periods, and implementation is convenient. In addition, because a resource on which collision may occur is excluded from the first resource set that can be originally used for sidelink transmission, the first terminal device can subsequently perform sidelink transmission on a reliable resource, to mitigate possible resource collision between a plurality of terminal devices in a same resource pool. Therefore, mutual interference caused by resource collision of the plurality of terminal devices can be reduced. This facilitates successful data receiving and decoding, and further helps improve transmission reliability of a communication system and system performance.

In the foregoing implementation, the second threshold is a value configured by a network device, a value defined in a protocol, or a value agreed upon by the first terminal device and the network device. Alternatively, a minimum value of the second threshold is a value configured by a network device, a value defined in a protocol, or a value agreed upon by the first terminal device and the network device. The second threshold is a value determined by the first terminal device.

With reference to the first aspect, in some implementations of the first aspect, that the first terminal device excludes a second resource set from a first resource set when obtaining a negative acknowledgment feedback message includes: The first terminal device excludes the second resource set from the first resource set when a ratio of a quantity of negative acknowledgment feedback messages received within a first time range to V is greater than or equal to a third threshold α. The negative acknowledgment feedback message indicates data that is not successfully decoded in the data transmitted on the first resource. 0≤α≤1, and V is a positive integer. V is a value configured by a network device, a value defined in a protocol, or a value agreed upon by the first terminal device and the network device.

In another design, the first terminal device excludes the second resource set from the first resource set when a ratio of a quantity of feedback resources on which no acknowledgment feedback message is received within a first time range to V is greater than or equal to a third threshold α. Receiving no acknowledgment feedback message includes: receiving a negative acknowledgment feedback message and/or receiving no feedback message.

Specifically, if no acknowledgment feedback message is received on a feedback resource associated with one or more pieces of data transmitted by the first terminal device, it indicates that the one or more pieces of data are not successfully decoded.

In other words, both receiving the negative acknowledgment feedback message and receiving no acknowledgment feedback message may be used by the first terminal device to determine that the data is not successfully decoded.

Therefore, whether to exclude the second resource set from the first resource set is determined based on a ratio of a quantity of data (it is assumed that the quantity of data is Q", V≥Q"≥1, and Q" is an integer) that is not successfully decoded within the first time range to V, and does not need to be constrained by the quantity of data that is not successfully decoded. Because different terminal devices may be configured with data transmission in different service periods, and are not constrained by a quantity of data that is not successfully decoded. Therefore, different values of Q do not need to be configured for terminal devices in different service periods, and implementation is convenient. In addition, a proportion of data decoding failures can be clearly shown based on a ratio of Q" to V, to infer a possibility of resource collision. In this way, the first terminal device can properly perform determining, and avoid misdetermination. In addition, because a resource on which collision may occur is excluded from the first resource set that can be originally used for sidelink transmission, the first terminal device can subsequently perform sidelink transmission on a reliable resource, to mitigate possible resource collision between a plurality of terminal devices in a same resource pool. Therefore, mutual interference caused by resource collision of the plurality of terminal devices can be reduced. This facilitates successful data receiving and decoding, and further helps improve transmission reliability of a communication system and system performance.

In the foregoing implementation, the third threshold α is a value configured by a network device, a value defined in a protocol, or a value agreed upon by the first terminal device and the network device. Alternatively, the third threshold α is determined based on αₘᵢₙ, α≥αₘᵢₙ, and αₘᵢₙ is a value configured by a network device, a value defined in a protocol, or a value agreed upon by the first terminal device and the network device.

With reference to the first aspect, in some implementations of the first aspect, in the data transmitted on the first resource, a time domain location used for carrying data that is not successfully decoded belongs to a first time range, or a feedback resource associated with the data that is not successfully decoded belongs to the first time range.

In the foregoing plurality of possible implementations, a start location of the first time range may be determined based on at least one of the following: a first feedback resource corresponding to the data transmitted on the first resource; a feedback resource corresponding to a first piece of data that is not successfully decoded in the data transmitted on the first resource; a first time unit in the first resource; or a time unit in which a resource that is in the first resource and that is used for transmitting a first piece of data that is not successfully decoded is located.

The feedback resource corresponding to the first piece of data that is not successfully decoded in the data transmitted on the first resource, that is, a first feedback resource on which no acknowledgment feedback message is received, may be, for example, a first feedback resource on which a negative acknowledgment feedback message is received, or a first feedback resource on which no feedback message is received.

In the foregoing plurality of possible implementations, an end location of the first time range may be determined based on at least one of the following: time at which resource selection is triggered; time at which resource reselection is triggered; time at which re-evaluation is triggered; time at which preemption evaluation is triggered; or time at which a feedback message is received.

It is convenient to observe transmitted data within a specified time range by constraining the first time range, to determine whether decoding is successful. This facilitates determining whether a periodic reserved resource needs to be excluded.

Optionally, in the data transmitted on the first resource, there is data that is transmitted for a plurality of times and that is not successfully decoded, and a time interval between time units in which two adjacent transmissions in the plurality of transmissions are located is an integer multiple of the preset period.

Optionally, a time interval between feedback resources associated with two adjacent transmissions in the plurality of transmissions is an integer multiple of the preset period.

In other words, the data transmitted for the plurality of times is all initially transmitted data, or is all data retransmitted for an r^{th} time.

With reference to the first aspect, in some implementations of the first aspect, the method further includes: The first terminal device generates a random number; and that the first terminal device excludes the second resource set from the first resource set includes: the first terminal device excludes the second resource set from the first resource set when the random number is less than or equal to a retention probability g, where the retention probability g meets 0≤g≤1.

Whether a resource is excluded may be further determined by introducing the retention probability, to avoid misdetermination.

According to a second aspect, wherein the second aspect is according to the invention, the invention provides another sidelink transmission method. The method may be performed by a terminal device (for example, a first terminal device in the following), or may be performed by a component (for example, a chip or a chip system) configured in a terminal device (for example, a first terminal device). This is not limited in embodiments of this application. For ease of understanding, the following describes the method by using a first terminal device as an execution body.

According to the claimed invention, the method includes: A first terminal device receives a feedback message from a second terminal device, where the feedback message indicates whether data sent by the first terminal device is successfully decoded; the first terminal device determines at least two resource subsets of a first resource set in a first preset time period, where each of the at least two resource subsets corresponds to a selection probability, a resource subset with a high selection probability is preferentially used by the first terminal device to perform sidelink transmission when compared with a resource subset with a low selection probability, and the first resource set includes a resource that can be used by the first terminal device to perform sidelink transmission; and the first terminal device determines, based on selection probabilities of the at least two resource subsets, a resource used for sidelink transmission from resources in the first resource set in the first preset time period.

Based on the foregoing solution, the first terminal device may divide, based on the received feedback message, the resources in the first resource set in the first preset time period, to obtain the at least two resource subsets. Different resource subsets may correspond to different selection probabilities or selection priorities. The first terminal device may determine, based on a selection probability or a selection priority, a resource used for sidelink transmission. Different terminal devices may select resources with different selection probabilities or selection priorities to perform sidelink transmission, for example, select resources based on parameters such as a service priority of the terminal device and a parameter (such as a CBR) used for representing channel quality or a channel congestion degree. Therefore, possible resource collision can be mitigated to some extent, and mutual interference caused by resource collision of terminal devices can be reduced. This facilitates successful data receiving and decoding, and further helps improve transmission reliability of a communication system and system performance.

According to the invention, the at least two resource subsets include at least two of a first resource subset, a second resource subset, a third resource subset, and a fourth resource subset.

According to the invention, the first resource subset includes a resource that is in the preset time period and that is determined from the first resource set based on a service period of the first terminal device when the first terminal device receives an acknowledgment feedback message in a predefined time window. The acknowledgment feedback message indicates that data sent by the first terminal device is successfully decoded. In other words, the first resource subset includes a resource determined based on a service period of the first terminal device and a transmission resource of data corresponding to an acknowledgment feedback message when the first terminal device receives the acknowledgment feedback message.

According to the claimed invention, the fourth resource subset includes a resource that is in the preset time period and that is determined from the first resource set based on a preset period when the first terminal device receives a negative acknowledgment feedback message in the time window. The negative acknowledgment feedback message indicates that data sent by the first terminal device is not successfully decoded. In other words, the fourth resource subset includes a resource determined based on a preset period and a transmission resource of data corresponding to a negative acknowledgment feedback message when the first terminal device receives the negative acknowledgment feedback message.

It should be understood that, in this embodiment, a second resource and a third resource are defined for distinguishing between a received negative acknowledgment feedback message and an acknowledgment feedback message. A feedback message for data transmitted on the second resource is a negative acknowledgment feedback message, and a feedback message for data transmitted on the third resource is an acknowledgment feedback message. Actually, both the second resource and the third resource are resources used for sidelink transmission, and neither of them belongs to the first resource set. For example, both the second resource and the third resource may be located before the first resource set in time domain.

According to the claimed invention, the third resource subset includes a resource that is in the preset time period and that is determined from the first resource set based on the preset period when the first terminal device receives neither the acknowledgment feedback message nor the negative acknowledgment feedback message for data transmitted on a resource in the time window.

According to the claimed invention, the second resource subset includes a resource other than at least one of the first resource subset, the third resource subset, and the fourth resource subset in the resources that are in the first resource set and that are in the preset time period.

For example, selection probabilities of the resource subsets may be sorted as follows.

According to the claimed invention, a selection probability of the first resource subset is higher than a selection probability of the second resource subset, the selection probability of the second resource subset is higher than a selection probability of the third resource subset, and the selection probability of the third resource subset is higher than a selection probability of the fourth resource subset.

Optionally, a selection priority of the first resource subset is higher than that of the second resource subset, a selection priority of the second resource subset is higher than that of a third resource subset, and a selection priority of the third resource subset is higher than that of the fourth resource subset.

Optionally, a selection probability of the first resource subset is higher than or equal to that of the second resource subset, a selection probability of the second resource subset is higher than or equal to that of the third resource subset, and a selection probability of the third resource subset is higher than or equal to that of the fourth resource subset.

Optionally, a selection priority of the first resource subset is higher than or equal to that of the second resource subset, a selection priority of the second resource subset is higher than or equal to that of the third resource subset, and a selection priority of the third resource subset is higher than or equal to that of the fourth resource subset.

For example, selection priorities of the resource subsets may be sorted as follows.

Optionally, a selection probability of the first resource subset is higher than that of the third resource subset, a selection probability of the third resource subset is higher than that of the second resource subset, and a selection probability of the second resource subset is higher than that of the fourth resource subset.

Optionally but not claimed, a selection priority of the first resource subset is higher than that of the third resource subset, a selection priority of the third resource subset is higher than that of the second resource subset, and a selection priority of the second resource subset is higher than that of the fourth resource subset.

Optionally but not claimed, a selection probability of the first resource subset is higher than or equal to that of the third resource subset, a selection probability of the third resource subset is higher than or equal to that of the second resource subset, and a selection probability of the second resource subset is higher than or equal to that of the fourth resource subset.

Optionally but not claimed, a selection priority of the first resource subset is higher than or equal to that of the third resource subset, a selection priority of the third resource subset is higher than or equal to that of the second resource subset, and a selection priority of the second resource subset is higher than or equal to that of the fourth resource subset.

Resources are divided into different resource subsets, and different resource subsets correspond to different selection probabilities or are associated with different selection priorities. In this way, the first terminal device can select a proper resource for sidelink transmission based on a specific situation in a sidelink transmission process, to avoid resource collision to some extent.

With reference to the second aspect according to the invention, in some implementations of the second aspect, the negative acknowledgment feedback message is fed back for data transmitted on the second resource. The fourth resource subset further includes a reserved resource determined based on first control information. The first sidelink control information is information transmitted on the second resource, and the first control information includes indication information of the reserved resource.

With reference to the second aspect according to the invention, in some implementations of the second aspect, the acknowledgment feedback message is fed back for data transmitted on the third resource. The first resource subset further includes a reserved resource determined based on second control information. The second control information is information transmitted on the third resource, and the second control information includes indication information of the reserved resource.

It should be understood that the second resource does not belong to the first resource set, or the first resource set does not include the second resource. In a possible design, the second resource is located before the first resource set in time domain. Similarly, the third resource does not belong to the first resource set, or the first resource set does not include the third resource. In a possible design, the third resource is located before the first resource set in time domain.

Based on the foregoing solution, the reserved resource indicated by the control information is further divided.

With reference to the second aspect, in some implementations of the second aspect, the first resource subset further includes a resource that is in the preset time period and that is determined from the first resource set based on the preset period when the first terminal device receives, in the time window, a negative acknowledgment feedback message outside a communication distance.

When the distance between the terminal devices is large, receive power of the received feedback message is low, and it may be considered that mutual interference is small and may be ignored. Therefore, the first terminal device basically receives the negative acknowledgment feedback message, but the negative acknowledgment feedback message is a feedback message from the second terminal device and outside the communication distance. Therefore, a resource determined based on the negative acknowledgment feedback message and the service period of the first terminal device may be divided into the first resource subset.

Correspondingly, if the negative acknowledgment feedback message received by the first terminal device is a feedback message from the second terminal device and within the communication distance, a resource determined based on the negative acknowledgment feedback message and the preset period may be divided into the fourth resource subset.

With reference to the second aspect, in some not claimed implementations of the second aspect, the time window includes a time interval from a first time unit to a second time unit. The first time unit is a time unit n-kxY₁. The second time unit is a time unit n or a time unit n-Y₂. The time unit n is a time unit in which the first terminal device triggers resource selection. 0<k≤C, C, Y₁, and Y₂ are preconfigured values, C is a positive integer, and n, Y₁, and Y₂ are all positive numbers.

The first resource set is dynamically updated based on the predefined time window. In this way, division of resource subsets is time-effective, and the terminal device can properly select a resource.

With reference to the second aspect, in some not claimed implementations of the second aspect, that the first terminal device determines, based on selection probabilities of the at least two resource subsets, a resource used for sidelink transmission from resources in the first resource set in the first preset time period includes: The first terminal device determines, from the first resource subset and based on the selection probabilities of the at least two resource subsets, the resource used for sidelink transmission when a CBR is higher than a preset second CBR threshold, and/or when a priority value of a service priority of the first terminal device is greater than a second priority threshold, and/or when a priority value of a service priority of the first terminal device is within a range between a second priority threshold and a third priority threshold.

With reference to the second aspect, in some not claimed implementations of the second aspect, that the first terminal device determines, based on selection probabilities of the at least two resource subsets, a resource used for sidelink transmission from resources in the first resource set in the first preset time period includes: The first terminal device determines, from the first resource subset and the second resource subset and based on the selection probabilities of the at least two resource subsets, the resource used for sidelink transmission when a CBR is higher than a preset second CBR threshold, and/or when a priority value of a service priority is greater than a second priority threshold, and/or when a priority value of a service priority of the first terminal device is within a range between a second priority threshold and a third priority threshold.

With reference to the second aspect, in some but not claimed implementations of the second aspect, that the first terminal device determines, based on selection probabilities of the at least two resource subsets, a resource used for sidelink transmission from resources in the first resource set in the first preset time period includes: The first terminal device determines, from the first resource subset, the second resource subset, and the third resource subset and based on the selection probabilities of the at least two resource subsets, the resource used for sidelink transmission when a CBR is higher than a preset second CBR threshold, and/or when a priority value of a service priority is greater than a second priority threshold, and/or when a priority value of a service priority of the first terminal device is within a range between a second priority threshold and a third priority threshold.

With reference to the second aspect, in some but not claimed implementations of the second aspect, that the first terminal device determines at least two resource subsets of a first resource set in a first preset time period includes: The first terminal device determines the at least two resource subsets in the first resource set in the first preset time period when a first preset condition is met. The first preset condition includes: a priority value of a service priority of the first terminal device is greater than a preset first priority threshold; and/or a CBR is higher than a preset first CBR threshold.

For related descriptions of the service priority and the CBR, refer to the foregoing related descriptions. For brevity, details are not described herein again.

In this but not claimed embodiment of this application, the first terminal device may divide resources in the first resource set in the first preset time period to obtain at least two resource subsets when at least one of the following two conditions is met: A priority value of a service priority of the first terminal device is large, and/or a channel is congested. Based on division of resource subsets, the first terminal device can select a resource more properly. For example, when a priority value of a service priority is large, and/or when a channel is congested, a resource with a high selection probability or a resource with a high selection priority is used for sidelink transmission. That is, when a service priority is high, and/or when a channel is congested, a more reliable resource is selected for sidelink transmission.

Optionally but not claimed, the first priority threshold is configured by using signaling.

Optionally but not claimed, the first priority threshold is the same as a preconfigured preemption threshold.

For related descriptions of the first priority threshold, refer to the foregoing related descriptions of the first preset condition. For brevity, details are not described herein again.

With reference to the second aspect, in some implementations of the second aspect, the method further includes: The first terminal device determines at least two resource subsets of the first resource set in a second preset time period when a second preset condition is met.

Herein, the second preset time period and the first preset time period may be understood as two different time periods in time domain. The first preset time period is before the second preset time period, and the first preset time period and the second preset time period may be same duration.

As time goes by, a quantity of excluded resources may increase. Available resources in a PDB decrease. In addition, a terminal device configured with a same resource pool as the first terminal device may perform resource reselection, or due to another reason, the terminal device no longer uses an original resource to perform sidelink transmission. In this case, previous division of resource subsets by the first terminal device may not adapt to a current channel status. Therefore, resource division may be performed again on resources in the first resource set and in the second preset time period.

For example, the first terminal device may perform resource division again when the following second preset condition is met.

Optionally but not claimed, the second preset condition includes: Duration of the first terminal device after a time unit in which the second resource is located reaches a first preset threshold; a quantity of remaining resources in the resources that are in the first resource set and that are in the first preset time period is less than a second preset threshold; a remaining packet delay budget reaches a third preset threshold; or a CBR is less than or equal to a fourth preset threshold.

In this but not claimed embodiment, the resources in the first resource set in the first preset time period may also be referred to as a candidate resource set. Therefore, the foregoing condition that a quantity of remaining resources in the resources that are in the first resource set and that are in the first preset time period is less than a second preset threshold may also be expressed as that the quantity of remaining resources in the candidate resource set is less than the second preset threshold.

It should be understood that the foregoing example of the second preset condition is merely an example, and should not constitute any limitation on this application. Based on a same concept, a person skilled in the art may also make equivalent variations or replacements based on the preset condition listed above, to achieve a same technical effect. These variations or replacements shall fall within the protection scope of this application.

In another possible but not claimed implementation, the first terminal device may sort, in order of the first resource subset, the second resource subset, the third resource subset, and the fourth resource subset, the resources in the first resource set in the first preset time period, or sort, in order of the first resource subset, the third resource subset, the second resource subset, and the fourth resource subset, the resources in the first resource set in the first preset time period, and determine, from a part or all of the resources, the resource used for sidelink transmission.

For example, a total quantity of resources in the first resource set in the first preset time period may be Mₜₒₜₐₗ, and the first terminal device may determine, from first A%XMₜₒₜₐₗ resources in the Mₜₒₜₐₗ resources obtained after sorting, a resource used for sidelink transmission. A may be a value in (0, 100]. When a value of A is 100, that is, the first terminal device determines, from the Mₜₒₜₐₗ resources, the resource used for sidelink transmission.

With reference to the second aspect, in some possible but not claimed implementations, the preset period includes: all periods in a preconfigured period set; a part of periods in the preconfigured period set; a service period of the first terminal device; or a period other than the service period of the first terminal device in the preconfigured period set.

The terminal device may usually transmit data on a periodic resource. When the first terminal device determines the fourth resource subset based on the second resource and all the periods in the preconfigured period set, almost all resources that may collide with another terminal device in the future may be determined as the fourth resource subset. If a selection probability or a selection priority of the fourth resource subset is set to the lowest, it is equivalent to that the fourth resource subset is determined as a most unreliable resource. In this case, the first terminal device does not determine, or there is a high probability that the first terminal device does not determine, from the fourth resource subset, the resource used for sidelink transmission.

In addition, when the first terminal device determines a second resource set based on the second resource and a part of periods in the preconfigured period set, a selection probability or a selection priority of a resource on which collision may occur may be set to the lowest to some extent, and insufficiency of resources used by the first terminal device for sidelink transmission due to excessive determining of resources in the first resource set as the fourth resource subset is avoided.

With reference to the first aspect or the second aspect, in some possible implementations, the first resource set is a resource set from which the first terminal device selects a resource in a random resource selection manner.

In other words, the first terminal device may select, in a random selection manner, a resource used for sidelink transmission.

However, it should be understood that the foregoing method may also be applicable to a sensing-based resource selection manner and a partial sensing-based resource selection manner. This is not limited in this application.

According to a third aspect, wherein the third aspect and its implementations are not claimed this application also provides another sidelink transmission method. The method may be performed by a terminal device (for example, a second terminal device in the following), or may be performed by a component (for example, a chip or a chip system) configured in a terminal device (for example, a second terminal device). This is not limited in embodiments of this application. For ease of understanding, the following describes the method by using a second terminal device as an execution body.

For example, the method includes: A second terminal device receives data from a first terminal device on a first resource; and the second terminal device sends a feedback message to the first terminal device. The feedback message indicates whether the data is successfully decoded.

Therefore, in this embodiment of this application, the feedback message provides a reference for a subsequent resource selection process, to avoid resource collision to some extent, and improve transmission reliability of a communication system.

According to a fourth aspect, this application provides a communication system. The apparatus includes modules or units and communication apparatus configured to perform the method in any possible implementation of the foregoing aspects. It should be understood that the modules or units may implement corresponding functions by executing a computer program.

According to a fifth but not claimed aspect, this application provides a communication apparatus. The apparatus includes a processor. The processor is coupled to a memory, and may be configured to execute a computer program in the memory, to implement the method in any possible implementation of the foregoing aspects. Optionally, the communication apparatus further includes the memory. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another but not claimed implementation, the communication apparatus is a chip disposed in a terminal device. When the communication apparatus is the chip configured in the terminal device, the communication interface may be an input/output interface.

Optionally but not claimed, the transceiver may be a transceiver circuit. Optionally, the input/output interface may be an input/output circuit.

According to a sixth but not claimed aspect, a processor is provided. The processor includes an input circuit, an output circuit, and a processing circuit. The processing circuit is configured to: receive a signal through the input circuit, and transmit a signal through the output circuit, so that the processor performs the method in any possible implementation of the foregoing aspects.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a seventh but not claimed aspect, a processing apparatus is provided, including a processor and a memory. The processor is configured to: read instructions stored in the memory, receive a signal through a receiver, and transmit a signal through a transmitter, to perform the method in any one of the foregoing possible implementations.

Optionally but not claimed, there are one or more processors, and there are one or more memories.

Optionally but not claimed, the memory may be integrated with the processor, or the memory and the processor are separately disposed.

In a specific but not claimed implementation process, the memory may be a non-transitory (non-transitory) memory, such as a read-only memory (read only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processor in the seventh but not claimed aspect may be one or more chips. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and independently exist.

According to an eighth but not claimed aspect, a computer-readable storage medium is provided. The computer storage medium stores a computer program (which may also be referred to as code or instructions). When the computer program is run by a processor, the method in any possible implementation of the foregoing aspects is performed.

According to a ninth but not claimed aspect, a computer program product is provided. The computer program product includes a computer program (which may also be referred to as code or instructions). When the computer program is run, the method in any possible implementation of the foregoing aspects is performed.

According to a tenth aspect, a communication system is provided. The communication system includes the first terminal device and the second terminal device.

In the following description, features which in the above summary of the invention have been marked as "not claimed" or "according to the invention" are also hereinafter, when they are described and explained with reference to the drawings, to be understood as "not claimed" or "not part of the invention" or "according to the invention" even if the features described above as belonging to the invention (i.e. marked "according to the invention") are sometimes referred to with "may" or "can". Such features should not be considered "optional" but essentially part of the claimed invention.

### BRIEF DESCRIPTION OF DRAWINGS

FIG. 1 is a schematic diagram of a communication system applicable to a sidelink transmission method according to an embodiment of this application;
FIG. 2 is a schematic flowchart of a sidelink transmission method according to an embodiment of this application;
FIG. 3 is a schematic diagram of a first resource and a PSFCH;
FIG. 4 and FIG. 5 each are a schematic diagram of excluding a second resource set from a first resource set according to an embodiment of this application;
FIG. 6 and FIG. 7 each are a schematic flowchart of a sidelink transmission method according to an embodiment of this application;
FIG. 8 and FIG. 9 each are a schematic block diagram of a communication apparatus according to an embodiment of this application;
FIG. 10 is a schematic diagram of a structure of a terminal device according to an embodiment of this application;
FIG. 11 is a schematic diagram of data transmitted on a first resource according to an embodiment of this application;
FIG. 12 and FIG. 13 each are a schematic diagram of data transmitted on a first resource and a feedback message associated with the data according to an embodiment of this application; and
FIG. 14 is a schematic diagram of a relationship between a first resource and a fifth resource, time at which resource selection is triggered, time at which resource reselection is triggered, time at which re-evaluation is triggered, and time at which preemption evaluation is triggered according to an embodiment of this application.

### DESCRIPTION OF EMBODIMENTS

The following describes technical solutions of this application with reference to accompanying drawings.

The communication method provided in this application may be applied to various communication systems, such as a long term evolution (Long Term Evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future fifth generation (5th Generation, 5G) mobile communication system, or a new radio access technology (new radio access technology, NR) system. The 5G mobile communication system may include a non-standalone (non-standalone, NSA) communication system and/or a standalone (standalone, SA) communication system.

The communication method provided in this application may be further applied to a machine type communication (machine type communication, MTC) network, a long term evolution-machine type communication technology (Long Term Evolution-machine, LTE-M), a device-to-device (device to device, D2D) network, a machine to machine (machine to machine, M2M) network, an internet of things (internet of things, IoT) network, or another network. The IoT network may include, for example, an internet of vehicles. Communication modes in an internet of vehicles system are collectively referred to as vehicle to X (vehicle to X, V2X, where X may represent anything). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The communication method provided in this application may be further applied to a future communication system, for example, a sixth generation mobile communication system. This is not limited in this application.

In embodiments of this application, a network device may be any device having a wireless transceiver function. The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the network device may be a gNB or a transmission point (a TRP or a TP) in a 5G system such as an NR system, may be one antenna panel or a group (including a plurality of antenna panels) of antenna panels of a base station in a 5G system, or may be a network node, such as a baseband unit (BBU) or a distributed unit (distributed unit, DU), that constitute a gNB or a transmission point.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU may be responsible for processing a non-real-time protocol and a service. For example, the CU may implement functions of a radio resource control (radio resource control, RRC) layer, a service data adaptation protocol (service data adaptation protocol, SDAP) layer, and/or a packet data convergence protocol (packet data convergence protocol, PDCP) layer. The DU may be responsible for processing a physical layer protocol and a real-time service. For example, the DU may implement functions of a radio link control (radio link control, RLC) layer, a medium access control (media access control, MAC) layer, and a physical (physical, PHY) layer. One DU may be connected to only one CU or a plurality of CUs, and one CU may be connected to a plurality of DUs. The CU and the DU may communicate with each other through an F1 interface. The AAU may implement some physical layer processing functions, radio frequency processing, and a function related to an active antenna. Information at the RRC layer is eventually submitted to the PHY layer and is converted into information at the PHY layer, or is converted from information at the PHY layer. Therefore, in this architecture, higher layer signaling such as RRC layer signaling may also be considered as being sent by the DU or sent by the DU and the AAU.

It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device serves a cell, and a terminal device communicates with the cell on a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device having a wireless connection function or a vehicle-mounted device. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a 5G network, and a terminal device in a future evolved public land mobile network (public land mobile network, PLMN).

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, the terminal device may alternatively be a terminal device in an internet of things (Internet of things, IoT) system. An IoT is an important part in future development of information technologies. A main technical feature of the IoT is to connect things to a network by using a communication technology, to implement an intelligent network for human-machine interconnection and thing-thing interconnection. An IoT technology can achieve massive connections, deep coverage, and terminal power saving by using, for example, a narrow band (narrow band, NB) technology.

In addition, the terminal device may alternatively include sensors such as an intelligent printer, a train detector, and a gas station, and main functions include: collecting data (which is a function of some terminal devices), receiving control information and downlink data of a network device, sending an electromagnetic wave, and transmitting uplink data to the network device.

It should be understood that specific forms of the network device and the terminal device are not limited in this application.

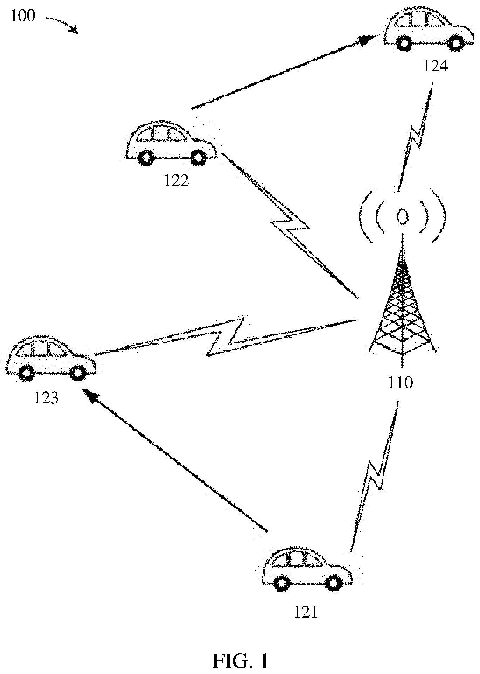

For ease of understanding embodiments of this application, a communication system applicable to embodiments of this application is first described in detail with reference to FIG. 1. FIG. 1 is a schematic diagram of a communication system applicable to a sidelink transmission method according to an embodiment of this application. As shown in FIG. 1, a communication system 100 may include at least one network device and a plurality of terminal devices, for example, a network device 110 and terminal devices 121 to 124 shown in FIG. 1. The network device 110 and the terminal devices 121 to 124 may separately communicate with each other through a radio air interface, and the terminal devices may communicate with each other by using a vehicle-mounted wireless communication technology. For example, the terminal device 121 and the terminal device 123 shown in FIG. 1 may communicate with each other, and the terminal device 122 and the terminal device 124 may also communicate with each other.

It should be understood that FIG. 1 is merely an example, and shows a scenario in which the terminal device 121 sends signaling and/or data to the terminal device 123, and the terminal device 122 sends signaling and/or data to the terminal device 124. However, this should not constitute any limitation on this application. Signaling and/or data may also be exchanged between the terminal device 121 and the terminal device 123, and signaling and/or data may also be exchanged between the terminal device 122 and the terminal device 124. This is not limited in embodiments of this application.

It should be further understood that FIG. 1 is merely an example, and shows one network device and four terminal devices. However, this should not constitute any limitation on this application. The communication system 100 may further include more network devices, or may include more or fewer terminal devices. This is not limited in embodiments of this application.

In the communication system shown in FIG. 1, data and signaling may be transmitted between terminal devices on a sidelink. A resource used by the terminal device for communication on the sidelink may be allocated by the network device. In other words, the network device allocates a resource to sidelink transmission. For example, the terminal device 121 in FIG. 1 may send signaling and/or data to the terminal device 123 on a resource allocated by the network device, and the terminal device 122 may send signaling and/or data to the terminal device 124 on a resource allocated by the network device.

For example, the network device may allocate a resource to the sidelink in the following two modes.

Mode (mode) 1: The network device may schedule a resource for the terminal device to perform sidelink transmission. For example, the network device 110 shown in FIG. 1 may separately schedule resources for the terminal device 121 and the terminal device 122 to perform sidelink transmission.

Mode 2: The terminal device may select a resource from resources preconfigured by the network device to perform sidelink transmission. For example, the terminal device 121 and the terminal device 122 in FIG. 1 may separately select a resource from the resources preconfigured by the network device to perform sidelink transmission.

In the mode 2, the terminal device may select a resource in the following three manners: sensing-based (full sensing) resource selection, partial sensing-based (partial sensing) resource selection, and random selection (random selection).

In sensing-based resource selection and partial sensing-based resource selection, resource collision may be avoided to some extent based on sensing of the terminal device. Random selection may be that the terminal device selects a resource based on a same probability, for example, selects a resource from a candidate resource set. However, the terminal device performs random selection without any prior information, and only selects several resources within a specific time range and frequency domain range. The randomly selected resources may overlap resources used by another terminal device other than the terminal device for transmitting a PSSCH. As a result, more terminal devices at a receive end cannot successfully decode signaling and/or data from a terminal device at a transmit end.

The plurality of terminal devices select a resource from a same resource pool (resource pool) configured by the network device. In a possible case, the plurality of terminal devices (for example, the terminal device 121 and the terminal device 122 in FIG. 1) send signaling and/or data on a same resource. In another possible case, when a terminal device (for example, the terminal device 121 in FIG. 1) with a low service priority selects a resource in a random selection manner, the terminal device may occupy or preempt a resource of a terminal device (for example, the terminal device 122 in FIG. 1) with a high service priority. However, the terminal device with a high priority cannot determine that the random selection manner is used by the terminal device with a low service priority and still performs sidelink transmission on the resource. Therefore, resource collision occurs. In the foregoing two possible cases, both the terminal device 123 and the terminal device 124 may not successfully decode signaling and/or data received on the resource. Consequently, transmission reliability of the entire communication system and system performance are reduced.

In this embodiment of this application, for "resource collision" between the plurality of terminal devices described above, a feedback message is introduced in a process of selecting a resource by the terminal device. Based on the feedback message, the terminal device may determine whether the previously sent signaling and/or data are/is successfully decoded, and exclude a part of resources from the resource pool preconfigured by the network device when the previously sent signaling and/or data are/is not successfully decoded. The excluded resource is no longer used by the terminal device to perform sidelink transmission in a subsequent time period. The excluded resource may be, for example, a resource determined based on a preconfigured period. Therefore, resource collision can be avoided to some extent. This mitigates a problem that transmission reliability of the entire communication system and system performance are reduced due to resource collision.

It should be noted that, the sidelink transmission method provided in this application is not limited to being used in a randomly selected terminal device, and the method is also applicable to a terminal device that selects a resource based on sensing and a terminal device that selects a resource based on partial sensing.

For ease of understanding embodiments of this application, the following first briefly describes terms used in this application.
1. Hybrid automatic repeat request (hybrid automatic repeat request, HARQ) feedback: The hybrid automatic repeat request may be used for feeding back, to a transmit end device, whether data sent by the transmit end device is successfully decoded. The data may be, for example, a transport block (transport block, TB).

The HARQ feedback may include but is not limited to a NACK-only mechanism and an ACK-NACK mechanism. In the NACK-only mechanism, if the data from the transmit end device is not successfully decoded, a receive end device feeds back a NACK message. In other cases, no feedback is sent. In the ACK-NACK mechanism, if the data from the transmit end device is not successfully decoded, the receive end device feeds back a NACK message; or if the data from the transmit end device is successfully decoded, the receive end device feeds back an ACK message. The transmit end device starts retransmission after receiving the NACK message, but does not perform retransmission after receiving the ACK message.

In this embodiment of this application, a HARQ feedback message is a possible example of a feedback message, a NACK message is a possible example of a negative acknowledgment feedback message, and an ACK message is a possible example of an acknowledgment feedback message. Specific forms of the feedback message, the negative acknowledgment feedback message, and the acknowledgment feedback message are not limited in this embodiment of this application.

2. Time unit: The time unit may be, for example, a slot (slot), a subframe (subframe), a symbol (symbol), or another time unit defined in the future. It should be noted that the time unit is a measurement unit in time domain, and is not necessarily a minimum time unit.

In NR, a slot is a scheduling unit. The following describes the method provided in embodiments of this application by using an example in which a slot is used as a time unit. It may be understood that in descriptions in the following embodiments, a slot may also be replaced with another time unit, such as a subframe or a symbol. This is not limited in embodiments of this application.

3. Resource pool (resource pool), resource set, and candidate (candidate) resource set: The resource pool is a set of resources pre-allocated by a network device to a terminal device for use. The resource pool may be configured for a plurality of terminal devices. The plurality of terminal devices may select a resource from the resource pool in a sensing-based resource selection manner, a partial sensing-based resource selection manner, or a random resource selection manner, to perform sidelink transmission.

The resource set is a concept provided in embodiments of this application. The resource set is a subset of the resource pool, and may include a resource obtained after the terminal device triggers resource selection. For example, if the terminal device triggers resource selection in a slot n, the resource set includes a resource located after the slot n in the resource pool.

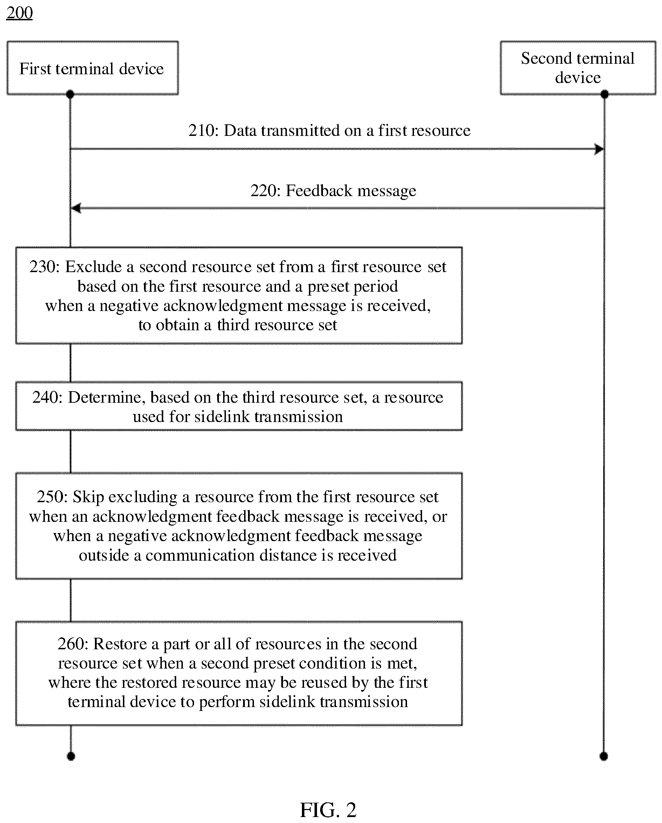

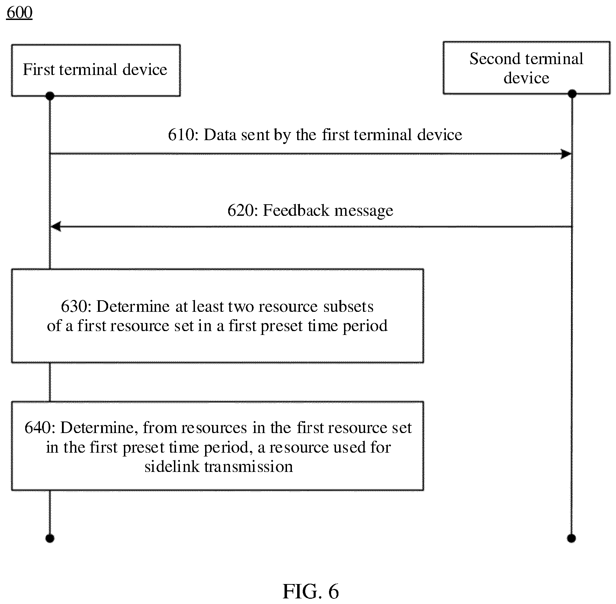

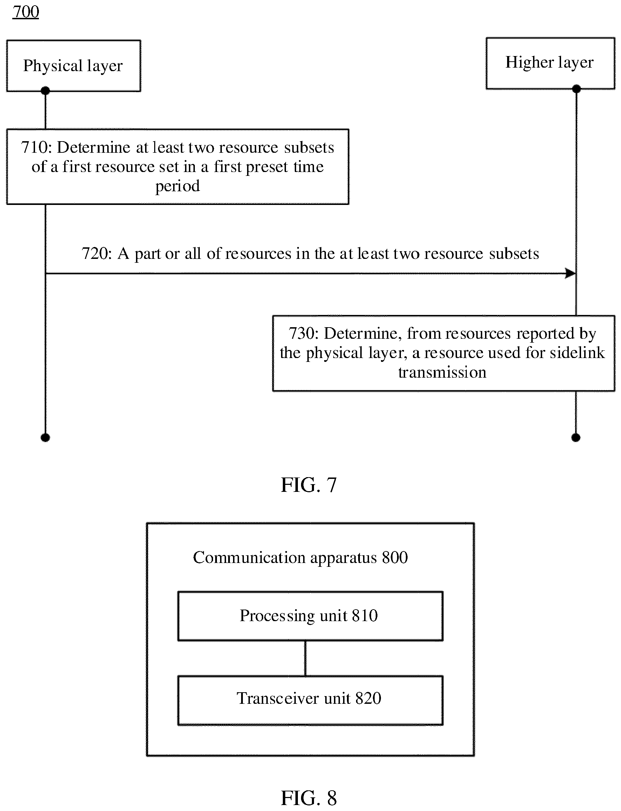

The candidate resource set is a resource that is determined by the terminal device from the resource pool and that can be used for sidelink transmission. In this embodiment of this application, the candidate resource set may be a resource determined from the resource set. In other words, the candidate resource set is a subset of the resource set. Specifically, the candidate resource set may be a resource subset determined from a third resource set in the method 200 described with reference to FIG. 2, or may be a resource subset determined from a first resource set in the method 600 described with reference to FIG. 6 and the method 700 described with reference to FIG. 7. The resource subset may specifically include a resource in the first resource set or the third resource set in a preset time period.

In an implementation, a physical layer of the terminal device may determine a candidate resource set from a resource set (for example, the first resource set or the third resource set in the following embodiments), and report the candidate resource set to a higher layer, for example, a MAC layer. The MAC layer may further select, from the candidate resource set, a resource used for sidelink transmission. For example, the MAC layer may select a resource in a sensing-based selection manner, a partial sensing-based selection manner, or a random selection manner. Then, the MAC layer may indicate the selected resource to the physical layer, and the physical layer performs sidelink transmission on the resource.

In a possible design, the candidate resource set may be located between slots [n+T₁, n+T₂] in time domain, and may be equal to a frequency domain range of the resource pool in frequency domain. For example, the candidate resource set may include resources of at least L_{subCH} contiguous sub-channels (sub-channel).

Values of T₁ and T₂ depend on implementations of the terminal device.

A value of T₁ that may meet 0≤T₁<T_{proc} may be related to a subcarrier spacing (subcarrier space, SCS) configuration µ_{SL} of a sidelink bandwidth part (bandwidth part, BWP). For example, T_{proc} and µ_{SL} have correspondences shown in Table 1.

**Table 1**

| µ_{SL} | T_{proc} |
|---|---|
| 0 | 1 |
| 1 | 1 |
| 2 | 2 |
| 3 | 4 |

When T₂ₘᵢₙ is less than a remaining PDB (for example, denoted as T_{PDB}), T₂ₘᵢₙ≤T₂≤T_{PDB} is met. Otherwise, T₂ is set to T_{PDB}. T₂ₘᵢₙ may be 1 millisecond, 5 milliseconds, 10 milliseconds, or 20 milliseconds. A specific value of T₂ₘᵢₙ may be, for example, configured by the network device by using higher layer signaling. The higher layer signaling may include, for example, an RRC message. A specific value of T₂ₘᵢₙ and a specific name of the higher layer signaling are not limited in this embodiment of this application.

For each slot within a range of slots [n+T₁, n+T₂], one or more candidate single-slot resources (candidate single-slot resource) may be defined.

For example, a candidate single-slot resource R_{x,y} defined in a slot y may indicate that the resource is in a slot t_{y} in time domain, and includes the L_{subCH} contiguous sub-channels from a sub-channel x to a sub-channel x+L_{subCH}-1 in frequency domain. x is an index of a sub-channel, and y is an index of a slot.

A total quantity of candidate single-slot resources in each candidate resource set may be denoted as Mₜₒₜₐₗ. In other words, each candidate resource set may include Mₜₒₜₐₗ candidate single-slot resources.

It should be understood that the candidate single-slot resource may be relative to a candidate resource set in NR. In LTE, a resource in a candidate resource set may be referred to as a candidate single-subframe resource. A total quantity of candidate single-subframe resources in each candidate resource set may also be denoted as Mₜₒₜₐₗ. In other words, each candidate resource set may include Mₜₒₜₐₗ candidate single-subframe resources.

It should be further understood that both the candidate single-slot resource and the candidate single-subframe resource are definitions of resources in the candidate resource set. The former is defined by using a slot as a granularity in time domain, and the latter is defined by using a subframe as a granularity in time domain. This should not constitute any limitation on this application. In this application, it is not excluded that a resource in the candidate resource set is defined by using another granularity in a future protocol.

In this embodiment of this application, for ease of description and understanding, a candidate single-slot resource is used as an example to count resources in the candidate resource set. It may be understood that, based on definitions of different granularities, a resource in the candidate resource set may also be defined as a candidate single-subframe resource, or the like.

4. Priority: In this embodiment of this application, a plurality of priorities are included, for example, a service priority of a terminal device and a selection priority of a resource subset.

The service priority of the terminal device may also be referred to as a layer 1 (layer 1, L1) priority or a physical layer priority. The service priority may be, for example, a priority carried in SCI, a priority of a physical sidelink shared channel (physical sidelink share channel, PSSCH) carried in the SCI, a priority of sending a PSSCH, a priority of a logical channel, or a highest-level priority of a logical channel. It should be understood that the service priority may also be indicated by using another signaling, for example, a MAC CE or an RRC message.

A service priority level may correspond to a priority value. For example, a higher service priority level corresponds to a smaller priority value; or a lower service priority level corresponds to a smaller priority value.

For example, a higher service priority level corresponds to a smaller priority value. If a priority value may be an integer ranging from 1 to 8, the priority value 1 indicates a highest-level service priority.

It should be understood that, for ease of understanding, the foregoing merely shows priority values whose values range from 1 to 8. However, this should not constitute any limitation on this application. A specific value range of the priority value is not limited in this application. For example, a value may alternatively be an integer ranging from 0 to 7.

It should be understood that the service priority may alternatively be represented by a priority level. This is not limited in embodiments of this application.

The selection priority of the resource subset indicates a priority level of selecting the resource subset. A higher selection priority of the resource subset indicates a higher priority level of selecting the resource subset; and a lower selection priority of the resource subset indicates a lower priority level of selecting the resource subset.

For example, if a selection priority of a first resource subset is higher than that of a second resource subset, the terminal device may preferentially select a resource from the first resource subset to perform sidelink transmission.

It should be understood that the selection priority of the resource subset may alternatively be represented by the priority value or the priority level described above. For brevity, details are not described herein again.

For ease of understanding embodiments of this application, the following descriptions are provided.

First, the sub-channel in embodiments of this application may be specifically a logical sub-channel. For example, L_{subCH} contiguous sub-channels may be specifically L_{subCH} contiguous logical sub-channels.

Second, the PSSCH, the PSCCH, and the PSFCH in embodiments of this application may be understood as physical resources, or may be understood as data, signaling, or the like transmitted on these resources. For example, the terminal device sending data through a PSSCH may alternatively be described as the terminal device sending a PSSCH; the terminal device sending control information through a PSCCH, for example, first-stage SCI, may alternatively be described as the terminal device sending a PSCCH; and the terminal device sending a feedback message through a PSFCH, for example, a HARQ message, may alternatively be described as the terminal device sending a PSFCH. A person skilled in the art can understand the meaning.

Third, in the following embodiments, terms "first", "second", and various sequence numbers in the following embodiments are merely used for differentiation for ease of description, but are not intended to limit the scope of embodiments of this application. For example, the various numbers are used for distinguishing between different indication information or different time intervals.

Fourth, "predefinition" may be implemented by prestoring corresponding code or a corresponding table in a device (for example, including a terminal device and a network device), or may be implemented in another manner that may indicate related information. A specific implementation thereof is not limited in this application.

"Preconfiguration" may be implemented by prestoring corresponding code or a corresponding table in a device (for example, including a terminal device and a network device), or may be implemented in another manner that may indicate related information, or may be preconfigured by using signaling. For example, the network device is preconfigured by using signaling. A specific implementation thereof is not limited in this application.

"Storing" may be storing in one or more memories. The one or more memories may be separately disposed, or may be integrated into an encoder or a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in this application.

Fifth, a "protocol" in embodiments of this application may be a standard protocol in the communication field, for example, may include an LTE protocol, an NR protocol, and a related protocol applied to a future communication system. This is not limited in this application.

Fifth, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one (piece) of a, b, and c may represent: a, b, c, a and b, a and c, b and c, or a, b, and c, where a, b, and c each may be singular or plural.

Sixth, in embodiments of this application, descriptions such as "when", "in a case", and "if" mean that a device (for example, a terminal device or a network device) performs corresponding processing in an objective situation, and are not intended to limit time, and the device (for example, the terminal device or the network device) is not required to perform a determining action during implementation; and do not mean any other limitation.

Seventh, in embodiments of this application, a plurality of comparisons with a threshold are provided. For example, a priority value of a service priority is compared with a first priority threshold, and a CBR is compared with a first CBR threshold. A comparison result may be usually divided into two branches. In one design, one branch includes being higher than (or may be expressed as greater than) a threshold, and the other branch includes being lower than or equal to (or may be expressed as less than or equal to) a threshold; or in another design, one branch includes being higher than or equal to (or may be expressed as greater than or equal to) a threshold, and the other branch is lower than (or may be expressed as less than) a threshold. When a comparison with a preset threshold is described below, the foregoing two designs may be applicable unless otherwise specified.

Eighth, in embodiments of this application, a first terminal device determines a resource used for sidelink transmission, that is, selects a resource from a resource set to perform sidelink transmission. In the following, "determine" and "select" are alternately used, and meanings expressed by the two are the same.

The following describes in detail the sidelink transmission method provided in embodiments of this application with reference to the accompanying drawings.

It should be understood that, for ease of understanding and description, the following describes the method provided in embodiments of this application in detail based on interaction between a first terminal device and a second terminal device as an example. The first terminal device and the second terminal device may be, for example, the terminal devices in the communication system shown in FIG. 1. For example, the first terminal device may be the terminal device 121 in FIG. 1, and the second terminal device may be the terminal device 123 in FIG. 1; or the first terminal device may be the terminal device 122 in FIG. 1, and the second terminal device may be the terminal device 124 in FIG. 1.

However, it should be understood that this should not constitute any limitation on an execution body of the method provided in this application. An execution body that can implement the method provided in embodiments of this application by running a program that records code of the method provided in embodiments of this application can be used as an execution body of the method provided in embodiments of this application. For example, the first terminal device shown in the following embodiments may alternatively be replaced with a component in the first terminal device, for example, a chip, a chip system, or another functional module that can invoke a program and execute the program. The second terminal device may alternatively be replaced with a component in the second terminal device, for example, a chip, a chip system, or another functional module that can invoke a program and execute the program.

In addition, for ease of understanding and description, the following describes a specific procedure of this embodiment by using a HARQ feedback as an example of a feedback message, an ACK message as an example of an acknowledgment feedback message, and a NACK message as an example of a negative acknowledgment feedback message. However, it should be understood that specific forms of the feedback message, the acknowledgment feedback message, and the negative acknowledgment feedback message are not limited in embodiments of this application.

FIG. 2 is a schematic flowchart of a sidelink transmission method 200 according to an embodiment of this application. As shown in FIG. 2, the method 200 may include step 210 to step 250. The following describes the steps in the method 200 in detail.

In step 210, a first terminal device sends data to a second terminal device on a first resource. Correspondingly, in step 210, the second terminal device receives the data from the first terminal device on the first resource.

The first resource may be a resource that is determined in advance by the first terminal device and that can be used for sidelink transmission. In an implementation, the first resource may include a PSSCH. In other words, the first terminal device may send the data to the second terminal device through the PSSCH. In some cases, that the first terminal device sends the data to the second terminal device through the PSSCH may also be represented as that the first terminal device sends the PSSCH to the second terminal device. A person skilled in the art can understand the meaning.

The second terminal device may receive the data on the first resource, and decode the data after receiving the data.

It should be noted that, in sidelink transmission, a PSSCH and a PSCCH are usually sent together, for example, both may be carried on the first resource. In other words, the first terminal device may send data and control information (such as SCI, a MAC CE, and an RRC message) on the first resource.

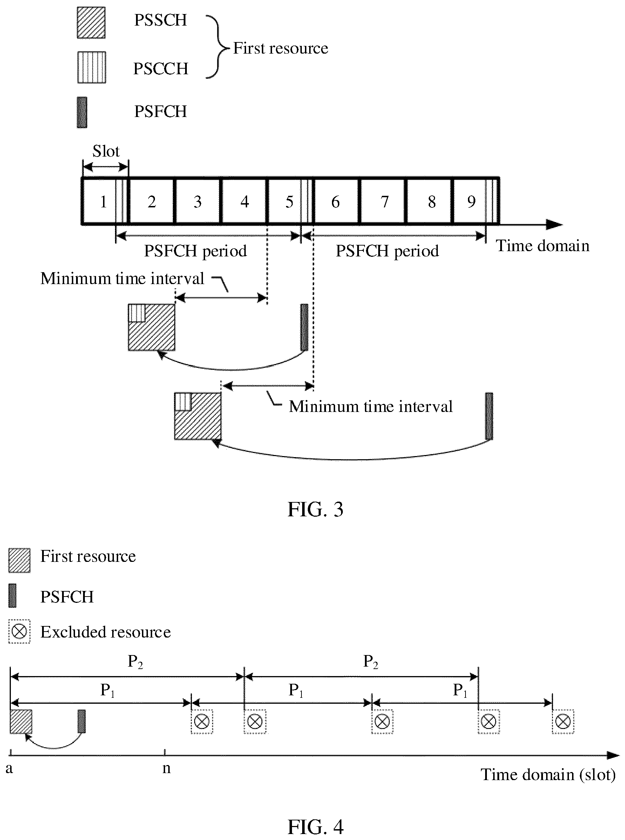

FIG. 3 shows an example of a first resource including a PSSCH and a PSCCH.

A coordinate axis shown in FIG. 3 represents a time domain resource. The time domain resource includes a plurality of slots, and each slot may include a plurality of symbols. The PSCCH in FIG. 3 occupies first several symbols of the first resource in time domain, and occupies a part of sub-channels of the first resource in frequency domain.

It should be understood that resources occupied by the PSSCH and the PSCCH shown in FIG. 3 are merely examples, and should not constitute any limitation on this embodiment of this application. A relative location relationship between the PSSCH and the PSCCH in the first resource is not limited in this application.

In step 220, the first terminal device receives a feedback message from the second terminal device.

After receiving the data and the control information from the first terminal device on the first resource, the second terminal device may first decode the control information, and then decode the data based on the control information. For example, the second terminal device may first decode the control information to determine whether the data is data sent to the second terminal device. If the data is data sent to the second terminal device, the data is decoded based on the control information. If the data is not sent to the second terminal device, the data is ignored, and no feedback is performed.

The first terminal device may determine, based on the feedback message received from the second terminal device, whether the data is successfully decoded. Herein, successful decoding may include successful receiving and successful decoding. Unsuccessfully decoding may include unsuccessful receiving, or successful receiving but unsuccessful decoding.

For example, the feedback message may be, for example, a HARQ message. The HARQ message may indicate whether the data is successfully decoded, or the HARQ message may indicate whether the PSSCH is successfully decoded. More specifically, the HARQ message may indicate whether the data sent by the first terminal device in step 210 is successfully decoded by the second terminal device. In other words, the HARQ message may indicate whether the PSSCH sent by the first terminal device is successfully decoded by the second terminal device.

As described above, HARQ feedback may include a NACK-only mechanism and an ACK-NACK mechanism.

In the NACK-only mechanism, if the second terminal device successfully decodes the data, the second terminal device may not send the feedback message; or if the second terminal device does not successfully decode the data, or if the second terminal device does not successfully receive the data, the second terminal device may send a NACK message.

In the ACK-NACK mechanism, if the second terminal device successfully decodes the data, the second terminal device may send an ACK message; or if the second terminal device does not successfully decode the data, or if the second terminal device does not successfully receive the data, the second terminal device may send a NACK message.

Therefore, in step 220, the second terminal device may send the feedback message to the first terminal device, or may not send the feedback message to the first terminal device.

It should be noted that, if the first terminal device sends the data in a groupcast (groupcast) or broadcast (broadcast) mode, in other words, a link between the first terminal device and the second terminal device may be a unicast link, a groupcast link, or a broadcast link, there may be one or more second terminal devices that receive the data. Different second terminal devices may have different feedback messages for the data, and the HARQ feedback message received by the first terminal device may include both an ACK message and a NACK message. In this case, the first terminal device may perform step 230 described below when the first terminal device receives the NACK message. Generally, the HARQ feedback may be carried on a physical sidelink feedback channel (physical sidelink feedback channel, PSFCH). There is a correspondence between the PSFCH and the PSSCH. To be specific, the HARQ feedback transmitted on the PSFCH is a feedback on whether the corresponding PSSCH is successfully decoded.

FIG. 3 shows a correspondence between the PSFCH and the first resource. For ease of understanding, in FIG. 3, slots are distinguished by using different numbers. FIG. 3 shows nine slots: a slot 1 to a slot 9.

As shown in the figure, the PSSCH and the PSCCH are transmitted on the first resource shown in FIG. 3. The first resource may include one or more slots in time domain. For example, FIG. 3 shows the first resource that occupies one slot, and the first resource may include L_{subCH} contiguous sub-channels in frequency domain. The second terminal device receives the PSCCH and the PSSCH on the first resource, and may send the feedback message in a first slot in which the PSFCH can be sent and that is after several slots after a last slot in which the PSSCH is received.

Because the first resource shown in FIG. 3 occupies only one slot, the several slots after the last slot in which the PSSCH is received are equivalent to several slots after the slot in which the PSSCH is received.

Herein, the several slots after the last slot in which the PSSCH is received are slots between the PSSCH and the PSFCH. A quantity of the several slots may be predefined, for example, predefined in a protocol. The several slots may be referred to as a minimum time interval (minimum time gap). For example, a value of the several slots may be two or three slots. This is not limited in this embodiment of this application.

The first slot in which the PSFCH can be sent may be specifically a first PSFCH resource that is located after the several slots after the last slot in which the PSSCH is received and that is in PSFCHs determined based on a predefined PSFCH period.

The following provides descriptions with reference to FIG. 3. It is assumed that the PSFCH period is four slots, and the minimum time interval is two slots. A resource corresponding to a symbol in the slot 1 in FIG. 3 may be the PSFCH. In this case, a next PSFCH is located in a slot 5, and a next PSFCH resource after the next PSFCH resource is located in the slot 9.

As shown in the figure, if the first resource is located in a slot 2, and it is considered that the minimum time interval is two slots, the first slot in which the PSFCH can be sent may be the slot 5. Therefore, a PSFCH corresponding to the first resource in the slot 2 is located in the slot 5. If the first resource is located in a slot 3, and it is considered that the minimum time interval is two slots, two slots after the slot 3 are over the slot 5, and the first slot in which the PSFCH can be sent may be the slot 9. Therefore, a PSFCH corresponding to the first resource in the slot 3 is located in the slot 9.

It should be noted that the PSFCH may occupy one or more symbols in a slot. For example, if the slot shown in FIG. 3 includes 14 symbols, the PSFCH may occupy an eleventh symbol, a twelfth symbol, or a thirteenth symbol in the slot (for example, the slot 5 or the slot 9).

It should be further noted that, if the first resource used for sending the PSSCH occupies a plurality of slots in time domain, a slot used for sending the PSFCH may be calculated starting from a last slot occupied by the first resource in time domain.

In addition, the PSFCH and the PSSCH may occupy a same frequency band in frequency domain, for example, may occupy same L_{subCH} contiguous sub-channels.

Based on the foregoing design, after sending the PSSCH and the PSCCH on the first resource, the first terminal device may determine in advance a location of a time-frequency resource for receiving the corresponding PSFCH. Therefore, the first terminal device may receive the PSFCH on the corresponding time-frequency resource.

Certainly, a location relationship between the first resource and the PSFCH in time domain and/or frequency domain is not necessarily designed based on the foregoing relationship shown in FIG. 3. For example, transmission of a feedback message at a specific time domain location, and/or transmission of the feedback message at a specific frequency domain location may also be defined in the protocol. This is not limited in this embodiment of this application. For ease of description, a resource used for transmitting the feedback message is referred to as a feedback resource below. The PSFCH is an example of the feedback resource.

It may be understood that the first terminal device may receive the NACK message on the feedback resource, or may receive the ACK message on the feedback resource, or may receive no feedback message on the feedback resource. Based on whether the first terminal device receives the feedback message on the feedback resource and different received feedback messages, processing of the first terminal device may be different. For details, refer to related descriptions of step 230 to step 260 in the following.

In step 230, the first terminal device excludes a second resource set from a first resource set when receiving a negative acknowledgment feedback message from the second terminal device, to obtain a third resource set.

For example, the negative acknowledgment feedback message may be a NACK message. The NACK message indicates that the data is not successfully decoded, or that the PSSCH is not successfully decoded.

The first resource set may be understood as a set including resources within a time range and/or a frequency domain range. Specifically, the first resource set may include a resource that is obtained after the first terminal device triggers resource selection and that is in a resource pool. It is assumed that time at which the first terminal device triggers resource selection is in a slot n, and the first resource set includes a resource in the resource pool and after the slot n. In specific implementation, the slot n may be, for example, packet arrival time, data arrival time, or time at which resource selection is triggered or resource reselection is triggered. In a possible design, a value of n may be within a range from 0 to 10240x 2^{µ^{SL}}. For descriptions and values of µ_{SL}, refer to the foregoing description. For brevity, details are not described herein again.

It should be noted that the first resource set does not include the first resource. In other words, the first resource does not belong to the first resource set. Actually, the first resource may be located before the first resource set in time domain. In other words, the first resource set is located after the first resource in time domain. In addition, the first resource and the first resource set may occupy a same frequency band or different frequency bands in frequency domain. This is not limited in this embodiment of this application.

The second resource set may include a part of resources in the first resource set. In other words, the second resource set may be a subset of the first resource set. Excluding the second resource set from the first resource set means excluding the part of resources from the first resource set, and remaining resources may be referred to as the third resource set.

If the first terminal device receives the NACK message, it indicates that the second terminal device does not successfully decode the data previously sent by the first terminal device. This occurs due to collision between the first resource used for transmitting the data and a resource used by another terminal device for transmitting data. Therefore, it may be considered that the first resource is used as a reference, and a subsequent resource that has a periodic correspondence with the first resource is excluded, and is no longer used for sidelink transmission of the first terminal device, to avoid subsequent resource collision.

In a possible implementation, the second resource set may be determined based on the first resource and a preset period. In other words, the first terminal device may exclude the second resource set from the first resource set based on the first resource and the preset period.

Optionally, the preset period includes:
all periods in a preconfigured period set;
a part of periods in the preconfigured period set;
a service period of the first terminal device; or
a period other than the service period of the first terminal device in the preconfigured period set.

Herein, the preconfigured period set may be, for example, preconfigured when a network device configures the resource pool. In a possible design, an allowed period may be predefined in the protocol. For example, a period in the period set may be in a unit of millisecond, and a specific value may include {0, (1:99), 100, 200, 300, 400, 500, 600, 700, 800, 900, 1000}. When configuring the resource pool, the network device may configure a resource pool identifier (identifier, ID) and an allowed period set corresponding to the resource pool identifier (identifier, ID). An allowed period set configured for each resource pool ID may include x of the foregoing predefined allowed periods. x≤16, and x is a positive integer. Therefore, the preconfigured period set may be a set of the allowed x periods corresponding to the resource pool preconfigured by the network device.

For example, the preconfigured period set may be denoted as {P₁, P₂, ..., Pₓ}. It should be noted that, if the first resource occupies only one slot, it is assumed that the first resource occupies a slot a; or if the first resource occupies a plurality of slots, it is assumed that a first slot in the plurality of slots occupied by the first resource is a slot a. If the first terminal device determines the second resource set based on the first resource and the preset period, the first terminal device may determine the second resource set based on the first slot (that is, the slot a) occupied by the first resource in time domain and the foregoing preconfigured period set. Therefore, the determined second resource set may include {a+cxP₁, a+cxP₂, ..., a+cxPₓ}.

A value of c may be traversed from 1 to C, and c is an integer. C is a preconfigured value.

FIG. 4 shows an example of excluding the second resource set from the first resource set based on the first resource and the preconfigured period set. The first resource shown in FIG. 4 occupies the slot a, the preconfigured period set includes {P₁, P₂}, and the second resource set determined based on this may include {a+cxP₁, a+cxP₂}. It should be understood that FIG. 4 shows only a part of resources in the second resource set as an example. Specifically, FIG. 4 shows a resource whose period is P₁ and whose value of c is 1, 2, or 3 in the second resource set, and a resource whose period is P₂ and whose value of c is 1 or 2 in the second resource set.

The part of periods in the preconfigured period set are subsets of the foregoing period set. For example, the subsets of the preconfigured period set may be denoted as {p₁, p₂, ...}. It may be understood that both p₁ and p₂ are elements in the period set {P₁, P₂, ..., Pₓ}.

For example, the preconfigured period set may be denoted as {p₁, p₂, ...}. It is assumed that a slot in which the first resource is located is the slot a. If the preset period is a subset of the foregoing preconfigured period set, the second resource set determined based on the subset of the period set may include {a+cxp₁, a+cxp₂, ...}.

The service period of the first terminal device may be specifically a period in which the first terminal sends the PSSCH, a period in which the first terminal sends the data, a period indicated by a period field in the control information (such as the SCI) on the first resource, and the like. The period field may be, for example, a resource reservation period (resource reservation period) field. A specific field name of the period field is not limited in this application.

The service period of the first terminal device is one of the x periods. For ease of differentiation and description, the service period of the first terminal device is P_{Tx}. It may be understood that P_{Tx}∈ {P₁, P₂, ..., Pₓ}.

It is assumed that the slot in which the first resource is located is the slot a. If the preset period is the service period P_{Tx} of the first terminal device, the second resource set determined based on the service period may include {a+cxP_{Tx}}.

If the preset period is the period other than the service period of the first terminal device in the preconfigured period set, the second resource set determined based on this may include a resource other than {a+cxP_{Tx}} in {a+cxP₁, a+cxP₂, ..., a+cxPₓ}.

It should be understood that, that the first terminal device excludes the second resource set from the first resource set based on a specific period may be determined by the terminal device, may be preconfigured by the network device, or may be predefined in the protocol. This is not limited in this embodiment of this application.

Based on the foregoing example, the first terminal device may determine a time domain location of a resource in the second resource set.

In frequency domain, the second resource set may correspond to a same frequency band as the first resource. For example, if the first resource occupies several sub-channels, the resource in the second resource set may also occupy the same sub-channels.

In this way, the first terminal device may determine a time-frequency location of the resource in the second resource set.

It may be understood that when the first terminal device determines the second resource set based on all periods in the preconfigured period set, almost all resources that may collide with another terminal device in the future can be excluded from the first resource set. Therefore, resource collision can be avoided to a greatest extent.

It should be noted that, the first terminal device may delete only a part of resources in the second resource set, or may delete all resources when excluding the second resource set from the first resource set based on the preset period. For example, it is assumed that the first terminal device may determine C excluded resources from the first resource set based on the period P₁. In this case, the terminal device may exclude only one resource closest to the first resource, that is, a resource that first arrives after the first resource and in the C resources. Alternatively, the first terminal device may exclude all the C resources from the first resource set. It should be understood that the first terminal device may exclude the C resources by performing an operation of excluding a resource from the first resource set for C times, or may exclude the C resources by performing an operation of excluding the C resources from the first resource set once. This is not limited in this embodiment of this application.

In a possible design, a value of C is Cᵣₑₛₑₗ. The parameter Cᵣₑₛₑₗ is a parameter related to resource reselection. In time domain, the first terminal device may be triggered to perform resource reselection (resource reselection) after Cᵣₑₛₑₗ service periods after the first resource. In an implementation, the first terminal device may start a counter after the first resource, and an initial value of the counter may be set to Cᵣₑₛₑₗ. Each time a service period elapses, a value of Cᵣₑₛₑₗ is decreased by 1, until the value of Cᵣₑₛₑₗ is decreased to 0 and a previous value of C is 1, and resource reselection may be triggered.

A specific value of the parameter Cᵣₑₛₑₗ or a related parameter used for determining a specific value of the parameter Cᵣₑₛₑₗ may be predefined, for example, predefined in the protocol, may be preconfigured by the network device, or may be determined by the terminal device, for example, configured by a higher layer of the terminal device, for example, configured by a MAC layer. This is not limited in this embodiment of this application.

It should be understood that the foregoing descriptions of the parameters C and Cᵣₑₛₑₗ, and the foregoing descriptions of a quantity of excluded resources and a quantity of times for excluding the resource are merely for ease of understanding, and should not constitute any limitation on this application.

After the first terminal device excludes the second resource set from the first resource set, resources in the remaining third resource set are limited, and resource insufficiency may occur. Therefore, the first terminal device may further perform, based on different conditions, the foregoing operation of excluding the second resource set from the first resource set.

As described above, the first resource may include the PSSCH and the PSCCH. In a process of excluding the second resource set from the first resource set, the first terminal device may also exclude a reserved resource indicated by the control information (for example, the SCI) in the PSCCH. The reserved resource may include, for example, a periodic reserved resource and/or a retransmission reserved resource. The periodic reserved resource may include but is not limited to a periodic resource of an initial transmission resource, a periodic resource of a retransmission reserved resource, and the like. Certainly, the reserved resource may further include another possible reserved resource indicated in the control information (for example, the SCI), for example, a resource indicated by using a frequency domain resource allocation (frequency resource assignment) field, or a resource indicated by using a time domain resource allocation (time resource assignment) field in the SCI. A specific reserved resource is not limited in this embodiment of this application.

Optionally, step 230 specifically includes: The first terminal device excludes the second resource set from the first resource set based on the received negative acknowledgment feedback message when a first preset condition is met.

In a first possible design, the first preset condition is that a service priority of the first terminal device is low.

As described above, a service priority level may correspond to a priority value. In this embodiment, the first terminal device may determine, based on a relationship between a priority value and a first priority threshold, whether to exclude the second resource set from the first resource set based on the received NACK message.

For example, it is assumed that a lower service priority level corresponds to a higher priority value. In this case, when the priority value of the first terminal device is higher than (or greater than) the preset first priority threshold, it may be considered that a service priority level of the first terminal device is low; or when the priority value of the first terminal device is lower than or equal to (or less than or equal to) the first priority threshold, it may be considered that the service priority level of the first terminal device is high. In other words, if the priority value of the first terminal device is higher than the preset first priority threshold, the first terminal device may exclude the second resource set from the first resource set based on the received NACK message.

Alternatively, when the priority value of the first terminal device is higher than or equal to (or greater than or equal to) the preset first priority threshold, it may be considered that the service priority level of the first terminal device is low; or when the priority value of the first terminal device is lower than (or less than) the first priority threshold, it may be considered that the service priority level of the first terminal device is high. In other words, if the priority value of the first terminal device is higher than or equal to the preset first priority threshold, the first terminal device may exclude the second resource set from the first resource set based on the received NACK message.

The first priority threshold may be identified by, for example, a specific priority value. For example, the priority value may be predefined, for example, defined in the protocol, or may be preconfigured by the network device. This is not limited in this embodiment of this application.

Optionally, the first priority threshold is configured by using signaling. For example, the network device may configure the first priority threshold by using the signaling. The first terminal device may locally prestore the first priority threshold based on the received signaling.

Optionally, the first priority threshold is the same as a preconfigured preemption threshold. The preemption threshold is configured by the network device by using higher-layer signaling (for example, an RRC message) in a current technology. That the first priority threshold is the same as the preemption threshold may be understood as that the first terminal device reuses the preemption threshold as the first priority threshold. In this way, signaling overheads caused by configuration can be reduced.

Certainly, the first priority threshold may alternatively be predefined, for example, predefined in the protocol. This is not limited in this embodiment of this application.

It should be understood that the service priority may alternatively be represented by the priority level, and the first priority threshold corresponding to the service priority may alternatively be a priority level threshold. When the priority level corresponding to the service priority of the first terminal device is lower than a preset priority level threshold, it may be considered that the service priority level of the first terminal device is low. Alternatively, the priority level threshold may be configured by using the signaling, may be determined by using the preconfigured preemption threshold, or may be predefined. This is not limited in this embodiment of this application.

Optionally, the first priority threshold is activated when a CBR is higher than a CBR threshold.

The CBR represents a congestion status of a channel, and may be represented by a percentage, and a value of the CBR may be within a range of [0, 1]. If the CBR is high, it indicates that a channel congestion degree is high, and terminal devices in a same resource pool should perform sidelink transmission on a more reliable resource, to avoid mutual interference. Therefore, a resource on which collision may occur may be excluded based on a feedback message. If the CBR is low, it indicates that a channel congestion degree is low, and the terminal device may randomly select a resource. Therefore, when the CBR is high, a terminal device with a low priority may be limited to excluding the second resource set from the first resource set based on the feedback message, and randomly selecting a resource from the obtained third resource set, and a terminal device with a high priority may randomly select a resource.

It may be understood that the first priority threshold is activated when the CBR is higher than a first CBR threshold. Further, when the service priority of the first terminal device is higher than the first priority threshold, the second resource set is excluded from the first resource set based on the received negative acknowledgment feedback message, that is, the operation of excluding the second resource set from the first resource set based on the received negative acknowledgment feedback message is performed based on the first preset condition that the CBR is higher than the first CBR threshold and the service priority of the first terminal device is higher than the first priority threshold. This is equivalent to a specific implementation in which the service priority of the first terminal device is low and the CBR is high in the following third possible design of the first preset condition.

In this embodiment of this application, if the service priority level of the first terminal device is low, the second resource set may be excluded from the first resource set based on the received NACK message, that is, random selection of resources in the first resource set is limited. In this way, resource collision can be mitigated to some extent. In addition, a large limitation on a resource of a terminal device with a high service priority level can be avoided, and the terminal device with the high service priority level can randomly select a resource to a greater extent.

In a second possible design, the first preset condition is that a channel environment is poor.

For example, a channel environment being poor may be that a channel is congested, and/or channel quality is poor.

Whether the channel is congested may be represented by, for example, the CBR. If the CBR is high, it indicates that the channel is congested. If the CBR is low, it indicates that the channel is not congested. That the CBR is high or low may be determined based on a value relationship between the CBR and the preset first CBR threshold. For example, when the CBR is higher than (or greater than) the preset first CBR threshold, it may be considered that the channel is congested; or when the CBR is lower than or equal to (or less than or equal to) the first CBR threshold, it may be considered that the channel is not congested. In other words, if the CBR is higher than the preset first CBR threshold, the first terminal device may exclude the second resource set from the first resource set based on the received NACK message.

Alternatively, when the CBR is higher than or equal to (or greater than or equal to) the preset first CBR threshold, it may be considered that the channel is congested; or when the CBR is lower than (or less than) the first CBR threshold, it may be considered that the channel is not congested. In other words, if the CBR is higher than or equal to the preset first CBR threshold, the first terminal device may exclude the second resource set from the first resource set based on the received NACK message.

When the CBR is high, it indicates that the channel is congested, and the terminal devices in the same resource pool should perform sidelink transmission on the more reliable resource, to avoid mutual interference. Therefore, the resource on which collision may occur may be excluded based on the feedback message.

It should be understood that the CBR may alternatively be replaced with another parameter that can be used for representing a channel congestion degree, or another parameter that can be used for representing channel quality. This is not limited in this embodiment of this application. It may be understood that, when the CBR is replaced with another parameter, a corresponding second CBR threshold may also be accordingly adjusted.

In still another possible design, the first preset condition may be that the service priority of the first terminal device is low and the CBR is high.

With reference to the foregoing manner of determining the service priority level and the foregoing manner of determining the CBR, it may be learned that the first preset condition may be specifically that the priority value of the service priority of the first terminal device is higher than (or higher than or equal to) the preset first priority threshold, and the CBR is higher than (or higher than or equal to) the first CBR threshold. Because the preset condition is described above, for brevity, details are not described herein again.

It should be noted that the first terminal device may alternatively send data on different resources for a plurality of times, and a resource used for data transmission each time may be referred to as a first resource. Correspondingly, the first terminal device also successively receives feedback messages for the previously sent data for a plurality of times.

In addition, the first terminal device may send data to different terminal devices on different first resources. The feedback message received by the first terminal device may be a feedback message from one or more second terminal devices. This is not limited in this embodiment of this application.

In this embodiment of this application, a time window may be predefined for the NACK message used by the first terminal device for resource exclusion. For ease of differentiation and description, the time window is denoted as a first time window. The first terminal device may exclude the second resource set from the first resource set based on a NACK message received in the predefined first time window. It may be understood that the first terminal device may receive one or more NACK messages in the first time window. Therefore, the first terminal device may exclude the second resource set from the first resource set based on the preset period and by using the one or more first resources as a reference.

In other words, if the first terminal device receives the NACK message in the predefined first time window, the first terminal device performs the operation of excluding the second resource set from the first resource set. If the NACK message received by the first terminal device is not received in the predefined first time window, the first terminal device may not perform the operation of excluding the second resource set from the first resource set.

It should be noted that when the first terminal device receives the NACK message in the predefined first time window, excluding the second resource set from the first resource set does not mean that the first terminal device does not receive the HARQ message in time outside the first time window.

The predefined first time window may include a time interval from a first slot to a second slot. In other words, a window length of the first time window is a time length from the first slot to the second slot. The first slot may be a slot n-kxY₁, and the second slot may be a slot n or n-Y₂.

The first time window determined based on the time interval from the first slot to the second slot may be represented as a time period within a range of [n-kxY₁, n], or a time period within a range of [n-kxY₁, n-Y₂]; a time period within a range of [n-kxY₁, n), or a time period within a range of [n-kxY₁, n-Y₂); or a time period within a range of (n-kxY₁, n], or a time period within a range of (n-kxY₁, n-Y₂]; or a time period within a range of (n-kxY₁, n), or a time period within a range of (n-kxY₁, n-Y₂).

For description of the parameter n, refer to the foregoing description. For brevity, details are not described herein again.

Y₁ and Y₂ may be predefined values, and are positive numbers. In a possible design, Y₁ may be a sensing window length T₀ in sensing-based resource selection, or may be a fixed time length, for example, 1 ms, 1.1 ms, or 0.1 ms. Values of Y₂ may be different in different resource selection manners. For a randomly selected terminal device, Y₂ may be processing time of a HARQ feedback message. For a sensing-based or partial sensing-based terminal device, Y₂ may be processing time of control information decoding and a reference signal received power (reference signal received power, RSRP) measurement result.

A value range of the parameter k may be 0<k≤C, and k is an integer. In a possible design, k=1. Therefore, the first slot may be n-Y₁. In another possible design, k=C, and C=Cᵣₑₛₑₗ. Therefore, the first slot may be n-CᵣₑₛₑₗxY₁.

It may be found that, when k=1, Y₁=T₀, and the second slot is n, the first time window is a time interval from a slot n-T₀ to the slot n, and the window length of the first time window is T₀, that is, the sensing window length.

Because the feedback message may be a HARQ message, the first time window corresponding to the feedback message may alternatively be referred to as a HARQ window.

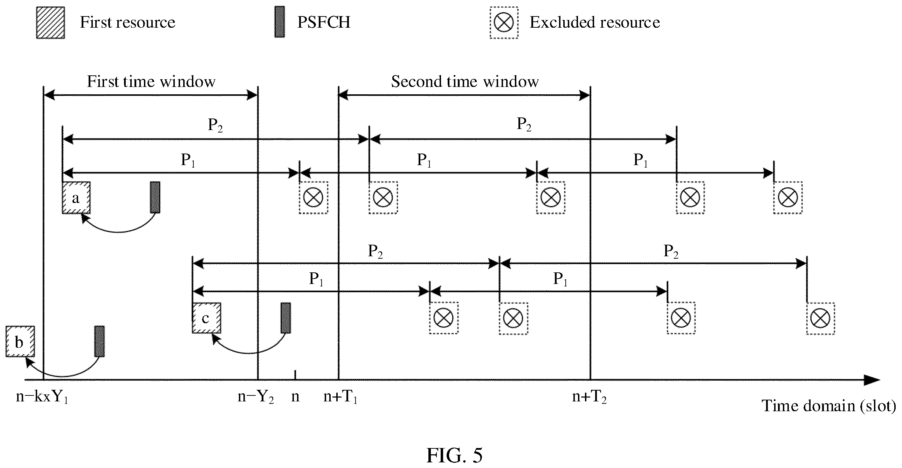

For ease of understanding, FIG. 5 shows an example of excluding the second resource set from the first resource set based on the NACK message received in the predefined first time window. FIG. 5 shows first resources whose identifiers are respectively a, b, and c. PSFCHs corresponding to the first resources whose identifiers are a and b fall within the predefined time window, and a PSFCH corresponding to the first resource whose identifier is c falls outside the first time window. Therefore, the first terminal device may exclude the second resource set from the first resource set based on the first resources whose identifiers are a and b and the preset period. FIG. 5 shows an example of excluding resources from the first resource set based on the period P₁ and the period P₂. It may be understood that the excluded resources shown in FIG. 5 may be a part of resources in the second resource set, or may include all resources in the second resource set. This is related to a quantity of resources excluded by the first terminal device from the first resource set. This is not limited in this embodiment of this application.

It should be further understood that the PSFCH shown in the figure is an example of a resource used for transmitting the feedback message, and should not constitute any limitation on this embodiment of this application. The PSFCH may alternatively be another resource that may be used for transmitting the feedback message.

In another implementation, if one of the first resource and a transmission resource of the feedback message falls within the predefined first time window, the second resource set may be excluded from the first resource set based on the first resource and the preset period.

For example, in the first resources whose identifiers are a, b, and c shown in FIG. 5, the PSFCHs corresponding to the first resources whose identifiers are a and b fall within the predefined first time window, and the first resource whose identifier is c falls within the first time window. Therefore, the second resource set may be excluded from the first resource set based on the first resources whose identifiers are a, b, and c and the preset period.

It should be noted that a slot n+T₁ to a slot n+T₂ in FIG. 5 are a time window in which the first terminal device selects a resource, and may be denoted as a second time window. The second time window may also be referred to as a resource selection window. A resource in the resource selection window may be referred to as a candidate resource set. In other words, in this embodiment of this application, the candidate resource set may include a resource in the third resource set in the second time window (or a time period).

In step 240, the first terminal device determines, based on the third resource set, a resource used for sidelink transmission.

The first terminal device may select, from the third resource set, the resource used for sidelink transmission. In a possible implementation, a physical layer in the first terminal device may report the third resource set to the higher layer, for example, the MAC layer. The higher layer may select, from the third resource set, a resource used by the first terminal device to perform sidelink transmission, and deliver the selected resource to the physical layer. In another possible implementation, a physical layer in the first terminal device may alternatively report, to the higher layer, a resource (that is, the candidate resource set described above) in the third resource set in the second time window. The higher layer may select, from the candidate resource set, a resource used by the first terminal device to perform sidelink transmission, and deliver the selected resource to the physical layer. The physical layer may then perform sidelink transmission based on the selected resource.

It should be noted that a resource in the third resource set may be used for sidelink transmission of the first terminal device, but the first terminal device does not necessarily use all resources in the third resource set to perform sidelink transmission.

For example, the third resource set includes 10 resources, but in a service period, one of the resources may be used as an initial transmission resource. After two resources are used for retransmission, an acknowledgment feedback message (for example, the ACK message) is received. Retransmission does not need to be performed subsequently. In this case, remaining seven resources are not used for actual transmission.

For another example, if the first terminal device selects a resource based on sensing or partial sensing, a resource used for sidelink transmission may be determined based on a re-evaluation mechanism and a preemption mechanism. In this case, a resource in the third resource set may be reserved for a terminal device with a higher priority for use, and is not used for sidelink transmission of the first terminal device.

It should be understood that the foregoing listed case in which the resource in the third resource set is not used for sidelink transmission of the first terminal device is merely an example. This embodiment of this application does not exclude a possibility that some new mechanisms are defined in a future protocol to further exclude a resource from the third resource set. In this case, the first terminal device may determine, based on a third resource set excluding the resource, a resource used for sidelink transmission.

It should be understood that, the first terminal device may select a resource in a random selection manner, or may select a resource in a sensing-based or partial sensing-based manner. This is not limited in this embodiment of this application. For a specific process in which the first terminal device selects a resource in the random selection manner, or in the sensing-based or partial sensing-based manner, refer to the current technology. For brevity, details are not described herein again.

In addition, the feedback message received by the first terminal device may not be a negative acknowledgment feedback message, or may not be a feedback message received within an effective range. In this case, the first terminal device may perform an operation in the following step 250.

In step 250, the first terminal device skips excluding a resource from the first resource set based on the first resource corresponding to the acknowledgment feedback message or the negative acknowledgment feedback message and the preset period when the first terminal device receives the acknowledgment message, or when the first terminal device receives the negative acknowledgment feedback message, but a distance between the second terminal device and the first terminal device is greater than a communication distance (for example, a maximum communication range (maximum communication range, MCR)).

Herein, that the first terminal device skips excluding a resource from the first resource set based on the first resource corresponding to the acknowledgment feedback message or the negative acknowledgment feedback message and the preset period may be that the first terminal device does not perform an operation of excluding a resource from the first resource set. Therefore, a resource that is in the first resource set and that is determined based on the first resource corresponding to the acknowledgment feedback message or the negative acknowledgment feedback message and the preset period is not excluded. Because the data transmitted on the first resource is successfully decoded by the second terminal device, there is a low probability that collision occurs on a resource determined based on the first resource and the preset period, and the resource may not be excluded from the first resource set.

As described above, the second terminal device may feed back, to the first terminal device based on the ACK-NACK mechanism and the NACK-only mechanism, whether the data is successfully decoded.

If the second terminal device feeds back, to the first terminal device based on the ACK-NACK mechanism, whether the data is successfully decoded, the second terminal device may send the ACK message to the first terminal device when the data is successfully decoded. The first terminal device may determine, based on the received ACK message, that the first resource is not used by another terminal device, or that no resource collision occurs on the first resource. Therefore, the first terminal device may skip excluding a resource from the first resource set based on the first resource corresponding to the acknowledgment feedback message and the preset period.

If the second terminal device feeds back, to the first terminal device based on the NACK-only mechanism, whether the data is successfully decoded, the second terminal device may send the NACK message to the first terminal device within the communication distance when the data from the first terminal device is not successfully decoded. If the distance between the second terminal device and the first terminal device is greater than the communication distance, the first terminal device may skip excluding a resource from the first resource set based on the first resource corresponding to the negative acknowledgment feedback message and the preset period even if the first terminal device receives the NACK message. In other words, when the NACK message received by the first terminal device is outside the MCR range, the first terminal device may ignore the NACK message.

It should be noted that, when sending the feedback message to the first terminal device, the second terminal device may carry location information of the second terminal device in the feedback message. In this way, the first terminal device may determine the distance between the first terminal device and the second terminal device, and may further determine whether the feedback message received from the second terminal device is a feedback message outside the communication distance.

When the distance between the terminal devices is large, receive power of the received feedback message is low, and it may be considered that mutual interference is small and may be ignored. Therefore, when the NACK message received by the first terminal device is a NACK message outside the MCR range, the first terminal device may ignore the NACK message.

It should be noted that, generally, the following agreement may be made: The second terminal device within the communication distance feeds back, for example, may feed back, based on the foregoing NACK-only mechanism or ACK-NACK mechanism, to the first terminal device, whether the data is successfully decoded; and the second terminal device outside the communication distance may not feed back, to the first terminal device, whether the data is successfully decoded.

It is assumed that the second terminal device outside the MCR range may alternatively feed back, to the first terminal device for the received data, whether the data is successfully decoded. In this case, even if the second terminal device sends the feedback message to the first terminal device, the first terminal device may ignore the feedback message. In this case, the operation of excluding the second resource set from the first resource set in step 230 may be performed when the first terminal device receives a negative acknowledgment feedback message from the second terminal device within the MCR range.

It should be noted that, being within the communication distance described above may be that the distance is less than or equal to the communication distance, and being outside the communication distance may be that the distance is greater than the communication distance. This is used as an example in this specification. Certainly, being within the communication distance may be that the distance is less than the communication distance, and being outside the communication distance may be that the distance is greater than or equal to the communication distance. This is not limited in embodiments of this application.

In another possible design, when the distance between the first terminal device and the second terminal device is large, receive power of the first terminal device for the feedback message from the second terminal device is low. A larger distance indicates a larger path loss. Therefore, when the receive power of the feedback message from the second terminal device is low, it may be considered that the distance between the first terminal device and the second terminal device is large. In an implementation, when the receive power of the first terminal device for the feedback message from the second terminal device is less than (or less than or equal to) a preset power threshold, it may be considered that the distance between the first terminal device and the second terminal device is large, and the feedback message may be ignored.

Therefore, in step 250, the solution that the first terminal device skips excluding the second resource set from the first resource set when the first terminal device receives the negative acknowledgment feedback message, but the distance between the second terminal device and the first terminal device is greater than the communication distance may alternatively be replaced with: The first terminal device skips excluding the second resource set from the first resource set when the first terminal device receives the negative acknowledgment feedback message, but receive power of the negative acknowledgment feedback message is less than (or less than or equal to) the preset power threshold. Correspondingly, the operation of excluding the second resource set from the first resource set in step 230 may be performed when the first terminal device receives the negative acknowledgment feedback message from the second terminal device, and receive power of the negative acknowledgment feedback message is greater than or equal to (or greater than) the preset power threshold.

It should be noted that each time the first terminal device receives the feedback message, the first terminal device may perform one or more steps in step 230 to step 250 based on the feedback message.

If the first terminal device receives the NACK message in a slot in the first time window, the second resource set is excluded from the first resource set. If the first terminal device receives the NACK message again in a subsequent slot in the first time window, the first terminal device may continue to exclude a resource based on resources obtained after last time the second resource set is excluded. In other words, the second resource set is a continuously changing resource set. If the first terminal device subsequently receives the ACK message, the first terminal device may perform sidelink transmission based on a resource obtained after last time the second resource set is excluded.

If the first terminal device receives the ACK message in a slot in the first time window, or receives the NACK message outside the communication distance, the first terminal device may skip excluding the second resource set from the first resource set. However, if the first terminal device receives the NACK message in a subsequent slot in the first time window, the first terminal device may continue to perform the operation of excluding the second resource set from the first resource set.

In conclusion, when it is determined, based on an ACK message, that a resource does not need to be excluded, but it is determined, based on a NACK message, that the resource needs to be excluded, or when there is a conflict between exclusion and non-exclusion of the resource, the resource may be preferentially excluded. In other words, a priority of exclusion is higher, or a priority of the NACK message is higher.

As time goes by, a quantity of excluded resources may increase. Available resources in a PDB decrease. In addition, a terminal device configured with a same resource pool as the first terminal device may perform resource reselection, or due to another reason, the terminal device no longer uses an original resource to perform sidelink transmission. In this case, the first terminal device may restore the previously excluded second resource set for subsequent sidelink transmission.

**In** step 260, the first terminal device restores a part or all of resources in the second resource set when a second preset condition is met, where the restored resource may be reused by the first terminal device to perform sidelink transmission.

For ease of differentiation and description, the restored resource in the second resource set is denoted as a fourth resource herein. It may be understood that the fourth resource is a part or all of resources in the second resource set. Restoring a part or all of resources in the second resource set may alternatively be replaced with restoring a fourth resource in the second resource set. In other words, after the fourth resource in the second resource set is restored, the fourth resource becomes a resource in the third resource set.

The first terminal device restoring the fourth resource may be specifically that the fourth resource is restored and included in the third resource set after being excluded from the first resource set. In other words, the fourth resource originally cannot be used for sidelink transmission of the first terminal device after being excluded from the first resource set, but after being restored, the fourth resource can be used for sidelink transmission of the first terminal device. In other words, restoring the fourth resource in the second resource set may alternatively be understood as excluding the fourth resource from the second resource set.

In a possible case, when the first terminal device meets the second preset condition, a resource in the second resource set and in time domain is later than time at which the first terminal device meets the second preset condition, and the first terminal device may restore all resources in the second resource set. In another possible case, a part of resources in the second resource set and in time domain are earlier than time at which the first terminal device meets the second preset condition, and a part of resources in time domain are later than time at which the first terminal device meets the second preset condition. When the first terminal device meets the second preset condition, the resources that are later than the time at which the first terminal device meets the second preset condition and that are in time domain may be restored.

In addition, the first terminal device may further restore a resource in the second resource set in different manners.

In a possible implementation, the first terminal device may restore a resource in the second resource set based on a predefined time window. In other words, the second terminal device may restore a resource in the predefined time window, to reuse the resource for sidelink transmission. The resource in the second resource set and in the predefined time window is the fourth resource.

The predefined time window may be, for example, the second time window described above, and includes a time length from the slot n+T₁ to the slot n+T₂. As described above, a resource in the candidate resource set and in time domain is located in the second time window. Therefore, after the first terminal device restores the fourth resource in the second time window, a total quantity of candidate single-slot resources in the candidate resource set is restored to Mₜₒₜₐₗ. Then, the first terminal device may select, from the Mₜₒₜₐₗ candidate single-slot resources, a resource used for sidelink transmission.

In another possible implementation, the first terminal device may separately restore a group of resources that are in the second resource set and that correspond to each first resource.

Herein, the group of resources corresponding to each first resource may be specifically a group of resources determined based on the first resource and the preset period. As described above, the first terminal device may send data on one or more first resources. A group of resources may be excluded from the first resource set based on the first resource corresponding to each NACK message. It may be understood that a group of resources excluded from the first resource set based on each first resource is a subset of the second resource set.

With reference to FIG. 5, a group of resources may be excluded from the first resource set based on the first resource whose identifier is a, the period P₁, and the period P₂, as shown in an upper part of FIG. 5; and another group of resources may be excluded from the first resource set based on the first resource whose identifier is c, the period P₁, and the period P₂, as shown in a lower part of FIG. 5.

The first terminal device may start timing based on a slot in which each first resource is located, and after C service periods, restore the excluded resource.

For example, in FIG. 5, in the fourth resource excluded based on the first resource whose identifier is a, a resource in the first C service periods is excluded, but a resource after the C service periods is restored. In the fourth resource excluded based on the first resource whose identifier is b, a resource in the first C service periods is excluded, but a resource after the C service periods is also restored. The restored resource may also be used for sidelink transmission again. It can be learned that because the two first resources are located at different locations in time domain, time at which the corresponding fourth resources is restored is different. For example, the fourth resource excluded based on the first resource whose identifier is b is restored before the fourth resource excluded based on the first resource whose identifier is a.

Herein, a value of C may be Cᵣₑₛₑₗ. In other words, the first terminal device may restore the fourth resource after triggering resource reselection.

Optionally, the second preset condition includes but is not limited to the following examples:
condition (i): duration of the first terminal device after the first resource reaches a first preset threshold;
condition (ii): a quantity of remaining resources in the candidate resource set is less than a second preset threshold;
condition (iii): remaining PDBs reach a third preset threshold; or
condition (iv): a CBR is less than or equal to a fourth preset threshold.

The following describes the foregoing conditions in detail.

### Condition (i):

In a possible implementation, for example, the duration experienced by the first terminal device may be counted by using a timer. For example, the first terminal device may start a timer in a slot in which the first resource is located. When duration counted by the timer reaches the first preset threshold, it indicates that the duration experienced by the first terminal device after the slot in which the first resource is located reaches the first preset threshold.

Optionally, the first preset threshold is an integer multiple of a service period. For example, the service period is denoted as Pₜₓ, and the first preset threshold may be, for example, CxPₜₓ. As described above, a value of C may be Cᵣₑₛₑₗ.

In another possible implementation, the duration experienced by the first terminal device may be counted based on the service period of the first terminal device. For example, the first terminal device may start a counter in a slot in which the first resource is located. When the counter reaches a count value, it may be considered that duration of the first terminal device after a time unit in which the first resource is located reaches the first preset threshold.

Optionally, the count value may be a parameter Cᵣₑₛₑₗ. The first terminal device may start the counter in a slot in which the first resource is located. The counter may start counting from the parameter value Cᵣₑₛₑₗ. Each time a service period elapses, the value of Cᵣₑₛₑₗ is decreased by 1, until the value of Cᵣₑₛₑₗ is decreased to 0 and a previous value of Cᵣₑₛₑₗ is 1. It may be considered that the duration of the first terminal device after the slot in which the first resource is located reaches the first preset threshold. In this implementation, the count value may be understood as another representation manner of the first preset threshold.

### Condition (ii):

The candidate resource set may be specifically a resource in the third resource set and in the predefined second time window. As described above, the second time window may be a time interval from the slot n+T₁ to the slot n+T₂.

It may be understood that if resource exclusion is not performed, a total quantity of resources in the candidate resource set (that is, resources in the first resource set and in the predefined second time window) is M_{total.} In this embodiment of this application, resource exclusion based on a feedback message is provided, and therefore a total quantity of resources in the candidate resource set (that is, a resource in the third resource set and in the predefined second time window) is reduced. When a quantity of remaining candidate resources in the candidate resource set is less than the preset second preset threshold, a part or all of resources in the second resource set may be restored. Herein, the resource in the candidate resource set may be a candidate single-slot resource in NR, or may be a candidate single-subframe resource in LTE, or may be a resource of another granularity defined based on a future protocol. This is not limited in embodiments of this application.

Herein, the second preset threshold may be, for example, X%xMₜₒₜₐₗ. X may be a predefined value, for example, predefined in a protocol, or may be preconfigured by the network device. This is not limited in embodiments of this application. For example, a value of X may be 5, 10, 20, or 30.

In an example, if the second preset condition is the condition ii, and the second preset threshold is 10%xMₜₒₜₐₗ, it may indicate that a part or all of resources in the second resource set are restored when a quantity of resources in the candidate resource set is less than 10%XMₜₒₜₐₗ.

### Condition (iii):

If the remaining packet delay budget is small, it may be considered that there is no remaining available resource in the remaining packet delay budget. In a possible implementation, when the remaining packet delay budget reaches the third preset threshold, it may be considered that the remaining packet delay budget is small. In a possible design, the third preset threshold is 10%xPDB, or is close to 0. A specific value of the third preset threshold is not limited in this application.

### Condition (iv):

As described above, when the CBR is high, the first terminal device may exclude the second resource set from the first resource set when receiving the NACK message, that is, perform a resource exclusion operation. The first terminal device may exclude, based on the operation, a resource on which collision may occur. Terminal devices in a same resource pool may perform sidelink transmission on a more reliable resource.

However, when the CBR is low, the first terminal device may restore a part or all of resources in the second resource set, to reuse the resources to perform sidelink transmission of the first terminal device.

In a possible implementation, when the CBR is less than or equal to (or less than) the fourth preset threshold, it may be considered that the CBR is low, and a part or all of resources in the second resource set may be restored. For example, the fourth preset threshold herein may be the same as or different from the first CBR threshold described above. This is not limited in embodiments of this application.

In a possible design, an upper limit and a lower limit of the CBR may be defined. For example, the first terminal device may restore a part or all of resources in the second resource set when the CBR is between the fourth preset threshold and a fifth preset threshold. For example, the fourth preset threshold is denoted as W₁, and the fifth preset threshold is denoted as W₂, and 0≤W₂<W₁≤1. When the CBR falls within a range of [W₂, W₁], or when the CBR falls within a range of (W₂, W₁), the first terminal device may restore a part or all of resources in the second resource set.

It should be understood that the CBR in the condition iv may alternatively be replaced with another parameter that can be used for representing a channel congestion degree or channel quality, and the corresponding fourth preset threshold and fifth preset threshold may be accordingly adjusted. This is not limited in embodiments of this application.

The foregoing example of the second preset condition is merely an example, and should not constitute any limitation on this application. A preset condition for restoring a part or all of resources in the second resource set may be defined in the protocol. The preset condition may include, for example, one or more of the second preset condition listed above, and may further include another possible condition. This is not limited in embodiments of this application.

In addition, the preset condition for restoring a part or all of resources in the second resource set described above may also be referred to as a preset condition for triggering resource reselection (resource reselection). In this case, the first terminal device first triggers resource reselection when the preset condition is met, and then restores a part or all of resources in the second resource set.

As described above, restoring a part or all of resources in the second resource set is also restoring resources in the first resource set from another perspective. The first terminal device may select, based on the restored first resource set, a resource used for sidelink transmission. A specific implementation in which the first terminal device selects a resource based on the restored first resource set is similar to the foregoing specific implementation in which the first terminal device selects a resource based on the third resource set. For brevity, details are not described herein again.

Based on the foregoing solution, when receiving the negative acknowledgment feedback message, the first terminal device may exclude a resource on which collision may occur from the first resource set that can be originally used for sidelink transmission, and select, from the third resource set obtained after resource exclusion, a resource used for sidelink transmission. In this way, the first terminal device performs sidelink transmission on a reliable resource, to mitigate possible resource collision between a plurality of terminal devices in a same resource pool. Therefore, mutual interference caused by resource collision of the plurality of terminal devices can be reduced. This facilitates successful data receiving and decoding, and further helps improve transmission reliability of a communication system and system performance.

Unsuccessful receiving or unsuccessful decoding may occur due to resource overlapping, resource collision, interference, and the like. Periodic unsuccessful receiving or periodic unsuccessful decoding may occur due to periodic resource overlapping, resource collision, interference, and the like. It is considered that there may be a possibility of misdetermination of excluding a resource based on only once receiving of the negative acknowledgment feedback message, for example, data may be successfully decoded but the acknowledgment feedback message is not successfully received by the first terminal device, or for another example, data is not successfully decoded, but the second terminal device does not learn that the data is sent to the second terminal device, and therefore the second terminal device does not send the negative acknowledgment feedback message to the first terminal device. Based on the possibility of the foregoing misdetermination, in this embodiment of this application, a plurality of possible implementations are provided for the first terminal device determining whether to exclude the second resource set from the first resource set.

For ease of understanding, several terms used in the following plurality of implementations are briefly described herein.

First, for ease of description, a quantity of data is mentioned in many places in the following. In this embodiment, a quantity of data is related to a quantity of transmission times, and data transmitted each time may be referred to as one piece of data.

Second, a feedback resource corresponds to data. Specifically, there is a feedback resource at a time domain location after each transmission of data, and a transmit end (for example, a first terminal device) may receive a feedback message on the feedback resource. Therefore, the feedback message received on the feedback resource may be referred to as a feedback message associated with data, or a feedback message corresponding to data. A time unit in which the feedback resource is located may also be referred to as a feedback occasion, or may be referred to as a feedback opportunity, a feedback message receiving occasion, a feedback message receiving opportunity, a feedback channel receiving occasion, a feedback channel receiving occasion, or the like. In a protocol, the feedback occasion may be represented as a PSFCH occasion or a PSFCH reception occasion.

The feedback resource can be associated with data. The transmit end (for example, the first terminal device) may determine, based on a feedback message received on a feedback resource associated with data, whether the data is successfully decoded. Because the feedback message may be received on the feedback resource, it may also be referred to as that the feedback message may be associated with data.

Third, the first terminal device may transmit data on a first resource for a plurality of times. The data transmitted by the first terminal device for a plurality of times may include initially transmitted data and retransmitted data. For example, the first terminal device may carry data by using a transport block (transport block, TB), and one TB may be transmitted in each data transmission. A quantity R of transmission times may be configured for valid data carried in each TB, and R is an integer greater than 1. In other words, valid data carried in each TB may be transmitted for a maximum of R times. Data transmitted for a first time is initially transmitted data, and data transmitted for a second time to an R^{th} time is retransmitted data. It may be understood that valid data carried by TBs transmitted in a same service period is the same, and valid data carried by TBs transmitted in different service periods is different. Therefore, valid data carried in TBs obtained after two adjacent transmissions may be the same or may be different. For example, initially transmitted data is the same as first retransmitted data, and last retransmitted data is different from next initially transmitted data.

For ease of description, data mentioned in the following represents valid data carried in a TB. It should be understood that the valid data may be a MAC protocol data unit (protocol data unit, PDU) or data (data) in a protocol. A concept of valid data is introduced herein only for ease of differentiation, and should not constitute any limitation on this embodiment of this application. For example, it is assumed that time at which the first terminal device transmits data for a plurality of times on the first resource and a feedback message corresponding to data transmitted each time are shown in the following table.

**Table 1**

| Time | t1 | t1+t2 | t1+t3 | t1+P_{Tx} | t1+t2+P _{TX} | t1+2xP_{T x} | t1+t2+2x P_{TX} | t1+t3+2x P_{Tx} | t1+t4+2x P_{Tx} | t1+3xP_{T x} | t1+t2+3x P_{Tx} |
|---|---|---|---|---|---|---|---|---|---|---|---|
| Send | Data 1-1 | Data 1-2 | Data 1-3 | Data 2-1 | Data 2-2 | Data 3-1 | Data 3-2 | Data 3-3 | Data 3-4 | Data 4-1 | Data 4-2 |
| Time | t1+f1 | t1+t2+f 2 | t1+t3+f 3 | t1+P_{Tx}+f4 | t1+t2+P _{Tx}+f5 | t1+2xP_{T x}+f6 | t1+t2+2x P_{Tx}+f7 | t1+t3+2x P_{Tx}+f8 | t1+t4+2x P_{Tx}+f9 | t1+3xP_{T x}+f10 | t1+t2+3x P_{Tx}+f11 |
| Feed back | Negativ e acknow ledgme nt feedbac k messag e 1-1 | Negativ e acknow ledgme nt feedbac k messag e 1-2 | Ackno wledgm ent feedbac k messag e 1-3 | Negative acknowle dgment feedback message 2-1 | Ackno wledgm ent feedbac k messag e 2-2 | Negativ e acknow ledgme nt feedbac k messag e 3-1 | Negative acknowle dgment feedback message 3-2 | Negative acknowle dgment feedback message 3-3 | Acknowl edgment feedback message 3-4 | Negativ e acknow ledgme nt feedbac k messag e 4-1 | Acknowl edgment feedback message 4-2 |

It may be understood that a terminal device determines, based on a feedback message, whether to perform retransmission. In terms of time, the feedback message of data is located before next data transmission in time domain. For example, the feedback message of the data 1-1 is located before the data 1-2 in terms of time. For example, the feedback message of the data 2-1 is located before the data 1-3 in terms of time.

In a possible design, f1=f2=f3=...=f11. In other words, an interval between a feedback resource associated with data transmitted each time and a time domain location in which the data is located is fixed. Because the data may be transmitted based on a service period, the feedback resource associated with the data may also be periodic, and a period of the feedback resource is also the service period.

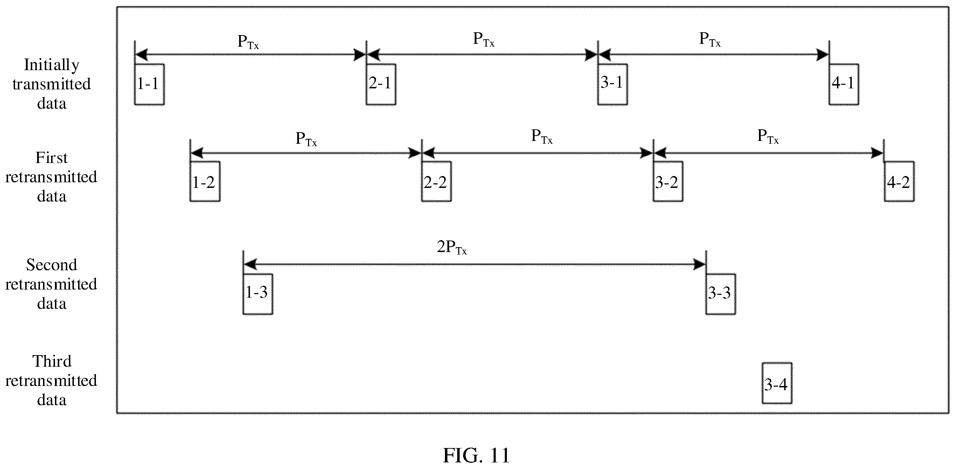

FIG. 11 shows time domain locations and frequency domain locations of a plurality of pieces of data listed in Table 1. A horizontal axis represents time domain. A time unit in time domain includes a symbol (symbol), a slot (slot), a mini-slot (mini-slot), a subframe (sub-frame), a radio frame (frame), and the like. A vertical axis represents frequency domain. A unit in frequency domain includes a resource unit (resource element, RE), a resource block (resource block, RB), a sub-channel (subchannel), a resource pool (resource pool), a bandwidth part (bandwidth part, BWP), a carrier (carrier), and the like. FIG. 11 shows four rows of data, and each row of data may be data transmitted on a same frequency domain resource.

As shown in FIG. 11, a first row of data is initially transmitted data, and includes the data 1-1, the data 2-1, the data 3-1, and the data 4-1. There is an interval of one service period P_{Tx} between every two adjacent pieces of data.

A second row of data is first retransmitted data, and includes the data 1-2, the data 2-2, the data 3-2, and the data 4-2. Because the negative acknowledgment feedback message is received for all initially transmitted data, each initially transmitted data in the first row is retransmitted for the first time. There is an interval of one service period P_{Tx} between every two adjacent pieces of retransmitted data.

A third row of data is second retransmitted data, and includes the data 1-3 and the data 3-3. Because the acknowledgment feedback message is received for the data 2-2 and the data 4-2 in the first retransmitted data, only the data 1-2 and the data 3-2 in the second row of retransmission data are retransmitted again. There is an interval of two service periods 2P_{Tx} between the data 1-3 and the data 3-3.

A fourth row of data is third retransmitted data, and includes the data 3-4. Because the acknowledgment feedback message is received for the data 1-3 in the second retransmitted data, only the data 3-3 in the fourth row of retransmission data is retransmitted again.

The acknowledgment feedback message is received on a feedback resource associated with the data 1-3, the data 2-2, the data 3-4, and the data 4-2. The acknowledgment feedback message indicates that the data 1-3, the data 2-2, the data 3-4, and the data 4-2 are successfully decoded. The acknowledgment feedback message is also received on the feedback resource associated with the data 3-4, and the transmitted data in the figure is successfully decoded.

It should be understood that the plurality of pieces of data described above with reference to FIG. 11 are all data carried on the first resource, or data transmitted on the first resource.

If feedback associated with data transmitted each time is based on a fixed interval between time domain locations in which the data is located, a feedback feedback resource associated with the data is also periodic.

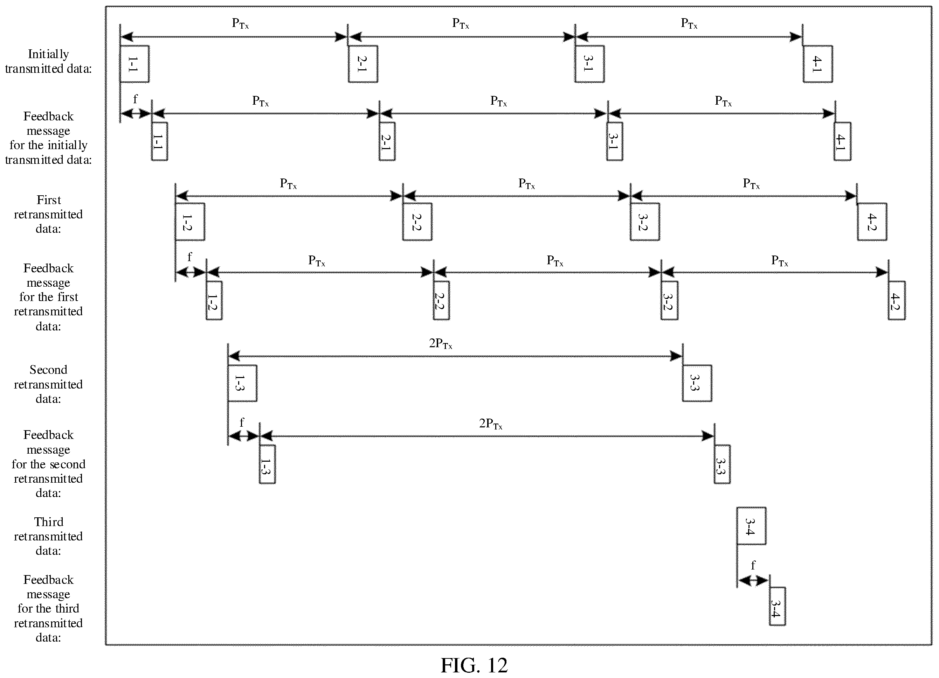

FIG. 12 shows an example of time domain locations of the plurality of pieces of data and time domain locations of feedback messages associated with the plurality of pieces of data listed in Table 1. It should be understood that the time domain location of the feedback message is a feedback resource on which the feedback message is located. The feedback resource may be determined in advance, but the feedback message may not be received on each feedback resource. Because a receive end (for example, a second terminal device) of data does not successfully decode control information or data information, the receive end does not learn that the data is sent to the receive end. Therefore, no feedback message is sent for the data. A transmit end (for example, the first terminal device) of data may receive no feedback message on the feedback resource. This case is similar to that of receiving a negative acknowledgment feedback message by the first terminal device, and it can be determined that the data is not successfully decoded. Therefore, if the first terminal device receives no feedback message on the feedback resource, it may also be considered that the first terminal device receives the negative acknowledgment feedback message.

As shown in FIG. 12, the time domain locations of the plurality of pieces of data in FIG. 12 are the same as those shown in FIG. 11. Because a time interval between each piece of data and a feedback message associated with the data is fixed, for example, the time interval is f, and f=f1=f2=f3=...=f11, feedback messages associated with all data may be periodically arranged.

For the feedback message 1-1, the feedback message 2-1, the feedback message 3-1, and the feedback message 4-1 that are respectively associated with the data 1-1, the data 2-1, the data 3-1, and the data 4-1, every two adjacent feedback messages are at an interval of one service period P_{Tx}. For the feedback message 1-2, the feedback message 2-2, the feedback message 3-2, and the feedback time 4-2 that are respectively associated with the data 1-2, the data 2-2, the data 3-2, and the data 4-2, every two adjacent feedback messages are at an interval of one service period P_{Tx}. The feedback message 1-3 and the feedback message 3-3 that are respectively associated with the data 1-3 and the data 3-3 are at an interval of two service periods 2P_{Tx}. A time arrangement of a plurality of feedback messages is the same as a time arrangement of the plurality of pieces of data described above with reference to the figure. For brevity, details are not described herein again.

In another possible design, f1, f2, f3, ..., and f11 are not completely the same. In other words, an interval between a feedback message associated with data transmitted each time and a time domain location in which the data is located is not fixed, may be the same, or may be different. Therefore, although the data is transmitted based on a service period, the feedback message associated with the data is not necessarily periodic. However, the first terminal device learns an association relationship between a data message and the feedback message in time domain. Therefore, the first terminal device learns where to receive the feedback message.

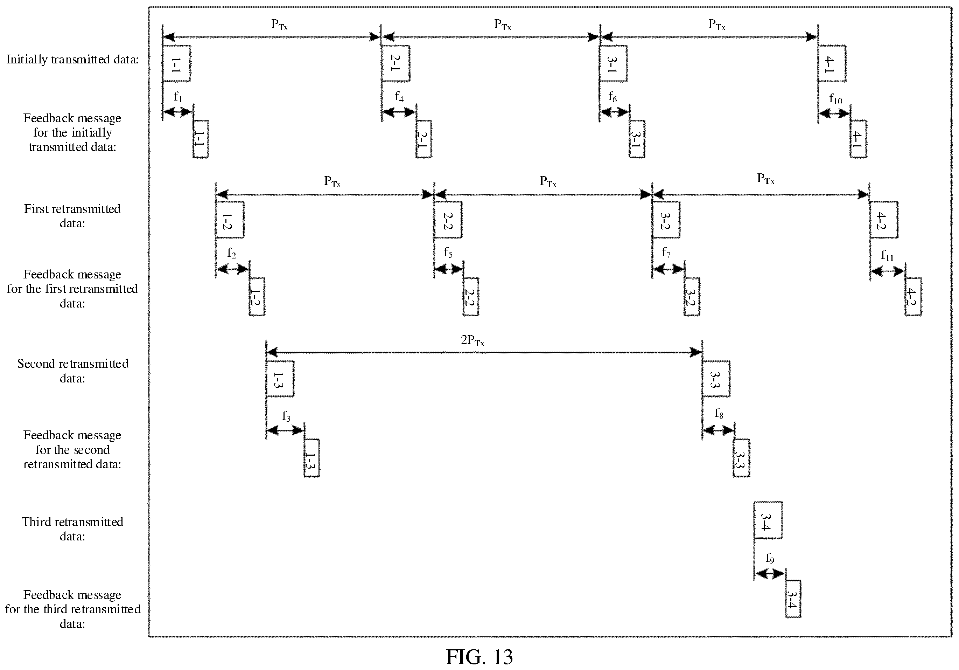

FIG. 13 shows another example of time domain locations of the plurality of pieces of data and time domain locations of feedback messages associated with the plurality of pieces of data listed in Table 1. Time intervals between data shown in FIG. 13 and feedback messages associated with the data are not completely the same, and there are at least two different values in f1 to f11 in the figure.

For a plurality of pieces of initially transmitted data, a transmission time interval between every two adjacent pieces of initially transmitted data may be a service period. For example, a transmission time interval between the data 1 and the data 2 is a service period P_{Tx}. For retransmitted data transmitted for an r^{th} (where 1≤r≤R-1) time, a transmission time interval between every two adjacent pieces of retransmitted data may also be a service period. For example, a time interval between an r^{th} retransmission of the data 1 and an r^{th} retransmission of the data 2 is a service period P_{Tx}. It should be understood that if r=0, the r^{th} transmission is an initial transmission. The following mainly introduces the r^{th} transmission for the retransmitted data, and the r^{th} transmission may indicate the r^{th} retransmission.

For a time interval between a plurality of pieces of initially transmitted data and a time interval between a plurality of pieces of retransmitted data, refer to FIG. 11 to FIG. 13. For brevity, details are not described herein again.

Fourth, for ease of description, concepts of non-contiguous adjacency and contiguous adjacency are introduced in the following. As shown in FIG. 12 and FIG. 13, the data sent by the first terminal device on the first resource includes the data 1-1, the data 1-2, the data 1-3, the data 2-1, the data 2-2, the data 3-1, the data 3-2, the data 3-3, the data 3-4, the data 4-1, and the data 4-2. The feedback message received by the first terminal device includes: the feedback message 1-1, the feedback message 1-2, the feedback message 1-3, the feedback message 2-1, the feedback message 2-2, the feedback message 3-1, the feedback message 3-2, the feedback message 3-3, the feedback message 3-4, the feedback message 4-1, and the feedback message 4-2.

Two or more adjacent transmissions in terms of time may be referred to as contiguous adjacent transmissions.

For example, an initial transmission and a first retransmission of data, an r^{th} retransmission and an (r+1)^{th} retransmission of data, or a last retransmission of data and an initial transmission of a next piece of data are contiguously adjacent. For example, the data 1-1 and the data 1-2 shown in FIG. 12 and FIG. 13 are contiguously adjacent, the data 1-2 and the data 1-3 are contiguously adjacent, and the data 1-3 and the data 2-2 are also contiguously adjacent. For brevity, details are not listed herein one by one.

Correspondingly, feedback messages associated with contiguous adjacent data are also contiguously adjacent. For example, feedback messages corresponding to an initial transmission and a first retransmission of data, feedback messages corresponding to an r^{th} retransmission and an (r+1)^{th} retransmission of data, or feedback messages corresponding to a last retransmission and an initial transmission of a next piece of data may be referred to as being contiguously adjacent.

For example, the feedback message 1-1 and the feedback message 1-2 shown in FIG. 12 and FIG. 13 are contiguously adjacent, the feedback message 1-2 and the feedback message 1-3 are contiguously adjacent, the feedback message 1-3 and the feedback message 2-2 are also contiguously adjacent. For brevity, details are not listed herein one by one.

Any two or more pieces of data in initially transmitted data, and any two or more pieces of data in data retransmitted for an r^{th} time are non-contiguous adjacent data.

For example, initial transmissions of a previous piece of data and a next piece of data, initial transmissions of a previous piece of data and a subsequent piece of data, r^{th} retransmissions of a previous piece of data and a next piece of data, or r^{th} retransmissions of a previous piece of data and a subsequent piece of data may be referred to as being non-contiguously adjacent. For example, the data 1-1 and the data 2-1 shown in FIG. 12 and FIG. 13 are non-contiguously adjacent. The data 1-2 and the data 2-2 are non-contiguously adjacent. The data 1-3 and data 3-3 are also non-contiguously adjacent. The data 1-1 and the data 3-1 are also non-contiguously adjacent. The data 1-2 and the data 3-2 are also non-contiguously adjacent.

Correspondingly, feedback messages associated with non-contiguous adjacent data may also be referred to as being non-contiguously adjacent. For example, feedback messages associated with any two or more pieces of data in initially transmitted data are non-contiguously adjacent. Any two or more pieces of data in data retransmitted for an r^{th} time are non-contiguous adjacent data, and feedback messages associated with the non-contiguous adjacent data are also non-contiguously adjacent.

For example, the feedback message 1-1 and the feedback message 2-1 shown in FIG. 12 and FIG. 13 are non-contiguously adjacent, the feedback message 1-2 and the feedback message 2-2 are non-contiguously adjacent, and the feedback message 1-3 and the feedback message 3-3 are also non-contiguously adjacent. The feedback message 1-1 and the feedback message 3-1 are also non-contiguously adjacent. The feedback message 1-2 and the feedback message 3-2 are also non-contiguously adjacent.

In the subsequent description, both contiguous adjacency and non-contiguous adjacency are denoted as adjacency.

Fifth, a first time range is defined in the following embodiment. The first time range may be determined based on at least two of a start location, an end location, and a time length.

Optionally, the start location of the first time range is determined based on at least one of the following:
a time unit in which a first feedback resource corresponding to data transmitted on the first resource is located;
a time unit in which a feedback resource corresponding to a first piece of data that is not successfully decoded in the data transmitted on the first resource is located;
a first time unit in the first resource;
a time unit in which a first piece of data that is not successfully decoded in the data transmitted on the first resource is located;
a time unit in which any feedback resource corresponding to the data transmitted on the first resource is located;
a time unit in which a feedback resource corresponding to any piece of data that is not successfully decoded in the data transmitted on the first resource is located;
any time unit in the first resource; or
a time unit in which any piece of data that is not successfully decoded in the data transmitted on the first resource is located.

With reference to FIG. 12 and FIG. 13, the foregoing several items are described by using an example. The feedback resource on which the feedback message 1-1 is located may correspond to the first feedback resource corresponding to the data transmitted on the first resource. It may be understood that, if the data 1-1 is not successfully decoded, the feedback resource on which the feedback message 1-1 is located may further correspond to the feedback resource corresponding to the first piece of data that is not successfully decoded and that is transmitted on the first resource. If the first terminal receives no feedback message on the feedback resource associated with the data 1-1, the feedback resource may also correspond to the feedback resource corresponding to the first piece of data that is not successfully decoded and that is transmitted on the first resource.

The feedback resource on which the feedback message 2-1 is located may correspond to any feedback resource associated with the data transmitted on the first resource. It may be understood that, if the data 2-1 is not successfully decoded, the feedback resource on which the feedback message 2-1 is located may further correspond to the feedback resource corresponding to any piece of data that is not successfully decoded in the data transmitted on the first resource. If the first terminal receives no feedback message on the feedback resource associated with the data 2-1, the feedback resource may also correspond to the feedback resource corresponding to any piece of data that is not successfully decoded in the data transmitted on the first resource. It should be understood that any feedback resource associated with the data transmitted on the first resource may be a feedback resource associated with any data in FIG. 12 and FIG. 13, and any data that is not successfully decoded and that is transmitted on the first resource may also be any data that is not successfully decoded in FIG. 12 and FIG. 13. For brevity, examples are not provided for description herein one by one.

Similarly, the data 1-1 may correspond to the first time unit in the first resource. It may be understood that, if the data 1-1 is not successfully decoded, a time unit in which the data 1-1 is located may further correspond to the time unit in which the first piece of data that is not successfully decoded in the data transmitted on the first resource is located. If the first terminal receives no feedback message on the feedback resource associated with the data 1-1, a time unit in which the data 1-1 is located may also correspond to the time unit in which the first piece of data that is not successfully decoded in the data transmitted on the first resource is located.

The data 2-1 may correspond to any time unit in the first resource. It may be understood that, if the data 2-1 is not successfully decoded, a time unit in which the data 2-1 is located may further correspond to the time unit in which any piece of data that is not successfully decoded in the data transmitted on the first resource is located. If the first terminal device receives no feedback message on the feedback resource associated with the data 2-1, a time unit in which the data 2-1 is located may also correspond to the time unit in which any piece of data that is not successfully decoded in the data transmitted on the first resource is located.

The start location of the first time range may be determined based on any one of the foregoing items, or may be determined based on a combination of two or more items. For example, the start location of the first time range may be determined based on the first time unit in the first resource and the time unit in which the first piece of data that is not successfully decoded is located. In this case, the start location of the first time range may be, for example, a location between the first time unit in the first resource and the time unit in which the first piece of data that is not successfully decoded is located.

Optionally, the end location of the first time range is determined based on at least one of the following:
time at which resource selection is triggered;
time at which resource reselection is triggered;
time at which re-evaluation is triggered;
time at which preemption evaluation is triggered;
time at which a feedback message is received; or
a periodic reserved resource in the first resource.

In this embodiment, the first terminal device transmits data on the first resource. The periodic reserved resource of the first resource may be referred to as a fifth resource. Before transmitting data on the fifth resource, the first terminal determines, based on a feedback message received on a feedback occasion associated with the data transmitted on the first resource, whether to transmit the data on the fifth resource.

It is assumed that a time unit in which the fifth resource is located is a time unit m, and the first terminal device may determine, in a time unit m-T₃ and based on the feedback message received on the feedback resource associated with the data transmitted on the first resource, whether to use the fifth resource to transmit the data. In other words, the first terminal device triggers preemption evaluation in the time unit m-T₃ or before the time unit m-T₃. Alternatively, the first terminal device triggers re-evaluation in the time unit m-T₃ or before the time unit m-T₃. Alternatively, the first terminal device triggers resource reselection in the time unit m-T₃ or before the time unit m-T₃. The resource reselection is deleting the fifth resource, and reselecting, from a candidate resource set, a resource used for sidelink transmission. The time at which resource selection is triggered is time at which a higher layer of the first terminal device determines to select a resource for data transmission.

T₃ may be processing time of the terminal device defined in a protocol, and T₃ may specifically include processing time of at least one of the following:
triggering resource selection by the terminal device;
completing a sensing process by the terminal device;
receiving control information and demodulating the control information by the terminal device;
selecting a resource by a MAC layer; and
packing a TB by the MAC layer.

For example, the control information includes SCI or a MAC CE.

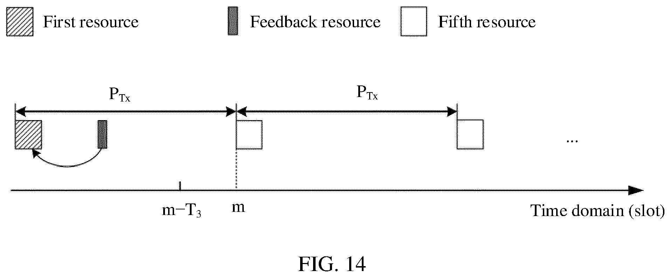

FIG. 14 shows a relationship between the first resource and the fifth resource, the time at which resource selection is triggered, the time at which resource reselection is triggered, the time at which re-evaluation is triggered, and the time at which preemption evaluation is triggered. By way of example, and not limitation, a slot is used as an example of a time unit in FIG. 14. A start location of the fifth resource in time domain is a time unit m, and a time unit obtained after T₃ time units before the time unit m are the time at which resource selection is triggered, the time at which resource reselection is triggered, the time at which re-evaluation is triggered, or the time at which preemption evaluation is triggered.

For the time at which the feedback message is received, refer to FIG. 12 and FIG. 13. The end location of the first time range may be, for example, determined based on a feedback resource in which any feedback message shown in FIG. 12 and FIG. 13 is located, such as the feedback message 1-1, the feedback message 1-2, and the feedback message 1-3. This may correspond to the time at which the feedback message is received.

The end location of the first time range may be determined based on any one of the foregoing items, or may be determined based on a combination of two or more items. For example, the end location of the first time range is determined based on the periodic reserved resource in the first resource and the time at which resource selection is triggered. In this case, the end location of the first time range may be, for example, a location between a start location of the periodic reserved resource in the first resource and the time at which resource selection is triggered.

Optionally, the time length Z (Z>0) of the first time range is a value configured by a network device, a value defined in a protocol, or a value agreed upon by the first terminal device and the network device.

A time domain location of the first time range may be determined based on at least two of the start location, the end location, and the time length of the first time range. Alternatively, the first time range may be a contiguous time segment at any time location determined based on the time length Z.

It should be noted that "determined based on... (for example, denoted as a time parameter)" herein may be a time domain location of the time parameter or a time domain location of one or more time units before or after the time parameter. For example, if the start location of the first time range is determined based on the first feedback resource corresponding to the data transmitted on the first resource, the start location of the first time range may be the first feedback resource, or may be a time unit before or after the time unit in which the first feedback resource is located, for example, a time unit before the time unit in which the first feedback time is located. In another example, if the start location of the first time range is determined based on a time unit in which a resource that is in the first resource and that is used for transmitting the first piece of data that is not successfully decoded is located, the start location of the first time range may be the time unit in which the resource used for transmitting the first piece of data that is not successfully decoded is located, or may be a time unit before the time unit in which the resource is located. A method for determining the start location and the end location of the first time range based on another time parameter may also be understood with reference to the foregoing examples. For brevity, examples are not described herein one by one.

It should be further noted that the foregoing limitation on the start location and the end location of the first time range are decoupled from each other. When no conflict occurs, any time associated with the start location may be combined with any time associated with the end location to determine the first time range.

Sixth, V feedback resources are defined in the following embodiment, and the V feedback resources may be determined based on the first time range. For example, a first feedback resource of the V feedback resources may be a feedback resource corresponding to a first piece of data that is not successfully decoded within the first time range, or a first feedback resource of the V feedback resources may be a feedback resource corresponding to a first piece of data within the first time range. A last feedback resource of the V feedback resources may be a last feedback resource within the first time range, or a last feedback resource of the V feedback resources may be a feedback resource corresponding to a last piece of data within the first time range.

Seventh, two possible manners for determining unsuccessful data decoding are provided in the following embodiment. In a first possible determining manner, the first terminal device may determine, based on a received negative acknowledgment feedback message, that data is not successfully decoded. This implementation is especially applicable to a case in a NACK-only mechanism. In a second possible determining manner, the first terminal device may determine that data is not successfully decoded when receiving no acknowledgment feedback message. There are two possible cases of receiving no acknowledgment feedback message. One is that the negative acknowledgment feedback message is received, and the other is that the feedback message is not received. This implementation is especially applicable to a case in an ACK-NACK mechanism. If the first terminal device receives no feedback message on a feedback occasion associated with data, the first terminal device also determines that the data is not successfully decoded. Therefore, if the first terminal device receives no feedback message on the feedback resource associated with the data, it may be considered that the first terminal device receives the negative acknowledgment feedback message. Alternatively, if the first terminal receives no feedback message on the feedback resource associated with the data, it may be considered that the first terminal device obtains the negative acknowledgment feedback message.

For example, the negative acknowledgment feedback message may be NACK, and the acknowledgment feedback message may be ACK.

Eighth, for ease of description, descriptions such as a time domain location in which data is located, a time unit in which the data is located are introduced herein. It may be understood that the time domain location or the time unit in which the data is located may be specifically a time domain location or a time unit corresponding to a resource used for transmitting data.

Ninth, receiving (receive or reception) may also be expressed as detecting or detection (detect or detection).

The following describes in detail several possible implementations of the first terminal device determining whether to exclude the second resource set from the first resource set.

Tenth, the following mainly describes a plurality of embodiments by using an example in which the first terminal device receives a feedback message from the second terminal device. It should be understood that there may be one or more second terminal devices. If there are a plurality of second terminal devices, the first terminal device may transmit data in a groupcast or broadcast mode.

For example, in a groupcast or broadcast scenario, the first terminal device may receive, from the plurality of second terminal devices, a plurality of feedback messages for data transmitted on the first resource. The plurality of feedback messages indicate whether the data transmitted on the first resource is successfully decoded by the plurality of second terminal devices. If the plurality of feedback messages are all acknowledgment feedback messages, it may be considered that the first terminal device receives no negative acknowledgment feedback message. If there is a negative acknowledgment feedback message in the plurality of feedback messages, or there is one or more feedback resources on which no feedback message is received, it may be considered that the first terminal device receives the negative acknowledgment feedback message. For example, if the plurality of feedback messages received by the first terminal device are all negative acknowledgment feedback messages, or the first terminal device receives no feedback message on the plurality of feedback resources, it may be considered that the first terminal device receives the negative acknowledgment feedback message. For another example, if there are an acknowledgment feedback message and a negative acknowledgment feedback message in the plurality of feedback messages, it may be considered that the first terminal device receives the negative acknowledgment feedback message. For another example, if there is an acknowledgment feedback message in the plurality of feedback messages, and there is still one or more feedback resources on which no feedback message is received, it may be considered that the first terminal device receives the negative acknowledgment feedback message. It should be understood that receiving described above may be understood as obtaining.

Eleventh, with reference to the five possible implementations, the following describes a process in which the first terminal device determines whether to exclude the second resource set from the first resource set. In the several possible implementations, the first terminal device may exclude the second resource set from the first resource set when determining that a condition for excluding a resource is met; or the first terminal device skips excluding the second resource set from the first resource set when determining that a condition for excluding a resource is not met.

The following provides descriptions with reference to different implementations.

In a first possible implementation, the first terminal device may determine, based on a quantity of data that is not successfully decoded, whether to exclude the second resource set from the first resource set.

Optionally, step 220 may specifically include: The first terminal device excludes the second resource set from the first resource set when determining that there is data that is transmitted Q times and that is not successfully decoded, and Q is a natural number.

It may be understood that the first terminal device skips excluding the second resource set from the first resource set when determining that there is no data that is transmitted Q times and that is not successfully decoded, or that there are less than Q pieces of data that are not successfully decoded.

Q may be a value greater than or equal to 1. In other words, the first terminal device may exclude the second resource set from the first resource set when determining that there is data that is transmitted one or more times and that is not successfully decoded.

In a possible design, Q may be a value configured by a network device, a value defined in a protocol, or a value agreed upon by the first terminal device and the network device.

For example, the network device configures Q=3. The first terminal device excludes the second resource set from the first resource set when determining that there is data that is transmitted three times and that is not successfully decoded.

For example, it is assumed that Q=3, in the data transmitted by the first terminal device on the first resource, the data 1-1, the data 2-1, and the data 4-1 are not successfully decoded, and the data 3-1 is successfully decoded. In other words, in initially transmitted data, there is data that is transmitted three times and that is not successfully decoded. The data transmitted three times may be referred to as non-contiguously adjacent transmitted data. The first terminal device may exclude a periodic reserved resource of the data 4-1 from the first resource set when determining that there is data that is transmitted three times and that is not successfully decoded.

For example, it is assumed that Q=3, in the data transmitted by the first terminal device on the first resource, the data 2-1, the data 3-1, and the data 4-1 are not successfully decoded, and the data 1-1 is successfully decoded. In other words, in initially transmitted data, there is data that is transmitted three times and that is not successfully decoded. The data transmitted three times may be referred to as non-contiguously adjacent transmitted data. The first terminal device may exclude a periodic reserved resource of the data 4-1 from the first resource set when determining that there is data that is transmitted three times and that is not successfully decoded. In another possible design, Q may be determined based on Qₘᵢₙ, Q≥Qₘᵢₙ≥1, and Qₘᵢₙ is a value configured by a network device, a value defined in a protocol, or a value agreed upon by the first terminal device and the network device. A method in which Q may be determined based on Qₘᵢₙ includes: The first terminal determines Q whose value is greater than or equal to Qₘᵢₙ.

Because different terminal devices have different priorities, or have different QoS requirements, a same value of Q configured by the network device for all terminals cannot meet diverse service requirements. Therefore, the network device may configure a minimum value Qₘᵢₙ of a quantity of data that is not successfully decoded, and the first terminal device may determine, by itself, Q whose value is greater than or equal to Qₘᵢₙ.

In a possible design, the data transmitted Q times is Q pieces of non-contiguous adjacent data.

In another possible design, the data transmitted Q times is Q pieces of contiguous adjacent data.

Based on the foregoing manner of determining that the data is not successfully decoded, in an example, step 220 may further include: The first terminal device excludes the second resource set from the first resource set when receiving Q negative acknowledgment feedback messages. The negative acknowledgment feedback messages received on Q feedback resources indicate that data that is transmitted for Q times and that is not successfully decoded exists in the data transmitted on the first resource. That is, the first terminal device may determine, based on a quantity of negative acknowledgment feedback messages associated with transmitted data, whether to exclude the second resource set from the first resource set.

In another example, step 220 may further include: The first terminal device excludes the second resource set from the first resource set when receiving no acknowledgment feedback message for the data transmitted Q times. That is, the first terminal device may determine, based on a quantity of negative acknowledgment feedback messages associated with transmitted data, whether to exclude the second resource set from the first resource set.

Herein, receiving no acknowledgment feedback message may include: receiving a negative acknowledgment feedback message and/or receiving no feedback message. For example, if Q>1, receiving no acknowledgment feedback message for the data transmitted Q times may include: receiving Q negative acknowledgment feedback messages; receiving no feedback message for the data transmitted Q times; or in Q feedback resources associated with the data transmitted Q times, receiving negative acknowledgment feedback messages on Q1 feedback resources, and receiving no feedback message on remaining Q2 feedback resources. Q=Q1+Q2, and both Q1 and Q2 are natural numbers.

In a first possible implementation, whether to exclude the second resource set from the first resource set is determined based on a quantity of data that is not successfully decoded, and the first terminal device may receive a feedback message on a feedback resource associated with a plurality of pieces of data transmitted on the first resource, and determine, based on a quantity of negative acknowledgment feedback messages and/or a quantity of feedback resources on which no feedback message is received, whether to exclude the second resource set from the first resource set. This is simple and can avoid misdetermination to some extent. In addition, because a resource on which collision may occur is excluded from the first resource set that can be originally used for sidelink transmission, the first terminal device can subsequently perform sidelink transmission on a reliable resource, to mitigate possible resource collision between a plurality of terminal devices in a same resource pool. Therefore, mutual interference caused by resource collision of the plurality of terminal devices can be reduced. This facilitates successful data receiving and decoding, and further helps improve transmission reliability of a communication system and system performance.

In a second possible implementation, the first terminal device may determine, based on a quantity of data that is not successfully decoded in V feedback resources, whether to exclude the second resource set from the first resource set. V≥Q, and V is a natural number.

As described above, the V feedback resources may be determined based on the first time range. For brevity, details are not described herein again.

Optionally, step 220 may specifically include: The first terminal device excludes the second resource set from the first resource set when determining that data that is transmitted for Q times and that is not successfully decoded exists in the data transmitted on the first resource, and Q feedback resources associated with the data transmitted Q times belong to the V feedback resources.

It may be understood that the first terminal device skips excluding the second resource set from the first resource set when determining that there is no data that is transmitted Q times and that is not successfully decoded, or that there are less than Q pieces of data that are not successfully decoded. Alternatively, although there is data that is transmitted Q times and that is not successfully decoded, the first terminal device skips excluding the second resource set from the first resource set when feedback resources associated with the data transmitted Q times do not belong to the V feedback resources and within the first time range.

In a possible design, Q may be a value configured by a network device, a value defined in a protocol, or a value agreed upon by the first terminal device and the network device.

In a possible design, V may be a value configured by a network device, a value defined in a protocol, or a value agreed upon by the first terminal device and the network device.

Based on the foregoing description of the two possible manners of determining that the data is not successfully decoded, in an example, step 220 may further include: The first terminal device excludes the second resource set from the first resource set when receiving a negative acknowledgment feedback message on Q feedback resources in the V feedback resources. The negative acknowledgment feedback messages received on the Q feedback resources indicate that data that is transmitted for Q times and that is not successfully decoded exists in the data transmitted on the first resource. That is, the first terminal device may determine, based on a quantity of feedback messages that are negative acknowledgment feedback messages and that are associated with data in the V feedback resources, whether to exclude the second resource set from the first resource set. In other words, the first terminal device may determine, based on a quantity of negative acknowledgment feedback messages received on the V feedback resources, whether to exclude the second resource set from the first resource set.

In another example, step 220 may further include: The first terminal device excludes the second resource set from the first resource set when receiving no acknowledgment feedback message on Q feedback resources in the V feedback resources. That is, the first terminal device may determine, based on a quantity of feedback messages that are not acknowledgment feedback messages and that are associated with data in the V feedback resources, whether to exclude the second resource set from the first resource set. In other words, the first terminal device may determine, based on a quantity of feedback resources on which no acknowledgment feedback message is received on the V feedback resources, whether to exclude the second resource set from the first resource set.

Herein, receiving no acknowledgment feedback message may include: receiving a negative acknowledgment feedback message and/or receiving no feedback message. For example, if Q>1, receiving no acknowledgment feedback message on the Q feedback resources may include: receiving a negative acknowledgment feedback message on the Q feedback resources; receiving no feedback message on the Q feedback resources; or receiving negative acknowledgment feedback messages on Q1 feedback resources in the Q feedback resources, and receiving no feedback message on remaining Q2 feedback resources. Q=Q1+Q2, and both Q1 and Q2 are natural numbers.

For example, it is assumed that Q=3 and V=4, in the data transmitted by the first terminal device on the first resource, the data 1-1, the data 2-1, and the data 4-1 are not successfully decoded, and the data 3-1 is successfully decoded. The first terminal device excludes a periodic reserved resource of the data 4-1 from the first resource set when determining that in the data transmitted on the first resource, there is data that is transmitted three times and that is not successfully decoded, and three feedback resources associated with the data transmitted three times belong to four feedback resources within the first time range.

In a second possible implementation, whether to exclude the second resource set from the first resource set is determined based on a quantity of negative acknowledgment feedback messages received on the V feedback resources and/or a quantity of feedback resources on which no feedback message is received, and a constraint on the V feedback resources is introduced for the negative acknowledgment feedback message and/or the feedback resources on which no feedback message is received. However, the V feedback resources may be constrained by the first time range. Compared with the foregoing implementation, whether there is resource collision may be determined in a more centralized time period. Therefore, determining may be performed more properly, and misdetermination is avoided. In addition, because a resource on which collision may occur is excluded from the first resource set that can be originally used for sidelink transmission, the first terminal device can subsequently perform sidelink transmission on a reliable resource, to mitigate possible resource collision between a plurality of terminal devices in a same resource pool. Therefore, mutual interference caused by resource collision of the plurality of terminal devices can be reduced. This facilitates successful data receiving and decoding, and further helps improve transmission reliability of a communication system and system performance.

In the foregoing first possible implementation and second possible implementation, optionally, the data transmitted Q times may include initially transmitted data, or may include retransmitted data, or may include initially transmitted data and retransmitted data.

Specifically, the data transmitted Q times may include initially transmitted data. For example, it is assumed that Q=4. In the foregoing data shown with reference to Table 1 and FIG. 11 to FIG. 13, the data transmitted Q times may include, for example, the data 1-1, the data 2-1, the data 3-1, and the data 4-1. That is, the data transmitted Q times is initially transmitted data.

Alternatively, the data transmitted Q times may include data retransmitted for an r^{th} time. For example, it is assumed that Q=4. In the foregoing data shown with reference to Table 1 and FIG. 11 to FIG. 13, the data transmitted Q times may include, for example, the data 1-2, the data 2-2, the data 3-2, and the data 4-2. That is, the data transmitted Q times is first retransmitted data.

Alternatively, the data transmitted Q times is not distinguished between initially transmitted data and retransmitted data. For example, it is assumed that Q=4. In the foregoing data shown with reference to Table 1 and FIG. 11 to FIG. 13, the data transmitted Q times may include, for example, the data 1-1, the data 1-2, the data 2-1, and the data 3-1. That is, the data transmitted Q times includes initially transmitted data and retransmitted data.

Further, an interval between data transmitted at two adjacent times in the data transmitted Q times is an integer multiple of a service period.

It should be understood that the integer multiple of the service period may include the service period and multi-fold of the service period. That is, the integer multiple may include one-fold and more than one-fold of the service period.

For example, it is assumed that Q=3, in the data transmitted by the first terminal device on the first resource, the data 1-1, the data 2-1, and the data 4-1 are not successfully decoded, and the data 3-1 is successfully decoded. An interval between the transmitted data 1-1 and the transmitted data 2-1 is one-fold of the service period. An interval between the transmitted data 2-1 and the transmitted data 4-1 is two-fold of the service period.

As described above, an interval between initially transmitted data is one service period, and an interval between data retransmitted for an r^{th} time is an integer multiple of one service period. Therefore, if an interval between data transmitted at two adjacent times is an integer multiple of the service period, the data may be initially transmitted data, or may be data retransmitted for an r^{th} time. In other words, the Q transmissions are not Q contiguous transmissions in terms of time, and therefore are non-contiguous adjacent transmissions. In other words, the data transmitted Q times may include non-contiguously adjacent transmitted data.

In addition, because an interval between a time domain location of a feedback resource associated with the data and a time domain location of the data may be fixed, the feedback resource associated with the data may also be periodic. Therefore, an interval between data transmitted at two adjacent times in the data transmitted Q times is an integer multiple of the service period. In this case, it may be replaced with that an interval between two adjacent feedback resources in the Q feedback resources associated with the data transmitted Q times is an integer multiple of the service period.

Still further, the data transmitted Q times is Q pieces of adjacent data. For example, the Q pieces of adjacent data may be Q pieces of contiguous adjacent data, or may be Q pieces of non-contiguous adjacent data. The Q pieces of non-contiguous adjacent data may be for a same transmission of different pieces of data, for example, an initial transmission or an r^{th} retransmission. The Q pieces of contiguous adjacent data may also be for Q contiguous transmissions in terms of time.

For example, in the foregoing data shown with reference to Table 1 and FIG. 11 to FIG. 13, the data of Q non-contiguous adjacent transmissions may include Q pieces of non-contiguous adjacent data. The Q pieces of non-contiguous adjacent data may include initially transmitted data of Q contiguous transmissions, or Q pieces of initially transmitted data that are non-contiguously adjacent. It is assumed that Q=3, and three pieces of contiguous data may be the data 1-1, the data 2-1, and the data 3-1. Alternatively, the data of Q non-contiguous adjacent transmissions may include an r^{th} piece of retransmitted data of Q contiguous transmissions, or Q pieces of retransmitted data that are non-contiguously adjacent. For example, it is assumed that Q=3 and r=2, and the three pieces of contiguous data may be the data 1-2, the data 2-2, and the data 3-2.

Alternatively, in the foregoing data shown with reference to Table 1 and FIG. 11 to FIG. 13, the data of the Q contiguous transmissions may be alternatively initially transmitted data and retransmitted data of the Q contiguous transmissions, or Q pieces of contiguous adjacent data. For example, it is assumed that Q=4, four pieces of contiguous adjacent data may include the data 1-1, the data 1-2, the data 1-3, and the data 2-1.

It should be understood that the foregoing plurality of examples of the data of Q, r, and Q transmissions are merely shown for ease of understanding, and should not constitute any limitation on this embodiment of this application.

In contrast, if an interval between data transmitted at two adjacent times in the data transmitted Q times may be less than one service period, the data transmitted Q times may include both initially transmitted data and first retransmitted data, or data retransmitted for an r^{th} time and data retransmitted for an (r+1)^{th} time, or the like. In other words, the Q transmissions may be two or more contiguous transmissions in terms of time. In other words, the data transmitted Q times may include contiguously adjacent transmitted data.

Further, the first terminal device may observe, within a predefined time range, whether the data transmitted Q times is successfully decoded. For ease of understanding and description, the time range is denoted as a first time range.

Based on the foregoing limitation on the start location, the end location, and the time length of the first time range, the following several possible cases may be obtained.

In a first possible case, a time domain location in which the data transmitted Q times is located belongs to the first time range.

For example, in FIG. 11, it is assumed that Q=4, and the data transmitted Q times includes initially transmitted data or data retransmitted for an r^{th} time. In this case, the data 1-1, the data 2-1, the data 3-1, and the data 4-1 in FIG. 11 may belong to the first time range, or the data 1-2, the data 2-2, the data 3-2, and the data 4-2 may belong to the first time range.

Alternatively, it is assumed that Q=4, and the data transmitted Q times includes initially transmitted data and retransmitted data. In this case, the data 1-1, the data 1-2, the data 1-3, and the data 2-1 in FIG. 11 may belong to the first time range, or the data 1-2, the data 1-3, the data 2-1, and the data 2-2 may belong to the first time range. This is not limited in this embodiment of this application.

Optionally, the start location of the first time range is determined based on a first time unit in the first resource; a time unit in which a resource that is in the first resource and that is used for transmitting a first piece of data that is not successfully decoded is located; a time unit in the first resource; or a time unit in which a resource that is in the first resource and that is used for transmitting data that is not successfully decoded is located. The end location of the first time range is determined based on time at which a feedback message is received, or is determined based on a time domain location of a reserved resource that is in the first resource and on which no data is transmitted.

In this case, the feedback resource associated with the data transmitted Q times may not belong to the first time range. This is not limited in this embodiment of this application. In addition, data transmitted on the first resource is not limited to the data transmitted Q times, and data that is in the data transmitted on the first resource and that is not successfully decoded is not limited to the data transmitted Q times, or may be greater than the data transmitted Q times. Optionally, all time domain locations in which the data that is transmitted on the first resource and that is not successfully decoded is located belong to the first time range. Optionally, a time domain location of the first resource belongs to the first time range.

In a second possible case, a feedback resource associated with the data transmitted Q times belongs to the first time range.

For example, in FIG. 12 and FIG. 13, it is assumed that Q=4, and feedback messages transmitted Q times includes a feedback message associated with initially transmitted data or a feedback message associated with data retransmitted for an r^{th} time. In this case, feedback resources in which the feedback message 1-1, the feedback message 2-1, the feedback message 3-1, and the feedback message 4-1 are located in FIG. 12 and FIG. 13 may belong to the first time range, or feedback resources in which the feedback message 1-2, the feedback message 2-2, the feedback message 3-2, and the feedback message 4-2 are located may belong to the first time range.

Alternatively, it is assumed that Q=4, and feedback messages transmitted Q times include an initial transmission feedback message and a retransmission feedback message. In this case, feedback resources in which the feedback messages 1-1, the feedback messages 1-2, the feedback messages 1-3, and the feedback messages 2-1 in FIG. 12 and FIG. 13 are located may belong to the first time range, or feedback resources in which the feedback messages 1-2, the feedback messages 1-3, the feedback messages 2-1, and the feedback messages 2-2 are located may also belong to the first time range, or the like. This is not limited in this embodiment of this application.

Optionally, the start location of the first time range is determined based on a first feedback resource corresponding to the data transmitted on the first resource; a feedback resource corresponding to a first piece of data that is not successfully decoded in the data transmitted on the first resource; a feedback resource corresponding to the data transmitted on the first resource; or a feedback resource corresponding to the data that is not successfully decoded in the data transmitted on the first resource. The end position of the first time range is determined based on time at which resource selection is triggered; time at which resource reselection is triggered; time at which re-evaluation is triggered; time at which preemption evaluation is triggered; or time at which a feedback message is received.

In this case, the time domain location in which the data transmitted Q times is located may not belong to the first time range. This is not limited in this embodiment of this application. In addition, similar to the foregoing description, because the data transmitted on the first resource is not limited to the data transmitted Q times, a quantity of feedback resources associated with the data transmitted on the first resource is not limited to Q. Optionally, all feedback resources associated with the data transmitted on the first resource belong to the first time range.

In a third possible case, both the time domain location of the data transmitted Q times and the Q feedback resources associated with the data transmitted Q times belong to the first time range.

For example, in FIG. 12 and FIG. 13, it is assumed that Q=4, and feedback messages transmitted Q times includes a feedback message associated with initially transmitted data or a feedback message associated with data retransmitted for an r^{th} time. In this case, time domain locations in which the data 1-1, the data 2-1, the data 3-1, and the data 4-1 are located, and feedback resources in which the feedback message 1-1, the feedback message 2-1, the feedback message 3-1, and the feedback message 4-1 are located in FIG. 12 and FIG. 13 may belong to the first time range, or time domain locations in which the data 1-2, the data 2-2, the data 3-2, and the data 4-2 are located, and feedback resources in which the feedback message 1-2, the feedback message 2-2, the feedback message 3-2, and the feedback message 4-2 are located in FIG. 12 and FIG. 13 may also belong to the first time range. For brevity, examples are not provided for description herein one by one.

Optionally, the start location of the first time range is determined based on a first feedback resource corresponding to the data transmitted on the first resource; a feedback resource corresponding to a first piece of data that is not successfully decoded in the data transmitted on the first resource; a first time unit in the first resource; a time unit in which a resource that is in the first resource and that is used for transmitting the first piece of data that is not successfully decoded is located; a feedback resource corresponding to the data transmitted on the first resource; a feedback resource corresponding to data that is not successfully decoded in the data transmitted on the first resource; a time unit in the first resource; or a time unit in which the data that is not successfully decoded in the data transmitted on the first resource is located.

The end position of the first time range is determined based on time at which resource selection is triggered; time at which resource reselection is triggered; time at which re-evaluation is triggered; time at which preemption evaluation is triggered; time at which a feedback message is received; or a time domain location of the reserved resource in the first resource.

In this case, both the time domain location in which the data transmitted Q times is located and the Q feedback resources associated with the time domain location belong to the first time range. In addition, similar to the foregoing description, because the data transmitted on the first resource is not limited to the data transmitted Q times, a quantity of feedback resources associated with the data transmitted on the first resource is not limited to Q. Optionally, both the time domain location of the first resource and the feedback resource associated with the data transmitted on the first resource belong to the first time range.

In the foregoing first and second possible implementations, a quantity of data that is not successfully decoded is mainly limited, for example, data transmitted Q times or Q feedback resources. In addition, duration occupied by a feedback resource associated with the data that is not successfully decoded may be further limited, as shown in the following third possible implementation.

In a third possible implementation, the first terminal device may determine, based on duration occupied by feedback resources associated with a plurality of pieces of data that are not successfully decoded, whether to exclude the second resource set from the first resource set.

Optionally, step 220 may specifically include: The first terminal device excludes the second resource set from the first resource set when determining data that is transmitted for a plurality of times and that is not successfully decoded exists in the data transmitted on the first resource, and duration occupied by feedback resources associated with the data transmitted for the plurality of times is greater than or equal to a first threshold L (L>0). L may be a value configured by a network device, a value defined in a protocol, or a value agreed upon by the first terminal device and the network device.

For example, it is assumed that P_{Tx}=10 ms, the network device configures L=20 ms, and in the data transmitted by the first terminal device on the first resource, the data 2-1, the data 3-1, and the data 4-1 are not successfully decoded. The duration occupied by the feedback message 2-1, the feedback message 3-1, and the feedback message 4-1 associated with the plurality of pieces of data that are not successfully decoded by the first terminal device may include two periods, that is, 20 ms, or may include two periods plus one slot, that is, 21 ms. Therefore, the duration occupied by the feedback messages associated with the plurality of pieces of data that are not successfully decoded is greater than or equal to the first threshold (L=20 ms). In this case, the first terminal device may exclude a periodic reserved resource of the data 4-1 from the first resource set.

Optionally, step 220 may specifically include: The first terminal device excludes the second resource set from the first resource set when the first terminal device receives a plurality of negative acknowledgment feedback messages, and duration occupied by feedback resources in which the plurality of negative acknowledgment feedback messages are located is greater than or equal to a first threshold L (L>0). The plurality of negative acknowledgment feedback messages indicates data that is transmitted for a plurality of times and that is not successfully decoded exists in the data transmitted on the first resource. L is determined based on Lₘᵢₙ, and Lₘᵢₙ may be a value configured by a network device, a value defined in a protocol, or a value agreed upon by the first terminal device and the network device. L may be a value that is greater than or equal to Lₘᵢₙ and that is determined by the first terminal device. For example, it is assumed that the network device configures Lₘᵢₙ=10 ms and P_{Tx}=10 ms, and in the data transmitted by the first terminal device on the first resource, the data 2-1, the data 3-1, and the data 4-1 are not successfully decoded. The first terminal device may determine L=20 ms based on Lₘᵢₙ. The first terminal device may determine that the duration is greater than or equal to the first threshold (L=20 ms) based on the duration occupied by the plurality of pieces of data that include the data 2-1, the data 3-1, and the data 4-1 and that are not successfully decoded is 20 ms or 21 ms. In this case, the first terminal device may exclude a periodic reserved resource of the data 4-1 from the first resource set.

It may be understood that the first terminal device skips excluding the second resource set from the first resource set when the first terminal device determines that there is data that is transmitted for a plurality of times and that is not successfully decoded, but duration occupied by feedback resources associated with the data that is transmitted for the plurality of times is less than the first threshold L, or when the first terminal device determines that there are a plurality of pieces of data that are not successfully decoded, but duration occupied by feedback resources associated with the plurality of pieces of data is less than the first threshold L.

Duration occupied by a plurality of feedback resources may be specifically a time interval between a time unit in which a first feedback resource in the plurality of feedback resources is located and a time unit in which a last feedback resource in the plurality of feedback resources is located. Therefore, the duration occupied by the plurality of feedback resources may also be referred to as a time interval between the plurality of feedback resources. For example, duration between three feedback resources may be a time interval between a time unit in which a first feedback resource is located and a time unit in which a third feedback resource is located.

The duration occupied by the plurality of feedback resources may be specifically a time interval between the first feedback resource and the last feedback resource in the plurality of feedback resources. For example, there are a total of Q' (Q' is an integer greater than 1) feedback resources, and duration occupied by the Q' feedback resources may be a time interval between a first feedback resource and a Q'^{th} feedback resource.

It is assumed that the Q' feedback resources are a plurality of contiguous feedback resources for initially transmitted data or data retransmitted for an r^{th} time. If an interval between the feedback resource and data associated with the feedback resource is fixed, the duration occupied by the Q' feedback resources may be Q'-1 service periods.

Based on the foregoing description of the two possible manners of determining that the data is not successfully decoded, in an example, step 220 may further include: The first terminal device excludes the second resource set from the first resource set when the first terminal device receives a plurality of negative acknowledgment feedback messages, and duration occupied by time domain locations corresponding to the plurality of negative acknowledgment feedback messages is greater than or equal to a first threshold L (L>0). The plurality of negative acknowledgment feedback messages indicate data that is transmitted for a plurality of times and that is not successfully decoded exists in the data transmitted on the first resource.

The duration occupied by the time domain locations corresponding to the plurality of negative acknowledgment feedback messages may be specifically a time interval between a time unit in which a first negative acknowledgment feedback message in the plurality of negative acknowledgment feedback messages is located and a time unit in which a last negative acknowledgment feedback message is located. For example, three negative acknowledgment feedback messages are received, that is, there are three negative acknowledgment feedback messages in total. Duration occupied by the three negative acknowledgment feedback messages may be a time interval between a time unit in which a first negative acknowledgment feedback message is located and a time unit in which a third negative acknowledgment feedback message is located.

It should be understood that duration occupied by the plurality of negative acknowledgment feedback messages is duration occupied by time domain locations corresponding to the plurality of negative acknowledgment feedback messages. For the duration occupied by the time domain locations corresponding to the plurality of negative acknowledgment feedback messages, refer to the foregoing related descriptions of the duration occupied by the plurality of feedback resources. For brevity, details are not described herein again.

In another example, step 220 may further include: The first terminal device excludes the second resource set from the first resource set when in the data transmitted on the first resource, there is data that is transmitted for a plurality of times and on which no acknowledgment feedback message is received, and duration occupied by feedback resources associated with the data that is transmitted for the plurality of times is greater than or equal to a first threshold L. In other words, the first terminal device excludes the second resource set from the first resource set when the first terminal device receives no acknowledgment feedback message on the plurality of feedback resources, and duration occupied by time domain locations corresponding to the plurality of feedback resources is greater than or equal to the first threshold L. Receiving no acknowledgment feedback message on the plurality of feedback resources indicates data that is transmitted for a plurality of times and that is not successfully decoded exists in the data transmitted on the first resource.

**In** a third possible implementation, whether to exclude the second resource set from the first resource set is determined based on duration occupied by a time domain location corresponding to a feedback message associated with data that is not successfully decoded. Determining may be performed based on duration occupied by a plurality of feedback resource, and does not need to be constrained by a quantity of data that is not successfully decoded. Different terminal devices may be configured with data transmission in different service periods, and are not constrained by a quantity of data that is not successfully decoded. Therefore, different values of Q do not need to be configured for terminal devices in different service periods, and implementation is convenient. In addition, because a resource on which collision may occur is excluded from the first resource set that can be originally used for sidelink transmission, the first terminal device can subsequently perform sidelink transmission on a reliable resource, to mitigate possible resource collision between a plurality of terminal devices in a same resource pool. Therefore, mutual interference caused by resource collision of the plurality of terminal devices can be reduced. This facilitates successful data receiving and decoding, and further helps improve transmission reliability of a communication system and system performance.

In a fourth possible implementation, the first terminal device may determine, based on duration occupied by a plurality of pieces of data that are not successfully decoded, whether to exclude the second resource set from the first resource set.

It should be understood that duration occupied by time domain locations in which the plurality of pieces of data are located may also be referred to as duration occupied by time domain locations in which data that is transmitted for a plurality of times is located, and may be specifically duration occupied by resources used for carrying the plurality of pieces of data in time domain. The duration occupied by the time domain locations in which the plurality of pieces of data are located may be a time interval between a time unit in which a first piece of data in the plurality of pieces of data is located and a time unit in which a last piece of data in the plurality of pieces of data is located. For example, duration occupied by time domain locations in which three pieces of data are located may be a time interval between a time unit in which a first piece of data is located and a time unit in which a third piece of data is located.

Optionally, step 220 may specifically include: The first terminal device excludes the second resource set from the first resource set when the first terminal device determines data that is transmitted for a plurality of times and that is not successfully decoded exists in the data transmitted on the first resource, and duration occupied by time domain locations in which the data transmitted for the plurality of times is located is greater than or equal to a second threshold L' (L'>0). L' may be a value configured by a network device, a value defined in a protocol, or a value agreed upon by the first terminal device and the network device.

For example, it is assumed that P_{Tx}=10 ms, the network device configures L'=20 ms, and in the data transmitted by the first terminal device on the first resource, the data 2-1, the data 3-1, and the data 4-1 are not successfully decoded. The first terminal device may determine that the duration is greater than or equal to the second threshold (L'=20 ms) based on the duration occupied by the plurality of pieces of data that include the data 2-1, the data 3-1, and the data 4-1 and that are not successfully decoded is 20 ms or 21 ms. In this case, the first terminal device may exclude a periodic reserved resource of the data 4-1 from the first resource set.

Optionally, step 220 may specifically include: The first terminal device excludes the second resource set from the first resource set when the first terminal device receives a plurality of negative acknowledgment feedback messages, and duration occupied by feedback resources in which the plurality of negative acknowledgment feedback messages are located is greater than or equal to a second threshold L' (L'>0). The plurality of negative acknowledgment feedback messages indicates data that is transmitted for a plurality of times and that is not successfully decoded exists in the data transmitted on the first resource. L' is determined based on L'ₘᵢₙ, and Lₘᵢₙ may be a value configured by a network device, a value defined in a protocol, or a value agreed upon by the first terminal device and the network device. L' may be a value that is greater than or equal to L'ₘᵢₙ and that is determined by the first terminal device.

For example, it is assumed that P_{Tx}=10 ms, the network device configures L'ₘᵢₙ=10 ms, and in the data transmitted by the first terminal device on the first resource, the data 2-1, the data 3-1, and the data 4-1 are not successfully decoded. The first terminal device may determine, based on L'ₘᵢₙ=10 ms, the second threshold L'=20 ms. The first terminal device may determine that the duration is greater than or equal to the second threshold (L'=20 ms) based on the duration occupied by the plurality of pieces of data that include the data 2-1, the data 3-1, and the data 4-1 and that are not successfully decoded is 20 ms or 21 ms. In this case, the first terminal device may exclude a periodic reserved resource of the data 4-1 from the first resource set.

It may be understood that the first terminal device skips excluding the second resource set from the first resource set when the first terminal device determines that there is data that is transmitted for a plurality of times and that is not successfully decoded, but duration occupied by time domain locations in which the data that is transmitted for the plurality of times is located is less than the second threshold L', or when the first terminal device determines that there is a plurality of pieces of data that are not successfully decoded, and duration occupied by the plurality of pieces of data that are successfully decoded is less than the threshold L'.

Based on the foregoing description of the two possible manners of determining that the data is not successfully decoded, in an example, step 220 may specifically include: The first terminal device excludes the second resource set from the first resource set when the first terminal device determines that in the data transmitted on the first resource, there is data that is transmitted for a plurality of times and on which a negative acknowledgment feedback message is received, and duration occupied by the data transmitted for the plurality of times is greater than or equal to a second threshold.

In another example, step 220 may further include: The first terminal device excludes the second resource set from the first resource set when in the data transmitted on the first resource, there is data that is transmitted for a plurality of times and on which no acknowledgment feedback message is received, and duration occupied by the data transmitted for the plurality of times is greater than or equal to a second threshold. In the third and fourth possible implementations, receiving no acknowledgment feedback message may include: receiving a negative acknowledgment feedback message and/or receiving no feedback message. For example, no feedback message is received on Q' feedback resources, and Q' is an integer greater than 1. Receiving no acknowledgment feedback message on the Q' feedback resources includes: receiving a negative acknowledgment feedback message on each of the Q' feedback resources; receiving no feedback message on all the Q' feedback resources; or receiving negative acknowledgment feedback messages on Q1' feedback resources of the Q' feedback resources, and receiving no feedback message on remaining Q2' feedback resources. Q'=Q1'+Q2', and both Q1 and Q2 are natural numbers.

In the third and fourth possible implementations, optionally, the data transmitted for the plurality of times may include initially transmitted data, or may include retransmitted data, or may include initially transmitted data and retransmitted data.

For related descriptions of the data transmitted for the plurality of times including the initially transmitted data and/or the retransmitted data, refer to the examples provided with reference to the parameter Q in the first and second possible implementations. For brevity, details are not described herein again.

Further, an interval between data transmitted at two adjacent times in the data transmitted for the plurality of times is an integer multiple of a service period, or an interval between two adjacent feedback resources in feedback resources associated with the data transmitted for the plurality of times is an integer multiple of a service period.

For related descriptions that a time interval between the data transmitted at two adjacent times or the feedback resources associated with the data transmitted at two adjacent times is an integer multiple of the service period, refer to the examples provided with reference to the parameter Q in the first and second possible implementations. For brevity, details are not described herein again.

Still further, the data transmitted for the plurality of times is a plurality of pieces of adjacent data.

For the data that is contiguously transmitted for the plurality of times, refer to the examples provided with reference to the parameter Q in the first and second possible implementations. For brevity, details are not described herein again.

It should be noted that, because different services may correspond to different service periods, whether to exclude the second resource set from the first resource set is determined based on duration occupied by feedback time associated with a plurality of pieces of data that are not successfully decoded, and a corresponding quantity of data that is not successfully decoded may also change with different service periods. Therefore, Q' may be the same as or different from Q. This is not limited in embodiments of this application.

In other words, the duration may be duration configured for all terminal devices or all services. Based on different service periods, each terminal device may separately determine a corresponding value of Q'.

In a fourth possible implementation, whether to exclude the second resource set from the first resource set is determined based on duration occupied by a time domain location in which data that is not successfully decoded is located. Determining may be performed based on duration occupied by a plurality of times of data transmission, and does not need to be constrained by a quantity of data that is not successfully decoded. Different terminal devices may be configured with data transmission in different service periods, and are not constrained by a quantity of data that is not successfully decoded. Therefore, different values of Q do not need to be configured for terminal devices in different service periods, and implementation is convenient. In addition, because a resource on which collision may occur is excluded from the first resource set that can be originally used for sidelink transmission, the first terminal device can subsequently perform sidelink transmission on a reliable resource, to mitigate possible resource collision between a plurality of terminal devices in a same resource pool. Therefore, mutual interference caused by resource collision of the plurality of terminal devices can be reduced. This facilitates successful data receiving and decoding, and further helps improve transmission reliability of a communication system and system performance.

In a fifth possible implementation, the first terminal device may determine, based on a ratio of a quantity of data that is not successfully decoded and determined by a feedback message received within a time range to V, whether to exclude the second resource set from the first resource set.

V may be specifically V feedback resources within a time range. The time range may be, for example, the foregoing first time range. It is assumed that it is determined, in the data transmitted on the first resource based on the feedback message received within the first time range, that there is data that is transmitted Q " times and that is not successfully decoded. In this case, a quantity of data that is not successfully decoded is also Q ", and Q " is an integer greater than or equal to 1. It should be understood that Q " may be the same as or different from Q. This is not limited in embodiments of this application.

V may be a value configured by a network device, a value defined in a protocol, or a value agreed upon by the first terminal device and the network device.

Optionally, step 220 specifically includes: The first terminal device excludes the second resource set from the first resource set when a ratio of Q " to N is greater than or equal to a third threshold α. Q " indicates a quantity of data that is determined based on the feedback message received within the first time range and that is in the data transmitted on the first resource and that is not successfully decoded. The third threshold α may be a value configured by a network device, a value defined in a protocol, or a value agreed upon by the first terminal device and the network device.

For example, it is assumed that α=0.7 and V=4, in the data transmitted by the first terminal device on the first resource, the data 1-1, the data 2-1, and the data 4-1 are not successfully decoded, and the data 3-1 is successfully decoded. The first terminal device determines that a ratio of the quantity Q " (where Q " =3) of pieces of data that are not successfully decoded to 4 is 0.75. The ratio 0.75 is greater than or equal to the third threshold α=0.7. The first terminal device determines to exclude a periodic reserved resource of the data 4-1 from the first resource set.

Optionally, step 220 specifically includes: The first terminal device excludes the second resource set from the first resource set when a ratio of Q " to V is greater than or equal to a third threshold α. Q " indicates a quantity of data that is determined based on the feedback message received within the first time range and that is in the data transmitted on the first resource and that is not successfully decoded. α≥αₘᵢₙ, and αₘᵢₙ may be a value configured by a network device, a value defined in a protocol, or a value agreed upon by the first terminal device and the network device. α may be determined by the first terminal device based on a value of αₘᵢₙ.

For example, it is assumed that αₘᵢₙ=0.65 and V=4, in the data transmitted by the first terminal device on the first resource, the data 1-1, the data 2-1, and the data 4-1 are not successfully decoded, and the data 3-1 is successfully decoded. The first terminal device determines, based on αₘᵢₙ, the third threshold α=0.7 (α≥αₘᵢₙ). The first terminal device determines that a ratio of the quantity Q " (where Q " =3) of pieces of data that are not successfully decoded to 4 is 0.75. The ratio 0.75 is greater than or equal to the third threshold α=0.7. The first terminal device determines to exclude a periodic reserved resource of the data 4-1 from the first resource set.

Specifically, the first terminal device may receive a feedback message on a plurality of feedback resources within the first time range, and may determine, based on the received feedback message, a quantity of data that is in the data transmitted on the first resource and that is not successfully decoded, and then determine, based on a ratio of the quantity to V, whether to exclude the second resource set from the first resource set.

It can be learned from the foregoing definition of the V feedback resources that the V feedback resources may belong to the first time range. Therefore, the fifth possible implementation is similar to the second possible implementation, but a difference lies in that in the fifth possible implementation, a value of Q " is not limited, but whether to exclude the second resource set from the first resource set is determined based on a ratio of Q " to V.

It may be understood that the first terminal device skips excluding the second resource set from the first resource set when determining that the ratio of the quantity Q " of pieces of data that are not successfully decoded to V is less than the third threshold.

Based on the foregoing description of the two possible manners of determining that the data is not successfully decoded, in an example, step 220 may further include: The first terminal device excludes the second resource set from the first resource set when a ratio of a quantity Q " of negative acknowledgment feedback messages received by the first terminal device within the first time range to N is greater than or equal to a third threshold. That is, the first terminal device may determine, based on a ratio of a quantity Q " of received feedback messages that are negative acknowledgment feedback messages to V, whether to exclude the second resource set from the first resource set.

In another example, step 220 may further include: The first terminal device excludes the second resource set from the first resource set when determining that a ratio of a quantity Q " of times of receiving no acknowledgment feedback message within the first time range to V is greater than or equal to a third threshold α. That is, the first terminal device may determine, based on a quantity Q " of received feedback messages that are not acknowledgment feedback messages within a time range to V, whether to exclude the second resource set from the first resource set.

Herein, receiving no acknowledgment feedback message may include: receiving a negative acknowledgment feedback message and/or receiving no feedback message. For example, no feedback message is received on Q " feedback resources, and Q " is an integer greater than 1. Receiving no acknowledgment feedback message on the Q " feedback resources includes: receiving a negative acknowledgment feedback message on each of the Q " feedback resources; receiving no feedback message on all the Q " feedback resources; or receiving negative acknowledgment feedback messages on Q₁ " feedback resources of the Q " feedback resources, and receiving no feedback message on remaining Q₂ " feedback resources. Q " = Q₁ " + Q₂ ", and both Q₁ " and Q₂ " are natural numbers.

In a fifth possible implementation, whether to exclude the second resource set from the first resource set is determined based on a ratio of a quantity Q " of data that is not successfully decoded within the first time range to V, and does not need to be constrained by the quantity of data that is not successfully decoded. Because different terminal devices may be configured with data transmission in different service periods, and are not constrained by a quantity of data that is not successfully decoded. Therefore, different values of Q do not need to be configured for terminal devices in different service periods, and implementation is convenient. In addition, a proportion of data decoding failures can be clearly shown based on a ratio of Q " to V, to infer a possibility of resource collision. In this way, the first terminal device can properly perform determining, and avoid misdetermination. In addition, because a resource on which collision may occur is excluded from the first resource set that can be originally used for sidelink transmission, the first terminal device can subsequently perform sidelink transmission on a reliable resource, to mitigate possible resource collision between a plurality of terminal devices in a same resource pool. Therefore, mutual interference caused by resource collision of the plurality of terminal devices can be reduced. This facilitates successful data receiving and decoding, and further helps improve transmission reliability of a communication system and system performance.

Optionally, the data transmitted for the plurality of times may include initially transmitted data, or may include retransmitted data, or may include initially transmitted data and retransmitted data.

For related descriptions of the data transmitted for the plurality of times including the initially transmitted data and/or the retransmitted data, refer to the examples provided with reference to the parameter Q in the first and second possible implementations. For brevity, details are not described herein again.

Further, an interval between data transmitted at two adjacent times in the data transmitted for the plurality of times is an integer multiple of a service period, or an interval between two adjacent feedback resources in feedback resources associated with the data transmitted for the plurality of times is an integer multiple of a service period.

For related descriptions that a time interval between the data transmitted at two adjacent times or the feedback resources associated with the data transmitted at two adjacent times is an integer multiple of the service period, refer to the examples provided with reference to the parameter Q in the first and second possible implementations. For brevity, details are not described herein again.

Still further, the data transmitted for the plurality of times is a plurality of pieces of adjacent data.

For the data that is contiguously transmitted for the plurality of times, refer to the examples provided with reference to the parameter Q in the first and second possible implementations. For brevity, details are not described herein again.

In the four possible implementations provided above, a plurality of parameters such as Q, Qₘᵢₙ, V, L, Lₘᵢₙ, L', L'ₘᵢₙ, and Z are provided, and at least one of the parameters may meet at least one of the following:
being configured by a network device;
being defined in a protocol;
being related to a service priority;
being related to a count threshold;
being related to a service period;
being related to an idle state of a resource pool; and
being related to a maximum quantity of transmission times.

The service priority is described in detail above, and details are not described herein again. In a possible design, a higher service priority indicates a smaller value of Q, Qₘᵢₙ, V, L, Lₘᵢₙ, or Z. Based on such a design, a terminal device with a high service priority does not need to delete an unreliable reserved resource after excessively long time.

In another possible design, a higher service priority indicates a larger value of Q, Qₘᵢₙ, V, L, Lₘᵢₙ, or Z. Based on such a design, a terminal with a high service priority does not delete a resource as much as possible. In this way, sufficient candidate resources are reserved in a candidate resource set.

The count threshold may be used for triggering resource reselection or resource release. For example, the count threshold may be Cᵣₑₛₑₗ, a sidelink resource reselection counter (SL_RESOURCE_RESELECTION_COUNTER), or after sidelink reselection (sl-ReselectAfter).

The count thresholds Cᵣₑₛₑₗ and SL_RESOURCE_RESELECTION_COUNTER may be used for triggering resource reselection. For example, the first terminal device may start a counter after the first resource, and an initial value of the counter may be set to Cᵣₑₛₑₗ or SL_RESOURCE_RESELECTION_COUNTER. Each time a service period elapses, a value of the counter is decreased by 1, until the value of the counter is decreased to 0 and a previous value is 1, and resource reselection may be triggered.

In an example, Q=axCᵣₑₛₑₗ. 0≤a≤1. For example, Q=0.1xCᵣₑₛₑₗ.

In another example, Q=bxSL_RESOURCE_RESELECTION_COUNTER. 0≤b≤1. For example, Q=0.2xSL_RESOURCE_RESELECTION_COUNTER.

The count threshold sl-ReselectAfter is used for triggering resource release. If the terminal device does not use a resource or a periodic reserved resource of the resource for sl-ReselectAfter times, the terminal device may release the resource and the periodic reserved resource of the resource. For example, retention duration of the resource and the periodic reserved resource of the resource may be a product of the count threshold sl-ReselectAfter and the service period.

For example, Q=cxsl-ReselectAfter. 1≤c. For example, Q=2xsl-ReselectAfter.

The service period may also be represented as a period, a resource reservation interval, a resource reservation period, a reservation interval, a reservation period, or the like. Because the service period is described in detail above, details are not described herein again. Herein, a larger service period indicates a smaller parameter value, and a smaller service period indicates a larger parameter value. For example, a larger service period indicates a smaller value of Q, and a smaller service period indicates a larger value of Q.

An idle state of a resource may be represented by a CBR. The CBR is described in detail above, and details are not described herein again. A larger CBR indicates a larger parameter value, and a smaller CBR indicates a smaller parameter value. For example, a larger CBR indicates a larger value of Q, and a smaller CBR indicates a smaller value of Q.

A maximum quantity R of retransmission times is described in detail above, and details are not described herein again. Herein, a larger maximum quantity of retransmission times indicates a larger parameter value, and a smaller maximum quantity of retransmission times indicates a smaller parameter value. For example, a larger maximum quantity of retransmission times indicates a larger value of Q, and a smaller maximum quantity of retransmission times indicates a smaller value of Q.

It should be understood that the foregoing describes a relationship between the parameter value Q and each factor by using the parameter value Q as an example. Another parameter value may also be determined based on a same concept. For brevity, examples are not described herein one by one.

With reference to the accompanying drawings, the foregoing describes in detail the four implementations that may determine whether to exclude the second resource set from the first resource set. However, it should be understood that this should not constitute any limitation on this embodiment of this application. A person skilled in the art may further make simple variations or replacements based on the concepts of the four implementations provided above, and these variations or replacements shall fall within the protection scope of embodiments of this application.

**In** addition, in addition to the foregoing four implementations that may determine whether to exclude the second resource set from the first resource set, a retention probability g is further introduced in this embodiment of this application. The retention probability g may be used for performing determining again before the first terminal device excludes the second resource set from the first resource set.

Optionally, the method further includes:
The first terminal device generates a random number.

The first terminal device excludes the second resource set from the first resource set further includes:

The first terminal device excludes the second resource set from the first resource set when the random number is greater than or equal to the retention probability g.

The first terminal device may further generate a random number. The first terminal device may exclude the second resource set from the first resource set when determining, in any one of the foregoing implementations, that the second resource set can be excluded from the first resource set, and the random number is greater than or equal to the retention probability g; or skip excluding the second resource set from the first resource set when the random number is less than the retention probability g.

Alternatively, the first terminal device may exclude the second resource set from the first resource set when determining, in any one of the foregoing implementations, that the second resource set can be excluded from the first resource set and the random number is less than or equal to the retention probability g; or skip excluding the second resource set from the first resource set when the random number is greater than the retention probability g.

The retention probability g meets 0≤g≤1. The random number generated by the first terminal device is also within a range of [0, 1].

A definition in the current technology may be used for the retention probability. For example, a value of the retention probability is a sidelink probability resource reservation (sl-ProbResourceKeep), or may be a newly defined value. This is not limited in embodiments of this application.

Whether a resource is excluded may be further determined by introducing the retention probability, to avoid misdetermination.

With reference to the five possible implementations, the foregoing describes in detail a process in which the first terminal device determines whether to exclude the second resource set from the first resource set. It should be understood application scenarios of these implementations are not limited in embodiments of this application.

For example, these implementations may be applied to a random selection process. For example, after receiving a feedback message, the first terminal device may determine, based on any one of the implementations provided above, whether to exclude the second resource set from the first resource set. A physical layer of the first terminal device may update a candidate resource set after determining to exclude the second resource set from the first resource set in any one of the implementations, and report the updated candidate resource set to a higher layer such as a MAC layer. The higher layer may select, from the updated candidate resource set, a resource used for sidelink transmission.

For another example, these implementations may also be applied to a resource reselection process. For example, the first terminal device may determine, based on any implementation provided above, whether to exclude a resource from a sidelink grant resource (SL grant). A physical layer of the first terminal device may report, to a higher layer, for example, a MAC layer, a resource that needs to be excluded after determining to exclude the resource from the SL grant in any one of the implementations. The MAC layer may exclude the reported resource and/or a periodic reserved resource of the reported resource from the SL grant. It should be understood that the SL grant is an example of the first resource set, and the reported resource and/or the periodic reserved resource of the reported resource are/is an example of the second resource set.

According to the foregoing solution, the first terminal device may determine, with reference to a received feedback message, whether data is successfully decoded, and introduce a plurality of parameters, such as a quantity Q of data that is not successfully decoded, duration L occupied by receiving a plurality of negative acknowledgment feedback messages, a ratio of a quantity of data that is not successfully decoded to V, and the like, as a basis for determining whether to exclude the second resource set from the first resource set. This can avoid misdetermination to some extent. In addition, because a resource on which collision may occur is excluded from the first resource set that can be originally used for sidelink transmission, the first terminal device can subsequently perform sidelink transmission on a reliable resource, to mitigate possible resource collision between a plurality of terminal devices in a same resource pool. Therefore, mutual interference caused by resource collision of the plurality of terminal devices can be reduced. This facilitates successful data receiving and decoding, and further helps improve transmission reliability of a communication system and system performance.

In addition, an embodiment of this application further provides a sidelink transmission method. For "resource collision" between the plurality of terminal devices, the first terminal device may further sort resource selection probabilities or selection priorities based on received feedback messages, and preferentially select a more reliable resource as a resource with a high selection probability or a resource with a high selection priority, to perform sidelink transmission. In this way, resource collision can be avoided to some extent. This mitigates a problem that transmission reliability of the entire communication system and system performance are reduced due to resource collision.

The following describes in detail a sidelink transmission method provided in an embodiment of this application with reference to FIG. 6.

FIG. 6 is a schematic flowchart of a sidelink transmission method 600 according to an embodiment of this application. As shown in FIG. 6, the method 600 may include step 610 to step 640. The following describes the steps in the method 600 in detail.

In step 610, a first terminal device sends data to a second terminal device. Correspondingly, in step 610, the second terminal device receives the data from the first terminal device.

In step 620, the first terminal device receives a feedback message from the second terminal device.

It should be understood that, for specific processes of step 610 and step 620, refer to related descriptions of step 210 and step 220 in the foregoing method 200. For brevity, details are not described herein again.

It may be understood that the first terminal device sending the data to the second terminal device may also be represented as the first terminal device sends a PSSCH to the second terminal device. The second terminal device receiving the data from the first terminal device may also be represented as that the second terminal device receives the PSSCH from the first terminal device.

In step 630, the first terminal device determines at least two resource subsets of a first resource set in a first preset time period.

For related descriptions of the first resource set, refer to related descriptions of the first resource set in step 220 in the foregoing method 200. For brevity, details are not described herein again.

The first preset time period is the second time window described in the foregoing method 200. The resource in the first resource set in the first preset time period may be specifically a resource that is in the first resource set and that falls in the second time window, or a resource that falls in a resource selection window. It should be understood that a resource that is in the first resource set and that falls in the second time window may also be understood as a resource in the candidate resource set. However, it should be understood that the candidate resource set in the method 600 includes a resource in the first resource set and in the second time window, and the second resource set is not excluded from the first resource set. This is different from the candidate resource set in the method 200 (that is, includes a resource in the third resource set and in the second time window). In this embodiment, the first terminal device may divide resources in the first resource set and in the second time window into at least two resource subsets based on the feedback message. In other words, resources in the candidate resource set are divided into at least two resource subsets based on the feedback message.

The at least two resource subsets may include, for example, at least two resource subsets in a first resource subset, a second resource subset, a third resource subset, and a fourth resource subset.

The first resource subset may include a resource that is in the second time window and that is determined from the first resource set based on a service period of the first terminal device when the first terminal device receives an acknowledgment feedback message (for example, an ACK message) in a predefined time window (for example, the first time window described above). It is assumed that the acknowledgment feedback message is a message fed back for data transmitted on a third resource, and the first resource subset may include a resource determined based on the third resource and the service period of the first terminal device. **In** other words, the first resource subset includes a resource determined based on a service period of the first terminal device and a transmission resource of data corresponding to an acknowledgment feedback message when the first terminal device receives the acknowledgment feedback message.

It should be noted that the first resource set does not include the third resource. **In** other words, the third resource does not belong to the first resource set. Actually, the third resource may be located before the first resource set in time domain. In other words, the first resource set is located after the third resource in time domain. **In** addition, the third resource and the first resource set may occupy a same frequency band or different frequency bands in frequency domain. This is not limited in embodiments of this application.

The fourth resource subset may include a resource that is in the second time window and that is determined by the first terminal device from the first resource set based on a preset period when the first terminal device receives a negative acknowledgment feedback message (for example, a NACK message) in the predefined first time window, that is, a resource of the second resource set and in the second time window described in the foregoing method 200. It is assumed that the negative acknowledgment is a message fed back for the data transmitted on a second resource, and the fourth resource subset may include a resource determined based on the second resource and the preset period. In other words, the fourth resource subset includes a resource determined based on a preset period and a transmission resource of data corresponding to a negative acknowledgment feedback message when the first terminal device receives the negative acknowledgment feedback message.

The preset period may include: all periods in a preconfigured period set; a part of periods in the preconfigured period set; a service period of the first terminal device; or a period other than the service period of the first terminal device in the preconfigured period set. For related descriptions of the preset period, refer to related descriptions of step 230 in the foregoing method 200. For brevity, details are not described herein again.

It should be noted that the first resource set does not include the second resource. In other words, the second resource does not belong to the first resource set. Actually, the second resource may be located before the first resource set in time domain. In other words, the first resource set is located after the second resource in time domain. In addition, the second resource and the first resource set may occupy a same frequency band or different frequency bands in frequency domain. This is not limited in embodiments of this application.

It should be understood that, in this embodiment, the second resource and the third resource are defined for distinguishing between a received negative acknowledgment feedback message and an acknowledgment feedback message. A feedback message for data transmitted on the second resource is a negative acknowledgment feedback message, and a feedback message for data transmitted on the third resource is an acknowledgment feedback message. Actually, both the second resource and the third resource are resources used for sidelink transmission, and neither of them belongs to the first resource set. For example, both the second resource and the third resource may be located before the first resource set in time domain.

The third resource subset may include a resource that is in the second time window and that is determined from the first resource set based on the preset period when the first terminal device receives neither acknowledgment feedback message (for example, an ACK message) nor the negative acknowledgment feedback message (for example, a NACK message) for data transmitted on a resource in the predefined first time window.

The second resource subset may include a resource other than at least one of the first resource subset, the third resource subset, and the resource subset in the resources that are in the first resource set and that fall within the second time window.

The second resource subset may be understood as follows:
If the at least two resource subsets include the first resource subset and the second resource subset, but do not include the third resource subset and the fourth resource subset, the second resource subset may include a resource other than the first resource subset in the resources (or a candidate resource set) that are in the first resource set and that fall within the second time window.

If the at least two resource subsets include the second resource subset and the fourth resource subset, but do not include the first resource subset and the third resource subset, the second resource subset may include a resource other than the fourth resource subset in the resources that are in the first resource set and that fall within the second time window. It may be understood that the fourth resource subset is a set of resources that are in the third resource set and that are in the second time window in the foregoing method 200.

If the at least two resource subsets include the first resource subset, the second resource subset, and the fourth resource subset, but do not include the third resource subset, the second resource subset may include a resource other than the first resource subset and the fourth resource subset in the resources that are in the first resource set and that fall within the second time window.

If the at least two resource subsets include the first resource subset, the second resource subset, the third resource subset, and the fourth resource subset, the second resource subset may include a resource other than the first resource subset, the third resource subset, and the fourth resource subset in the resources that are in the first resource set and that fall within the second time window.

In addition, if the second terminal device outside a communication distance still sends a feedback message to the first terminal device, the first terminal device may further receive the feedback message from the second terminal device and outside the communication distance. In this case, if the first terminal device receives a NACK message from the second terminal device and outside the communication distance, the first terminal device may determine, as a resource in the first resource subset, a resource determined based on the NACK message. Therefore, the resource determined based on the NACK message may include a resource corresponding to the NACK message and a resource determined based on the preset period. In other words, the first resource subset may further include a resource determined based on a resource corresponding to a negative acknowledgment feedback message and the preset period when the first terminal device receives the negative acknowledgment feedback message outside the communication distance. Correspondingly, the fourth resource subset may be further defined as: including a resource that is determined based on a preset period and a second resource corresponding to a negative acknowledgment feedback message when the first terminal device receives the negative acknowledgment feedback message within the communication distance.

In addition, the first terminal device usually sends a PSSCH and a PSCCH together. The PSSCH and the PSCCH may be carried on a same resource, for example, the second resource described above.

It is assumed that the negative acknowledgment feedback message for determining the fourth resource subset described above is fed back for data transmitted on the second resource. In this case, the fourth resource subset may further include a reserved resource indicated by control information (that is, an example of the first control information) in a PSCCH carried on the second resource. The reserved resource may include, for example, a periodic reserved resource and/or a retransmission reserved resource. The periodic reserved resource may include but is not limited to a periodic resource of an initial transmission resource, a periodic resource of a retransmission reserved resource, and the like. Certainly, the reserved resource may further include another possible reserved resource indicated in the control information, for example, a resource indicated by using a frequency domain resource allocation field, or a resource indicated by using a time domain resource allocation field in the first control information. A specific reserved resource is not limited in this embodiment of this application.

Similarly, it is assumed that the acknowledgment feedback message for determining the first resource subset is fed back for data transmitted on the third resource, and the first resource subset may further include a reserved resource indicated by control information (that is, an example of the second control information) in a PSCCH carried on the third resource. The reserved resource indicated by the second control information is similar to the reserved resource indicated by the first control information. For details, refer to the foregoing related descriptions. For brevity, details are not described herein again.

It should be noted that when one or more resources may be determined as resources in the fourth resource subset based on the negative acknowledgment feedback message, or may be determined as resources in the first resource subset based on the acknowledgment feedback message, the one or more resources may be classified as resources in the fourth resource subset.

Herein, each of the at least two resource subsets may correspond to one selection probability, and the at least two resource subsets may correspond to different selection probabilities. The selection probability of the foregoing four resource subsets may be sorted as follows: a selection probability of the first resource subset is higher than a selection probability of the second resource subset, the selection probability of the second resource subset is higher than a selection probability of the third resource subset, and the selection probability of the third resource subset is higher than a selection probability of the fourth resource subset; a selection probability of the first resource subset is higher than that of the third resource subset, a selection probability of the third resource subset is higher than that of the second resource subset, and a selection probability of the second resource subset is higher than that of the fourth resource subset; a selection probability of the first resource subset is higher than or equal to that of the second resource subset, a selection probability of the second resource subset is higher than or equal to that of the third resource subset, and a selection probability of the third resource subset is higher than or equal to that of the fourth resource subset; or a selection probability of the first resource subset is higher than or equal to that of the third resource subset, a selection probability of the third resource subset is higher than or equal to that of the second resource subset, and a selection probability of the second resource subset is higher than or equal to that of the fourth resource subset.

In addition, it should be further noted that if the first terminal device sends data in a groupcast or broadcast mode, there may be a plurality of second terminal devices that receive the data. Different second terminal devices may have different feedback messages for the data, and the HARQ feedback message received by the first terminal device may include both an ACK message and a NACK message. In this case, as long as the first terminal device receives the NACK message, in other words, as long as the first terminal device receives the NACK message within an MCR, the first terminal device may include, in the fourth resource subset, a resource determined based on the second resource corresponding to the NACK message and the preset period. The first terminal device includes, in the first resource subset, a resource determined based on the third resource corresponding to the ACK messages and the service period of the first terminal device when receiving ACK messages of all second terminal devices.

In another implementation, the foregoing four resource subsets may also be associated with different selection priorities. A selection priority of the first resource subset is higher than that of the second resource subset, a selection priority of the second resource subset is higher than that of the third resource subset, and a selection priority of the third resource subset is higher than that of the fourth resource subset; a selection priority of the first resource subset is higher than that of the third resource subset, a selection priority of the third resource subset is higher than that of the second resource subset, and a selection priority of the second resource subset is higher than that of the fourth resource subset; a selection priority of the first resource subset is higher than or equal to that of the second resource subset, a selection priority of the second resource subset is higher than or equal to that of the third resource subset, and a selection priority of the third resource subset is higher than or equal to that of the fourth resource subset; or a selection priority of the first resource subset is higher than or equal to that of the third resource subset, a selection priority of the third resource subset is higher than or equal to that of the second resource subset, and a selection priority of the second resource subset is higher than or equal to that of the fourth resource subset. In step 640, the first terminal device determines, from resources in the first resource set in the first preset time period, a resource used for sidelink transmission.

If it is defined different selection probabilities are defined for the at least two resource subsets, the first terminal device may determine, from the at least two resource subsets and based on the different selection probabilities, a resource used for sidelink transmission.

In an implementation, the first terminal device may preferentially select a resource subset with a high probability to perform sidelink transmission. In other words, when the resources in the first resource set and in the second time window include the first resource subset, the first terminal device preferentially selects the resource in the first resource subset to perform sidelink transmission; otherwise, the first terminal device selects, in descending order of selection probabilities of the second resource subset, the third resource subset, and the fourth resource subset, a resource used for sidelink transmission.

In another implementation, the first terminal device may select, with reference to parameters such as a CBR and a service priority of the first terminal device, a resource subset of a selection probability to perform sidelink transmission.

For example, when the CBR is high, for example, the CBR is higher than (or higher than or equal to) a preset second CBR threshold, a resource used for sidelink transmission may be determined from the first resource subset with a highest selection probability; a resource used for sidelink transmission may be determined from the first resource subset with a highest selection probability and the second resource subset with a second highest selection probability; or a resource used for sidelink transmission may be determined from the first resource subset, the second resource subset, and the third resource subset that are sorted in descending order of the selection probability are respectively the first resource subset, the second resource subset, and the third resource subset. The second CBR threshold may be, for example, a same CBR threshold as the first CBR threshold in the foregoing method 200, or may be different CBR thresholds. This is not limited in embodiments of this application.

For another example, when the service priority of the first terminal device is high, for example, the service priority of the first terminal device is higher than (or higher than or equal to) a preset second priority threshold, a resource used for sidelink transmission may be determined from the first resource subset with a highest selection probability; a resource used for sidelink transmission may be determined from the first resource subset with a highest selection probability and the second resource subset with a second highest selection probability; or a resource used for sidelink transmission may be determined from the first resource subset, the second resource subset, and the third resource subset that are sorted in descending order of the selection probability are respectively the first resource subset, the second resource subset, and the third resource subset. The second priority threshold may be, for example, a same priority threshold as the first priority threshold in the foregoing method 200, or may be different priority thresholds. This is not limited in embodiments of this application.

For another example, when the CBR is high, for example, the CBR is higher than (or higher than or equal to) a preset second CBR threshold, and when the service priority of the first terminal device is high, for example, the service priority of the first terminal device is higher than (or higher than or equal to) a preset second priority threshold, the first terminal device may determine, from the first resource subset with a highest selection probability, a resource used for sidelink transmission; determine, from the first resource subset with a highest selection probability and the second resource subset with a second highest selection probability, a resource used for sidelink transmission; or determine, from the first resource subset, the second resource subset, and the third resource subset that are sorted in descending order of the selection probability are respectively the first resource subset, the second resource subset, and the third resource subset, a resource used for sidelink transmission.

If the at least two resource subsets are associated with different selection priorities, the first terminal device may select, from the at least two resource subsets and based on the different selection priorities, a resource used for sidelink transmission.

The first terminal device may select, from the at least two resource subsets in descending order of selection priorities, a resource used for sidelink transmission. For example, when the resources in the first resource set and in the second time window include the first resource subset, the first terminal device preferentially selects the resource in the first resource subset to perform sidelink transmission; otherwise, the first terminal device selects, in descending order of selection priorities of the second resource subset, the third resource subset, and the fourth resource subset, a resource used for sidelink transmission.

Optionally, step 630 specifically includes: The first terminal device determines the at least two resource subsets in the first resource set in the first preset time period when a first preset condition is met. The first preset condition includes: a priority value of a service priority of the first terminal device is greater than a preset first priority threshold; and/or a CBR is higher than a preset first CBR threshold.

For specific content of the first preset condition, refer to related descriptions in step 230 in the foregoing method 200. For brevity, details are not described herein again.

In this embodiment of this application, the first terminal device may determine the at least two resource subsets in the first resource set in the first preset time period, or perform resource division on resources in the first resource set in the first preset time period when the first preset condition is met. However, the first terminal device may not perform such an operation when the first preset condition is not met. In other words, selection probabilities of the resources in the first resource set in the first preset time period are the same when the first preset condition is not met.

Based on such a design, a terminal device with a low service priority may perform resource division on a candidate resource set based on the foregoing solution. In this way, a resource used for sidelink transmission may be determined based on selection probabilities or selection priorities of different resource subsets. In contrast, a terminal device with a high service priority may not perform resource division on the candidate resource set based on the foregoing solution. In other words, for the terminal devices with a high service priority, selection probabilities or selection priorities of resources in the candidate resource set may be the same.

In addition, when a channel is congested, the terminal device may also perform resource division on the candidate resource set based on the foregoing solution. In this way, a resource used for sidelink transmission may be determined based on selection probabilities or selection priorities of different resource subsets. In contrast, when the channel is not congested, the terminal device may not perform resource division on the candidate resource set based on the foregoing solution. In other words, selection probabilities or selection priorities of the resources in the candidate resource set may be the same.

Further, the method 600 further includes: step 640. Step 640: The first terminal device determines at least two resource subsets of the first resource set in a second preset time period when a second preset condition is met. The second preset condition includes: Duration of the first terminal device after a slot in which the second resource is located reaches a first preset threshold; a quantity of remaining resources in the candidate resource set is less than a second preset threshold; a remaining PDB reaches a third preset threshold; or a CBR is less than or equal to a fourth preset threshold.

For specific content of the second preset condition, refer to related descriptions in step 260 in the foregoing method 200. For brevity, details are not described herein again. A difference lies in that the candidate resource set in this embodiment refers to a resource in the first resource set in the first preset time period.

The resource in the first resource set and in the second preset time period may alternatively be specifically a resource that is in the first resource set and that falls within the second time window. The first terminal device may perform resource selection for a plurality of times, to determine the candidate resource set. The second preset time period may be a preset time period after the first preset time period.

In this embodiment, the second preset time period may be a time period determined when the second preset condition is met and the first terminal device triggers resource reselection. The first terminal device determines the at least two resource subsets in the first resource set and in the second preset time period when the second preset condition is met. That is, the first terminal device redivides a resource that is in the first resource set and that is in the second preset time period, and does not continue to use a previously determined division result.

Based on the foregoing solution, the first terminal device may divide, based on the received feedback message, the resources in the first resource set and in the resource selection window, to obtain the at least two resource subsets. Different resource subsets may correspond to different selection probabilities or selection priorities. The first terminal device may determine, based on a selection probability or a selection priority, a resource used for sidelink transmission. Different terminal devices may select resources with different selection probabilities or selection priorities to perform sidelink transmission, for example, select resources based on parameters such as a service priority of the terminal device and a parameter (such as a CBR) used for representing channel quality or a channel congestion degree. Therefore, possible resource collision can be mitigated to some extent, and mutual interference caused by resource collision of terminal devices can be reduced. This facilitates successful data receiving and decoding, and further helps improve transmission reliability of a communication system and system performance.

In a possible implementation, the at least two resource subsets may be obtained through division by a physical layer of the first terminal device. The first terminal device may report a division result to a higher layer, for example, a MAC layer. In this way, the higher layer determines, based on a selection probability or a selection priority of each resource subset, a resource used for sidelink transmission from the resources (or the candidate resource set) in the first resource set in the first preset time period.

To better understand the method 600, the following uses interaction between a physical layer and a MAC as an example to describe in detail a process in which the first terminal device determines a resource used for sidelink transmission.

FIG. 7 is another schematic flowchart of a sidelink transmission method 700 according to an embodiment of this application. As shown in FIG. 7, the method 700 may include step 710 to step 730. The following describes the steps in the method 700 in detail. It should be understood that the steps in the method 700 may be performed after step 620 in the method 600, and may be understood as further detailed descriptions of step 630 and step 640 in the method 600.

In step 710, a physical layer (the physical layer for short below for ease of description) of a first terminal device determines at least two resource subsets of a first resource set in a first preset time period.

For related descriptions of the first resource set and the first preset time period, refer to related descriptions of the first resource set in step 220 in the method 200 and related descriptions of the first preset time period in the method 600. For brevity, details are not described herein again.

The physical layer may determine at least one resource subset in the first resource set in the first preset time period based on a feedback message received in a predefined time window. As described above, the resource in the first resource set in the first preset time period is a candidate resource set. For ease of description in the following, the resource in the first resource set in the first preset time period is referred to as a candidate resource set for short. The physical layer determines the at least two resource subsets in the candidate resource set in step 710.

As described above, the at least two resource subsets in the candidate resource set may include at least two resource subsets in a first resource subset, a second resource subset, a third resource subset, and a fourth resource subset. The second resource subset is obtained by excluding at least one of the first resource subset, the third resource subset, and the fourth resource subset from the candidate resource set. In other words, the second resource subset may be determined when at least one of the first resource subset, the third resource subset, and the fourth resource subset is determined from the candidate resource set.

In step 720, the physical layer reports a part or all of resources in the at least two resource subsets to a higher layer.

In step 730, the higher layer determines, from the resources reported by the physical layer, a resource used for sidelink transmission.

Because the physical layer may report a resource to the higher layer in different manners, a corresponding processing process of the higher layer is also different. Several possible implementations are listed in the following.

In a possible implementation, the physical layer may directly report the at least two resource subsets determined in step 710 to the higher layer.

In another possible implementation, the physical layer may report a resource subset other than the second resource subset in the at least two resource subsets determined in step 710 and the candidate resource set to the higher layer. The resource subset other than the second resource subset in the at least two resource subsets may include one or more of the first resource subset, the third resource subset, and the fourth resource subset. This depends on how the physical layer divides the candidate resource set.

For example, if the physical layer divides resources in the candidate resource set into the first resource subset and the second resource subset, the physical layer may report the candidate resource set and the first resource subset. The higher layer determines, based on the first resource subset and the candidate resource set that are reported by the physical layer, a resource other than the first resource subset in the candidate resource set as the second resource subset. Therefore, the first resource subset and the second resource subset in the candidate resource set may be obtained.

For another example, if the physical layer divides resources in the candidate resource set into the second resource subset and the fourth resource subset, the physical layer may report the candidate resource set and the fourth resource subset. The higher layer determines, based on the fourth resource subset and the candidate resource set that are reported by the physical layer, a resource other than the fourth resource subset in the candidate resource set as the second resource subset. Therefore, the second resource subset and the fourth resource subset in the candidate resource set may be obtained.

The higher layer may determine the at least two resource subsets based on reporting of the physical layer, and further determine selection probabilities of the at least two resource subsets, or associate different resource subsets with different selection priorities.

For example, a selection probability of the first resource subset is higher than a selection probability of the second resource subset, the selection probability of the second resource subset is higher than a selection probability of the third resource subset, and the selection probability of the third resource subset is higher than a selection probability of the fourth resource subset.

For another example, a selection priority associated with the first resource subset is higher than a selection priority associated with the second resource subset, a selection priority associated with the second resource subset is higher than a selection priority associated with the third resource subset, and a selection priority associated with the third resource subset is higher than a selection priority associated with the fourth resource subset.

It should be understood that the foregoing listed order of the selection probabilities of the four resource subsets and the order of the selection priorities are merely for ease of distinguishing the four resource subsets, and do not indicate that the physical layer divides the candidate resource set into the four resource subsets. For example, when the physical layer divides the candidate resource set into the first resource subset and the second resource subset, a selection probability of the first resource subset is higher than a selection probability of the second resource subset, or a selection priority associated with the first resource subset is higher than a selection priority associated with the second resource subset. For another example, when the physical layer divides the candidate resource set into the second resource subset and the fourth resource subset, a selection probability of the second resource subset is higher than that of the fourth resource subset, or a selection priority associated with the second resource subset is higher than a selection priority associated with the fourth resource subset. By analogy, for brevity, examples are not described herein one by one.

Based on the selection probability or the selection priority listed above, the higher layer may select, for the first terminal device, a resource used for sidelink transmission.

As described in step 640 of the foregoing method 600, for example, the higher layer may preferentially select a resource subset with a higher probability or a higher priority to perform sidelink transmission, or may select, with reference to parameters such as a CBR and a service priority of the higher layer, a resource subset with a selection probability or associated with a selection priority to perform sidelink transmission. This is not limited in embodiments of this application.

In still another possible implementation, the physical layer may sort the at least two resource subsets determined in step 710 in descending order of selection probabilities or in descending order of selection priorities, and report a part or all of resources in the sorted at least two resource subsets to the higher layer.

For example, the physical layer divides resources in the candidate resource set into the first resource subset (for example, denoted as S1), the second resource subset (for example, denoted as S2), the third resource subset (for example, denoted as S3), and the fourth resource subset (for example, denoted as S4).

It is assumed that a selection probability of the first resource subset is higher than a selection probability of the second resource subset, the selection probability of the second resource subset is higher than a selection probability of the third resource subset, and the selection probability of the third resource subset is higher than a selection probability of the fourth resource subset. In this case, the four resource subsets are sorted in descending order of selection probabilities as follows: {SA1, SA2, SA3, SA4}. Because a universal set of the four resource subsets is a candidate resource set, the candidate resource set includes Mₜₒₜₐₗ resources in total. If the Mₜₒₜₐₗ resources are sorted in descending order of selection probabilities, for the first terminal device, a resource in the front is more reliable.

The physical layer may report first A% resources (for example, A%xMₜₒₜₐₗ) to the higher layer. A may be a predefined value, for example, predefined in a protocol, or may be preconfigured by a network device by using signaling, or may be configured by a higher layer. This is not limited in embodiments of this application. It may be understood that A may be set to a value in (0, 100]. When a value of A is 100, that is, the physical layer reports all the determined at least two resources (that is, the Mₜₒₜₐₗ resources) to the higher layer after sorting the determined resources in descending order of selection probabilities.

For example, the physical layer may report first 20% resources (that is, the first 20%xMₜₒₜₐₗ) to the higher layer.

In addition, it is assumed that a selection priority of the first resource subset is higher than that of the second resource subset, a selection priority of the second resource subset is higher than that of the third resource subset, and a selection priority of the third resource subset is higher than that of the fourth resource subset. In this case, the four resource subsets are sorted in descending order of selection probabilities as follows: {SA1, SA2, SA3, SA4}. Because a universal set of the four resource subsets is a candidate resource set, the candidate resource set includes Mₜₒₜₐₗ resources in total. If the Mₜₒₜₐₗ resources are sorted in descending order of selection probabilities, for the first terminal device, a resource in the front is more reliable.

The physical layer may report A%xMₜₒₜₐₗ resources ranked in the first A% to the higher layer. It should be understood that for related descriptions of A, refer to the foregoing related descriptions. For brevity, details are not described herein again.

For example, the physical layer may report the first 10% resources (that is, the first 10%xMₜₒₜₐₗ) to the higher layer.

In another possible implementation, the first terminal device may sort, in order of the first resource subset, the second resource subset, the third resource subset, and the fourth resource subset, the resources in the first resource set in the first preset time period, or sort, in order of the first resource subset, the third resource subset, the second resource subset, and the fourth resource subset, the resources in the first resource set in the first preset time period, and determine, from a part or all of the resources, the resource used for sidelink transmission.

For example, a total quantity of resources in the first resource set in the first preset time period may be Mₜₒₜₐₗ, and the first terminal device may determine, from first A%xMₜₒₜₐₗ resources in the Mₜₒₜₐₗ resources obtained after sorting, a resource used for sidelink transmission. A may be a value in (0, 100]. When a value of A is 100, that is, the first terminal device determines, from the Mₜₒₜₐₗ resources, a resource used for sidelink transmission.

The higher layer may preferentially select, based on the resource reported by the physical layer, a resource used for sidelink transmission from resources that are ranked in the front, or may select, based on a same probability, a resource reported by the physical layer. This is not limited in embodiments of this application.

Based on the foregoing solution, the first terminal device may divide, based on the received feedback message, the resources in the first resource set and in the resource selection window, to obtain the at least two resource subsets. Different resource subsets may correspond to different selection probabilities or selection priorities. The first terminal device may determine, based on a selection probability or a selection priority, a resource used for sidelink transmission. Different terminal devices may select resources with different selection probabilities or selection priorities to perform sidelink transmission, for example, select resources based on a service priority of the terminal device and a parameter (such as a CBR) used for representing channel quality or a channel congestion degree. Therefore, possible resource collision can be mitigated to some extent, and mutual interference caused by resource collision of terminal devices can be reduced. This facilitates successful data receiving and decoding, and further helps improve transmission reliability of a communication system and system performance.

The foregoing describes, in detail with reference to FIG. 2 to FIG. 7, the methods provided in embodiments of this application. The following describes, in detail with reference to FIG. 8 to FIG. 10, apparatuses provided in embodiments of this application.

FIG. 8 is a schematic block diagram of a communication apparatus according to an embodiment of this application. As shown in FIG. 8, the apparatus 800 may include a processing unit 810 and a transceiver unit 820.

Optionally, the communication apparatus 800 may correspond to the first terminal device in the foregoing method embodiments, for example, may be the first terminal device, or a component (for example, a chip or a chip system) configured in the first terminal device.

It should be understood that the communication apparatus 800 may correspond to the first terminal device in the method 200, the method 600, or the method 700 according to embodiments of this application. The communication apparatus 800 may include units configured to perform the method performed by the first terminal device in the method 200 in FIG. 2, the method 600 in FIG. 6, or the method 700 in FIG. 7. In addition, the units in the communication apparatus 800 and the foregoing other operations and/or functions are respectively intended to implement corresponding procedures of the method in FIG. 2, the method 600 in FIG. 6, or the method 700 in FIG. 7.

The transceiver unit 820 may be configured to receive a feedback message from a second terminal device when the communication apparatus 800 is configured to perform the method 200 in FIG. 2. The feedback message indicates whether data transmitted on a first resource is successfully decoded. The processing unit 810 may be configured to exclude a second resource set from a first resource set when a negative acknowledgment feedback message is received, to obtain a third resource set. The first resource set includes a resource that can be used by the communication apparatus 800 to perform sidelink transmission, and the second resource set includes a resource determined based on the first resource and a preset period. The processing unit 810 may be further configured to determine, based on the third resource set, a resource used for sidelink transmission.

Optionally, the preset period includes:
all periods in a preconfigured period set;
a part of periods in the preconfigured period set;
a service period of the communication apparatus 800; or
a period other than the service period of the communication apparatus 800 in the preconfigured period set.

Optionally, the second resource set further includes a reserved resource determined based on control information. The control information is information transmitted on the first resource, and the control information includes an indication of the reserved resource.

Optionally, the processing unit 810 is specifically configured to exclude the second resource set from the first resource set based on the received negative acknowledgment feedback message when a first preset condition is met.

The first preset condition includes: a priority value of a service priority of the communication apparatus 800 is greater than a preset first priority threshold, and/or a channel busy ratio CBR is higher than a preset first CBR threshold.

Optionally, the first priority threshold is configured by using signaling, or the first priority threshold is the same as a preconfigured preemption threshold.

Optionally, the processing unit 810 is further configured to restore a part or all of resources in the second resource set when a second preset condition is met. The restored resources may be reused by the communication apparatus 800 to perform sidelink transmission. The second preset condition includes:

Duration of the communication apparatus 800 after a time unit in which the first resource is located reaches a first preset threshold;
a quantity of remaining resources in the third resource set in a preset time period is less than a second preset threshold;
a remaining packet delay budget reaches a third preset threshold; or
a CBR is less than or equal to a fourth preset threshold.

Optionally, the negative acknowledgment feedback message is received in a predefined time window. The time window includes a time interval from a first time unit to a second time unit. The first time unit is a time unit n-kxY₁. The second time unit is a time unit n or a time unit n-Y₂. The time unit n is a time unit in which the communication apparatus 800 triggers resource selection. 0<k≤C, C, Y₁, and Y₂ are preconfigured values, C is a positive integer, and n, Y₁, and Y₂ are all positive numbers.

Optionally, the processing unit 810 is further configured to skip excluding a resource from the first resource set based on the first resource corresponding to an acknowledgment feedback message and the preset period when the acknowledgment feedback message is received.

Optionally, the processing unit 810 is further configured to exclude the second resource set from the first resource set when the negative acknowledgment feedback message is received, and a distance between the second terminal device and the communication apparatus 800 is less than or equal to a communication distance; and configured to skip excluding a resource from the first resource set based on the first resource corresponding to the negative acknowledgment feedback message and the preset period when the negative acknowledgment feedback message is received, and the distance between the second terminal device and the communication apparatus 800 is greater than the communication distance.

Optionally, the first resource set is a resource set from which the communication apparatus 800 selects a resource in a random resource selection manner.

It should be understood that the processing unit 810 may be configured to perform step 230 to step 260 in the method 200, and the transceiver unit 820 may be configured to perform step 210 and step 220 in the method 200. It should be understood that a specific process in which each unit performs the foregoing corresponding steps is described in detail in the foregoing method embodiments. For brevity, details are not described herein.

When the communication apparatus 800 is configured to perform the method 600 in FIG. 6, the transceiver unit 820 may be configured to receive a feedback message from a second terminal device. The feedback message indicates whether data sent by the communication apparatus 800 is successfully decoded. The processing unit 810 may be configured to determine at least two resource subsets of a first resource set in a first preset time period based on the feedback message. Each of the at least two resource subsets corresponds to a selection probability, a resource subset with a high selection probability is preferentially used by the first terminal device to perform sidelink transmission when compared with a resource subset with a low selection probability. The first resource set includes a resource that can be used by the communication apparatus 800 to perform sidelink transmission. The processing unit 810 may be further configured to determine, based on selection probabilities of the at least two resource subsets and from resources in the first resource set in the first preset time period, a resource used for sidelink transmission.

Optionally, the at least two resource subsets include at least two of a first resource subset, a second resource subset, a third resource subset, and a fourth resource subset, a selection probability of the first resource subset is higher than a selection probability of the second resource subset, the selection probability of the second resource subset is higher than a selection probability of the third resource subset, and the selection probability of the third resource subset is higher than a selection probability of the fourth resource subset. The first resource subset includes a resource that is in the first preset time period and that is determined from the first resource set based on a service period of the communication apparatus 800 when the communication apparatus 800 receives an acknowledgment feedback message in a predefined time window. The acknowledgment feedback message indicates that data sent by the communication apparatus 800 is successfully decoded. The fourth resource subset includes a resource that is in the first preset time period and that is determined from the first resource set based on a preset period when the communication apparatus 800 receives a negative acknowledgment feedback message in the time window. The negative acknowledgment feedback message indicates that data sent by the communication apparatus 800 is not successfully decoded. The third resource subset includes a resource that is in the first preset time period and that is determined from the first resource set based on the preset period when the communication apparatus 800 receives neither the acknowledgment feedback message nor the negative acknowledgment feedback message for data transmitted on a resource in the time window. The second resource subset includes a resource other than at least one of the first resource subset, the third resource subset, and the fourth resource subset in the resources that are in the first resource set and that are in the first preset time period.

Optionally, the negative acknowledgment feedback message is fed back for data transmitted on a second resource. The fourth resource subset further includes a reserved resource determined based on first control information. The first control information is information transmitted on the second resource, and the first control information includes indication information of the reserved resource.

Optionally, the acknowledgment feedback message is fed back for data transmitted on a third resource. The first resource subset further includes a reserved resource determined based on second control information. The second control information is information transmitted on the third resource, and the second control information includes indication information of the reserved resource.

Optionally, the first resource subset further includes a resource that is in the preset time period and that is determined from the first resource set based on the preset period when the communication apparatus 800 receives, in the time window, a negative acknowledgment feedback message outside a communication distance.

Optionally, the time window includes a time interval from a first time unit to a second time unit. The first time unit is a time unit n-kxY₁. The second time unit is a time unit n or a time unit n-Y₂. The time unit n is a time unit in which the communication apparatus 800 triggers resource selection. 0<k≤C, C, Y₁, and Y₂ are preconfigured values, C is a positive integer, and n, Y₁, and Y₂ are all positive numbers.

Optionally, the preset period includes:
all periods in a preconfigured period set;
a part of periods in the preconfigured period set;
a service period of the communication apparatus 800; or
a period other than the service period of the communication apparatus 800 in the preconfigured period set.

Optionally, the processing unit 810 is further configured to determine, from the first resource subset, the resource used for sidelink transmission when a CBR is higher than a preset second CBR threshold, and/or when a priority value of a service priority of the communication apparatus 800 is greater than a second priority threshold.

Optionally, the processing unit 810 is further configured to determine, from the first resource subset and the second resource subset, the resource used for sidelink transmission when a CBR is higher than a preset second CBR threshold, and/or when a priority value of a service priority is greater than a second priority threshold.

Optionally, the processing unit 810 is further configured to determine, from the first resource subset, the second resource subset, and the third resource subset, the resource used for sidelink transmission when a CBR is higher than a preset second CBR threshold, and/or when a priority value of a service priority is greater than a second priority threshold.

Optionally, the processing unit 810 is further configured to determine the at least two resource subsets in the first resource set in the first preset time period when a first preset condition is met.

The first preset condition includes: a priority value of a service priority of the communication apparatus 800 is greater than a preset first priority threshold, and/or a channel busy ratio CBR is higher than a preset first CBR threshold.

Optionally, the first priority threshold is configured by using signaling, or the first priority threshold is the same as a preconfigured preemption threshold.

Optionally, the processing unit 810 is further configured to determine at least two resource subsets of the first resource set in a second preset time period when a second preset condition is met.

The second preset condition includes:
Duration of the communication apparatus 800 after a time unit in which the second resource is located reaches a first preset threshold;
a quantity of remaining resources in the resources that are in the first resource set and that are in the first preset time period is less than a second preset threshold;
a remaining packet delay budget reaches a third preset threshold; or
a CBR is less than or equal to a fourth preset threshold.

Optionally, the first resource set is a resource set from which the communication apparatus 800 selects a resource in a random resource selection manner. It should be understood that the transceiver unit 820 may be configured to perform step 610 and step 620 in the method 600, and the processing unit 810 may be configured to perform step 630 and step 640 in the method 600. It should be understood that a specific process in which each unit performs the foregoing corresponding steps is described in detail in the foregoing method embodiments. For brevity, details are not described herein.

When the communication apparatus 800 is configured to perform the method 700 in FIG. 7, the processing unit 810 may be configured to perform step 710 in the method 700, and the transceiver unit 820 may be configured to perform step 720 in the method 700. It should be understood that a specific process in which each unit performs the foregoing corresponding steps is described in detail in the foregoing method embodiments. For brevity, details are not described herein.

Optionally, the communication apparatus 800 may correspond to the second terminal device in the foregoing method embodiments, for example, may be the second terminal device, or a component (for example, a chip or a chip system) configured in the second terminal device.

It should be understood that the communication apparatus 800 may correspond to the second terminal device in the method 200 or the method 600 in embodiments of this application. The communication apparatus 800 may include units configured to perform the method performed by the second terminal device in the method 200 in FIG. 2 or the method 600 in FIG. 6. In addition, the units in the communication apparatus 800 and the foregoing other operations and/or functions are respectively intended to implement corresponding procedures of the method 200 in FIG. 2 or the method 600 in FIG. 6.

When the communication apparatus 800 is configured to perform the method 200 in FIG. 2 or the method 600 in FIG. 6, the transceiver unit 820 may be configured to receive data from the first terminal device. The transceiver unit 820 may be further configured to send a feedback message to the first terminal device. The feedback message indicates whether the received data is successfully decoded.

Optionally, the transceiver unit 820 is specifically configured to receive the data from the first terminal device on the first resource.

It should be understood that when the communication apparatus 800 is configured to perform the method 200 in FIG. 2, the transceiver unit 820 may be configured to perform step 210 and step 220 in the method 200. When the communication apparatus 800 is configured to perform the method 600 in FIG. 6, the transceiver unit 820 may be configured to perform step 610 and step 620 in the method 600.

It should be understood that a specific process in which each unit performs the foregoing corresponding steps is described in detail in the foregoing method embodiments. For brevity, details are not described herein.

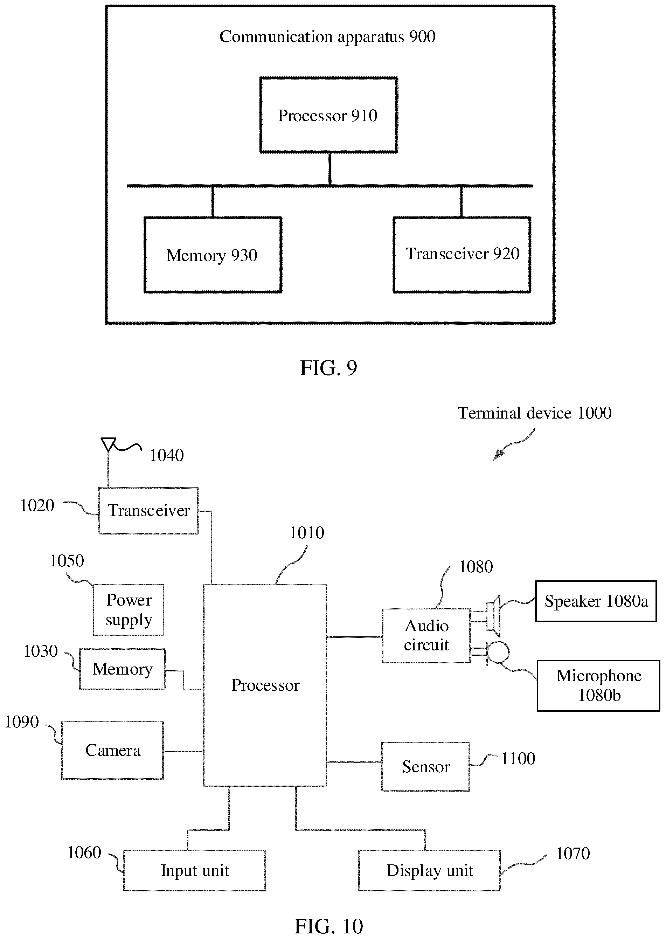

When the communication apparatus 800 is a terminal device (for example, the first terminal device or the second communication device), the transceiver unit 820 in the communication apparatus 800 may be implemented by using a transceiver, for example, may correspond to a transceiver 920 in a communication apparatus device 900 shown in FIG. 9 or a transceiver 1020 in a terminal device 1000 shown in FIG. 10. The processing unit 810 in the communication apparatus 800 may be implemented by using at least one processor, for example, may correspond to a processor 910 in a communication apparatus 900 shown in FIG. 9 or a processor 1010 in a terminal device 1000 shown in FIG. 10.

When the communication apparatus 800 is a chip or a chip system configured in a communication device (for example, the first terminal device or the second terminal device), the transceiver unit 820 in the communication apparatus 800 may be implemented through an input/output interface, a circuit, or the like, and the processing unit 810 in the communication apparatus 800 may be implemented by using a processor, a microprocessor, an integrated circuit, or the like integrated in the chip or the chip system.

FIG. 9 is another schematic block diagram of a communication apparatus according to an embodiment of this application. As shown in FIG. 9, the apparatus 900 may include a processor 910, a transceiver 920, and a memory 930. The processor 910, the transceiver 920, and the memory 930 communicate with each other through an internal connection path. The memory 930 is configured to store instructions. The processor 910 is configured to execute the instructions stored in the memory 930, to control the transceiver 920 to send a signal and/or to receive a signal.

It should be understood that the communication apparatus 900 may correspond to the first terminal device or the second terminal device in the foregoing method embodiments, and may be configured to perform steps and/or procedures performed by the first terminal device or the second terminal device in the foregoing method embodiments. Optionally, the memory 930 may include a read-only memory and a random access memory, and provide instructions and data for the processor. A part of the memory may further include a non-volatile random access memory. The memory 930 may be an independent component, or may be integrated into the processor 910. The processor 910 may be configured to execute the instructions stored in the memory 930, and when the processor 910 executes the instructions stored in the memory, the processor 910 is configured to perform steps and/or procedures corresponding to the first terminal device or the second terminal device in the foregoing method embodiments.

Optionally, the communication apparatus 900 is the first terminal device in the foregoing embodiments.

Optionally, the communication apparatus 900 is the second terminal device in the foregoing embodiments.

The transceiver 920 may include a transmitter machine and a receiver machine. The transceiver 920 may further include an antenna, and there may be one or more antennas. The processor 910, the memory 930, and the transceiver 920 may be components integrated on different chips. For example, the processor 910 and the memory 930 may be integrated into a baseband chip, and the transceiver 920 may be integrated into a radio frequency chip. The processor 910, the memory 930, and the transceiver 920 may also be components integrated on a same chip. This is not limited in this application.

Optionally, the communication apparatus 900 is a component, such as a chip or a chip system, configured in the first terminal device.

Optionally, the communication apparatus 900 is a component, such as a chip or a chip system, configured in the second terminal device.

The transceiver 920 may alternatively be a communication interface, for example, an input/output interface or a circuit. The transceiver 920, the processor 910, and the memory 920 may be integrated into a same chip, for example, integrated into a baseband chip.

FIG. 10 is a schematic diagram of a structure of a terminal device according to an embodiment of this application. The terminal device may be applied to the system shown in FIG. 1. As shown in FIG. 10, the terminal device 1000 includes a processor 1010 and a transceiver 1020. Optionally, the terminal device 1000 further includes a memory 1030. The processor 1010, the transceiver 1020, and the memory 1030 may communicate with each other through an internal connection path, to transfer a control signal and/or a data signal. The memory 1030 is configured to store a computer program. The processor 1010 is configured to invoke the computer program from the memory 1030 and run the computer program, to control the transceiver 1020 to send and receive a signal. Optionally, the terminal device 1000 may further include an antenna 1040, configured to send, by using a radio signal, uplink data or uplink control signaling output by the transceiver 1020.

The processor 1010 and the memory 1030 may be integrated into one processing apparatus. The processor 1010 is configured to execute program code stored in the memory 1030, to implement the foregoing functions. During specific implementation, the memory 1030 may alternatively be integrated into the processor 1010, or may be independent of the processor 1010. The processor 1010 may correspond to the processing unit 810 in FIG. 8 or the processor 910 in FIG. 9.

The transceiver 1020 may correspond to the transceiver unit 820 in FIG. 8 or the transceiver 920 in FIG. 9. The transceiver 1020 may include a receiver (or referred to as a receiver machine or a receiver circuit) and a transmitter (or referred to as a transmitter machine or a transmitter circuit). The receiver is configured to receive a signal, and the transmitter is configured to transmit a signal.

Optionally, the terminal device 1000 may further include a power supply 1050, configured to supply power to various components or circuits in the terminal device 1000.

In addition, to improve functions of the terminal device, the terminal device 1000 may further include one or more of an input unit 1060, a display unit 1070, an audio circuit 1080, a camera 1090, a sensor 1100, and the like, and the audio circuit may further include a speaker 1080a, a microphone 1080b, and the like.

It should be understood that, the terminal device 1000 shown in FIG. 10 can implement processes related to the first terminal device in the method embodiments shown in FIG. 2, FIG. 6, and FIG. 7, or processes related to the second terminal device in the method embodiments shown in FIG. 2 and FIG. 6. The operations and/or the functions of the modules in the terminal device 1000 are intended to implement corresponding procedures in the foregoing method embodiments. For details, refer to the descriptions in the foregoing method embodiments. To avoid repetition, detailed descriptions are properly omitted herein.

When the terminal device 1000 is configured to perform an operation procedure of the first terminal device in the foregoing method embodiment, the processor 1010 may be configured to perform an action that is internally implemented by the first terminal device and that is described in the foregoing method embodiment, for example, determine a resource used for sidelink transmission. The transceiver 1020 may be configured to perform an action sent by the first terminal device to the second terminal device or an action received from the second terminal device described in the foregoing method embodiments. For details, refer to the descriptions in the foregoing method embodiments. Details are not described herein again.

When the terminal device 1000 is configured to perform the operation procedure of the second terminal device in the foregoing method embodiment, the processor 1010 may be configured to perform an action that is internally implemented by the second terminal device and that is described in the foregoing method embodiment, for example, decode received data. The transceiver 1020 may be configured to perform an action received by the second terminal device from the first terminal device or an action sent to the first terminal device described in the foregoing method embodiment. For details, refer to the descriptions in the foregoing method embodiments. Details are not described herein again.

This application further provides a processing apparatus, including at least one processor. The at least one processor is configured to execute a computer program stored in a memory, to enable the processing apparatus to perform the method performed by the test device, the method performed by the first terminal device, or the method performed by the second terminal device in the foregoing method embodiments.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, to enable the processing apparatus to perform the method performed by the first terminal device or the method performed by the second terminal device in the foregoing method embodiments.

An embodiment of this application further provides a processing apparatus, including a processor and a memory. The memory is configured to store a computer program, and the processor is configured to invoke the computer program from the memory and run the computer program, to enable the processing apparatus to perform the method performed by the first terminal device or the method performed by the second terminal device in the foregoing method embodiments.

It should be understood that, the processing apparatus may be one or more chips. For example, the processing apparatus may be a field programmable gate array (field programmable gate array, FPGA), an application-specific integrated circuit (application-specific integrated circuit, ASIC), a system on chip (system on chip, SoC), a central processing unit (central processor unit, CPU), a network processor (network processor, NP), a digital signal processing circuit (digital signal processor, DSP), a micro controller (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the methods disclosed with reference to embodiments of this application may be directly performed and completed by a hardware processor, or may be performed and completed by using a combination of hardware and software modules in the processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that the processor in this embodiment of this application may be an integrated circuit chip and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory in the system and the method described in this specification is intended to include, but not limited to, these memories and any memory of another proper type.

According to the method provided in embodiments of this application, this application further provides a computer program product. The computer program product includes computer program code. When the computer program code is run on a computer, the computer is enabled to perform the method performed by the first terminal device in the embodiment shown in FIG. 2, FIG. 6, or FIG. 7, or the computer is enabled to perform the method performed by the second terminal device in the embodiment shown in FIG. 2 or FIG. 6.

According to the method provided in embodiments of this application, this application further provides a computer-readable storage medium. The computer-readable storage medium stores program code. When the program code is run on a computer, the computer is enabled to perform the method performed by the first terminal device in the embodiment shown in FIG. 2, FIG. 6, or FIG. 7, or the computer is enabled to perform the method performed by the second terminal device in the embodiment shown in FIG. 2 or FIG. 6.

According to the method provided in embodiments of this application, this application further provides a communication system. The communication system may include the foregoing first terminal device and the foregoing second terminal device.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as an internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by using hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sidelink transmission method (200, 600, 700), comprising:
receiving, by a first terminal device (121-124), a feedback message (1-4) from a second terminal device (121-124), wherein the feedback message (1-4) indicates whether data (1-4) sent by the first terminal device (121-124) is successfully decoded;
determining, by the first terminal device (121-124), at least two resource subsets of a first resource set in a first preset time period based on the feedback message (1-4), wherein each of the at least two resource subsets correspond to a selection probability, a resource subset with a high selection probability is preferentially used by the first terminal device (121-124) to perform sidelink transmission when compared with a resource subset with a low selection probability, and the first resource set comprises a resource that can be used by the first terminal device (121-124) to perform sidelink transmission; and **characterized by**
determining, by the first terminal device (121-124) based on a selection probability of at least one of the at least two resource subsets, a resource used for sidelink transmission from resources in the first resource set in the first preset time period;
wherein the at least two resource subsets comprise at least two of a first resource subset, a second resource subset, a third resource subset, and a fourth resource subset, a selection probability of the first resource subset is higher than a selection probability of the second resource subset, the selection probability of the second resource subset is higher than a selection probability of the third resource subset, and the selection probability of the third resource subset is higher than a selection probability of the fourth resource subset; and
the first resource subset comprises a resource that is in the first preset time period and that is determined from the first resource set based on a service period (2P) of the first terminal device when the first terminal device receives the feedback message, which is an acknowledgment feedback message, in a predefined time window, wherein the acknowledgment feedback message indicates that the data (1-4) sent by the first terminal device is successfully decoded; the fourth resource subset comprises a resource that is in the first preset time period and that is determined from the first resource set based on a preset period when the first terminal device receives the feedback message, which is a negative acknowledgment feedback message, in the time window, wherein the negative acknowledgment feedback message indicates that the data (1-4) sent by the first terminal device is not successfully decoded; the third resource subset comprises a resource that is in the first preset time period and that is determined from the first resource set based on the preset period when the first terminal device receives neither the acknowledgment feedback message nor the negative acknowledgment feedback message for data (1-4) transmitted on a resource in the time window; and the second resource subset comprises a resource other than at least one of the first resource subset, the third resource subset, and the fourth resource subset in the resources that are in the first resource set and that are in the first preset time period.

2. The method (200, 600, 700) according to claim 1, wherein the negative acknowledgment feedback message is fed back for data (1-4) transmitted on a second resource, the fourth resource subset further comprises a reserved resource determined based on first control information, the first control information is information transmitted on the second resource, and the first control information comprises indication information of the reserved resource.

3. The method (200, 600, 700) according to claim 1 or 2, wherein the acknowledgment feedback message is fed back for data (1-4) transmitted on a third resource, the first resource subset further comprises a reserved resource determined based on second control information, the second control information is information transmitted on the third resource, and the second control information comprises indication information of the reserved resource.

4. The method (200, 600, 700) according to any one of claims 1 to 3, wherein the first resource subset further comprises a resource that is in the preset time period and that is determined from the first resource set based on the preset period when the first terminal device receives, in the time window, a negative acknowledgment feedback message outside a communication distance.

5. A communication system (100), comprising at least one network device (110) and at least two terminal devices (121-124) configured to implement the steps of the methods (200, 600, 700) according to any one or more of claims 1 to 4.

## Patentansprüche

1. Sidelink-Übertragungsverfahren (200, 600, 700), das umfasst:
Empfangen, durch ein erstes Endgerät (121-124), einer Rückmeldungsnachricht (1-4) von einem zweiten Endgerät (121-124), wobei die Rückmeldungsnachricht (1-4) angibt, ob Daten (1-4), die durch das erste Endgerät (121-124) gesendet werden, erfolgreich decodiert werden;
Bestimmen, durch das erste Endgerät (121-124), von mindestens zwei Ressourcenteilmengen einer ersten Ressourcenmenge in einem ersten voreingestellten Zeitraum basierend auf der Rückmeldungsnachricht (1-4), wobei jede der mindestens zwei Ressourcenteilmengen einer Auswahlwahrscheinlichkeit entspricht, eine Ressourcenteilmenge mit einer hohen Auswahlwahrscheinlichkeit im Vergleich zu einer Ressourcenteilmenge mit einer niedrigen
Auswahlwahrscheinlichkeit vorzugsweise durch das erste Endgerät (121-124) verwendet wird, um eine Sidelink-Übertragung durchzuführen, und die erste Ressourcenmenge eine Ressource, die durch das erste Endgerät (121-124) verwendet werden kann, um die Sidelink-Übertragung durchzuführen, umfasst; und
**gekennzeichnet durch**
Bestimmen, durch das erste Endgerät (121-124) basierend auf einer Auswahlwahrscheinlichkeit von mindestens einer der mindestens zwei Ressourcenteilmengen, einer Ressource, die für die Sidelink-Übertragung verwendet wird, aus Ressourcen in der ersten Ressourcenmenge in dem ersten voreingestellten Zeitraum;
wobei die mindestens zwei Ressourcenteilmengen mindestens zwei von einer ersten Ressourcenteilmenge, einer zweiten Ressourcenteilmenge, einer dritten Ressourcenteilmenge und einer vierten Ressourcenteilmenge umfassen, eine Auswahlwahrscheinlichkeit der ersten Ressourcenteilmenge höher als eine Auswahlwahrscheinlichkeit der zweiten Ressourcenteilmenge ist, die Auswahlwahrscheinlichkeit der zweiten Ressourcenteilmenge höher als eine Auswahlwahrscheinlichkeit der dritten Ressourcenteilmenge ist, und die Auswahlwahrscheinlichkeit der dritten Ressourcenteilmenge höher als eine Auswahlwahrscheinlichkeit der vierten Ressourcenteilmenge ist; und
die erste Ressourcenteilmenge eine Ressource umfasst, die in dem ersten voreingestellten Zeitraum liegt und die aus der ersten Ressourcenmenge basierend auf einer Dienstperiode (2P) des ersten Endgeräts bestimmt wird, wenn das erste Endgerät die Rückmeldungsnachricht, die eine Bestätigungsrückmeldungsnachricht ist, in einem vordefinierten Zeitfenster empfängt, wobei die
Bestätigungsrückmeldungsnachricht angibt, dass die Daten (1-4), die durch das erste Endgerät gesendet werden, erfolgreich decodiert werden; die vierte Ressourcenteilmenge eine Ressource umfasst, die in dem ersten voreingestellten Zeitraum liegt und die aus der ersten Ressourcenmenge basierend auf einer voreingestellten Periode bestimmt wird, wenn das erste Endgerät die Rückmeldungsnachricht, die eine negative Bestätigungsrückmeldungsnachricht ist, in dem Zeitfenster empfängt,
wobei die negative Bestätigungsrückmeldungsnachricht angibt, dass die Daten (1-4), die durch das erste Endgerät gesendet werden, nicht erfolgreich decodiert werden;
die dritte Ressourcenteilmenge eine Ressource umfasst, die in dem ersten voreingestellten Zeitraum liegt und die aus der ersten Ressourcenmenge basierend auf der voreingestellten Periode bestimmt wird, wenn das erste Endgerät weder die Bestätigungsrückmeldungsnachricht noch die negative
Bestätigungsrückmeldungsnachricht für Daten (1-4), die auf einer Ressource in dem Zeitfenster übertragen werden, empfängt; und die zweite Ressourcenteilmenge eine andere Ressource als mindestens eine der ersten Ressourcenteilmenge, der dritten Ressourcenteilmenge und der vierten Ressourcenteilmenge in den Ressourcen, die sich in der ersten Ressourcenmenge befinden und die in dem ersten voreingestellten Zeitraum liegen, umfasst.

2. Verfahren (200, 600, 700) nach Anspruch 1, wobei die negative Bestätigungsrückmeldungsnachricht für Daten (1-4), die auf einer zweiten Ressource übertragen werden, zurückgemeldet wird, die vierte Ressourcenteilmenge ferner eine reservierte Ressource umfasst, die basierend auf ersten Steuerinformationen bestimmt wird, die ersten Steuerinformationen Informationen sind, die auf der zweiten Ressource übertragen werden, und die ersten Steuerinformationen Angabeinformationen der reservierten Ressource umfassen.

3. Verfahren (200, 600, 700) nach Anspruch 1 oder 2, wobei die Bestätigungsrückmeldungsnachricht für Daten (1-4), die auf einer dritten Ressource übertragen werden, zurückgemeldet wird, die erste Ressourcenteilmenge ferner eine reservierte Ressource umfasst, die basierend auf zweiten Steuerinformationen bestimmt wird, die zweiten Steuerinformationen Informationen sind, die auf der dritten Ressource übertragen werden, und die zweiten Steuerinformationen Angabeinformationen der reservierten Ressource umfassen.

4. Verfahren (200, 600, 700) nach einem der Ansprüche 1 bis 3, wobei die erste Ressourcenteilmenge ferner eine Ressource umfasst, die in dem voreingestellten Zeitraum liegt und die aus der ersten Ressourcenmenge basierend auf der voreingestellten Periode bestimmt wird, wenn das erste Endgerät in dem Zeitfenster eine negative Bestätigungsrückmeldungsnachricht außerhalb einer Kommunikationsdistanz empfängt.

5. Kommunikationssystem (100), das mindestens eine Netzwerkvorrichtung (110) und mindestens zwei Endgeräte (121-124) umfasst, die konfiguriert sind, um die Schritte der Verfahren (200, 600, 700) nach einem oder mehreren der Ansprüche 1 bis 4 zu implementieren.

## Revendications

1. Procédé de transmission de liaison latérale (200, 600, 700), comprenant :
la réception, par un premier dispositif terminal (121 à 124), d'un message de renvoi (1 à 4) en provenance d'un second dispositif terminal (121 à 124), dans lequel le message de renvoi (1 à 4) indique si des données (1 à 4) envoyées par le premier dispositif terminal (121 à 124) ont été décodées avec succès ;
la détermination, par le premier dispositif terminal (121 à 124), d'au moins deux sous-ensembles de ressources d'un premier ensemble de ressources dans une première période prédéfinie sur la base du message de renvoi (1 à 4), dans lequel chacun des au moins deux sous-ensembles de ressources correspond à une probabilité de sélection, un sous-ensemble de ressources avec une probabilité de sélection élevée est de préférence utilisé par le premier dispositif terminal (121 à 124) pour réaliser une transmission de liaison latérale par rapport à un sous-ensemble de ressources avec une probabilité de sélection faible, et le premier ensemble de ressources comprend une ressource qui peut être utilisée par le premier dispositif terminal (121 à 124) pour réaliser une transmission de liaison latérale ; et **caractérisé par**
la détermination, par le premier dispositif terminal (121 à 124), sur la base d'une probabilité de sélection d'au moins l'un parmi les au moins deux sous-ensembles de ressources, d'une ressource utilisée pour une transmission de liaison latérale à partir de ressources dans le premier ensemble de ressources au cours de la première période prédéfinie ;
dans lequel les au moins deux sous-ensembles de ressources comprennent au moins deux parmi un premier sous-ensemble de ressources, un deuxième sous-ensemble de ressources, un troisième sous-ensemble de ressources et un quatrième sous-ensemble de ressources, une probabilité de sélection du premier sous-ensemble de ressources est supérieure à une probabilité de sélection du deuxième sous-ensemble de ressources, la probabilité de sélection du deuxième sous-ensemble de ressources est supérieure à une probabilité de sélection du troisième sous-ensemble de ressources, et la probabilité de sélection du troisième sous-ensemble de ressources est supérieure à une probabilité de sélection du quatrième sous-ensemble de ressources ; et
le premier sous-ensemble de ressources comprend une ressource qui se trouve dans la première période prédéfinie et qui est déterminée à partir du premier ensemble de ressources sur la base d'une période de service (2P) du premier dispositif terminal lorsque le premier dispositif terminal reçoit le message de renvoi, qui est un message de renvoi d'accusé de réception, dans une fenêtre temporelle prédéfinie, dans lequel le message de renvoi d'accusé de réception indique que les données (1 à 4) envoyées par le premier dispositif terminal ont été décodées avec succès ; le quatrième sous-ensemble de ressources comprend une ressource qui se trouve dans la première période prédéfinie et qui est déterminée à partir du premier ensemble de ressources sur la base d'une période prédéfinie lorsque le premier dispositif terminal reçoit le message de renvoi, qui est un message de renvoi d'accusé de réception négatif, dans la fenêtre temporelle,
dans lequel le message de renvoi d'accusé de réception négatif indique que les données (1 à 4) envoyées par le premier dispositif terminal n'ont pas été décodées avec succès ; le troisième sous-ensemble de ressources comprend une ressource qui se trouve dans la première période prédéfinie et qui est déterminée à partir du premier ensemble de ressources sur la base de la période prédéfinie lorsque le premier dispositif terminal ne reçoit ni le message de renvoi d'accusé de réception ni le message de renvoi d'accusé de réception négatif pour des données (1 à 4) transmises sur une ressource dans la fenêtre temporelle ; et le deuxième sous-ensemble de ressources comprend une ressource autre qu'au moins l'un parmi le premier sous-ensemble de ressources, le troisième sous-ensemble de ressources et le quatrième sous-ensemble de ressources dans les ressources qui se trouvent dans le premier ensemble de ressources et qui se trouvent dans la première période prédéfinie.

2. Procédé (200, 600, 700) selon la revendication 1, dans lequel le message de renvoi d'accusé de réception négatif est renvoyé pour des données (1 à 4) transmises sur une deuxième ressource, le quatrième sous-ensemble de ressources comprend en outre une ressource réservée déterminée sur la base de premières informations de commande, les premières informations de commande sont des informations transmises sur la deuxième ressource, et les premières informations de commande comprennent des informations d'indication de la ressource réservée.

3. Procédé (200, 600, 700) selon la revendication 1 ou 2, dans lequel le message de renvoi d'accusé de réception est renvoyé pour des données (1 à 4) transmises sur une troisième ressource, le premier sous-ensemble de ressources comprend en outre une ressource réservée déterminée sur la base de secondes informations de commande, les secondes informations de commande sont des informations transmises sur la troisième ressource, et les secondes informations de commande comprennent des informations d'indication de la ressource réservée.

4. Procédé (200, 600, 700) selon l'une quelconque des revendications 1 à 3, dans lequel le premier sous-ensemble de ressources comprend en outre une ressource qui se trouve dans la période prédéfinie et qui est déterminée à partir du premier ensemble de ressources sur la base de la période prédéfinie lorsque le premier dispositif terminal reçoit, dans la fenêtre temporelle, un message de renvoi d'accusé de réception négatif en dehors d'une distance de communication.

5. Système de communication (100), comprenant au moins un dispositif de réseau (110) et au moins deux dispositifs terminaux (121 à 124) configurés pour mettre en œuvre les étapes des procédés (200, 600, 700) selon une ou plusieurs quelconques de revendications 1 à 4.
